(19)

Europäisches
Patentamt
European
Patent Office
Office européen
des brevets

(11)  EP 4 507 221 A1

(12)  EUROPEAN PATENT APPLICATION
published in accordance with Art. 153(4) EPC

(43) Date of publication:
12.02.2025 Bulletin 2025/07

(21) Application number: 23795069.6

(22) Date of filing: 14.04.2023

(51) International Patent Classification (IPC):
H04J 3/16 (2006.01)

(52) Cooperative Patent Classification (CPC):
H04J 3/06; H04J 3/16

(86) International application number:
PCT/CN2023/088463

(87) International publication number:
WO 2023/207636 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.04.2022 CN 202210435589

(71) Applicant: Huawei Technologies Co., Ltd.
Shenzhen, Guangdong 518129 (CN)

(72) Inventors:
• QI, Yunlei
  Shenzhen, Guangdong 518129 (CN)
• LI, Rixin
  Shenzhen, Guangdong 518129 (CN)
• XU, Li
  Shenzhen, Guangdong 518129 (CN)
• CHEN, Yun
  Shenzhen, Guangdong 518129 (CN)
• WANG, Tie
  Shenzhen, Guangdong 518129 (CN)

(74) Representative: Gill Jennings & Every LLP
The Broadgate Tower
20 Primrose Street
London EC2A 2ES (GB)

(54)  **TIME DELAY COMPENSATION METHOD AND RELATED DEVICE**

(57)  Embodiments of this application disclose a delay compensation method. The method may be applied to a fine granularity service scenario, and includes: A first communication apparatus determines a first transmission delay, where the first transmission delay indicates a transmission delay of a fine granularity service in the first communication apparatus; and the first communication apparatus sends the first transmission delay to a second communication apparatus. According to the foregoing method, it is ensured that a service bit flow sent by a sink node meets a delay compensation requirement, to ensure that a network transmission delay from a source node to the sink node and a network transmission delay from the sink node to the source node in a fine granularity service network are equal or meet an expected error range, or that the network transmission delay from the source node to the sink node and the network transmission delay from the sink node to the source node are adjusted to an expected value, to meet a service requirement. For example, when the delay compensation method provided in embodiments of this application is applied to a power grid system, it can be ensured that information collection moments of any two terminal devices are consistent.

FIG. 9

EP 4 507 221 A1

## Description

This application claims priority to Chinese Patent Application No. 202210435589.2, filed with the China National Intellectual Property Administration on April 24, 2022 and entitled "DELAY COMPENSATION METHOD AND RELATED DEVICE", which is incorporated herein by reference in its entirety.

## TECHNICAL FIELD

This application relates to the field of communication technologies, and in particular, to a delay compensation method and a related device.

## BACKGROUND

A fine granularity technology is a finer-granularity circuit switching technology developed based on an international telecommunication union telecommunication standardization sector (ITU-T) metro transport network (metro transport network, MTN) standard. The fine granularity technology refines a hard-pipe granularity in an MTN from 5 gigabits per second (G-bits per-second, Gbps) to 10 megabits per second (megabits per second, Mbps), to meet differentiated service carrying requirements such as a small bandwidth, high isolation, and high security in 5th generation mobile communication technology+ (5th generation mobile communication technology+, 5G+) vertical industry applications, private line services, and other scenarios.

In the fine granularity technology, a fine granularity unit (fine granularity unit, FGU) carries a fine granularity service. In the fine granularity technology, a time division multiplexing (time-division multiplexing, TDM) mechanism is used to regularly and cyclically send FGU base frames. A quantity of slots and locations of the slots included in each frame are strictly fixed. Therefore, a transmission period in each slot is accordingly deterministic. To support more slot channels at a finer granularity and improve bandwidth utilization, the FGU solution uses a multiframe manner to perform slot division on a 5 Gbps granularity at an SPN channel layer. One multiframe includes 20 FGU base frames. Each FGU base frame supports 24 slots. The 5 Gbps granularity at the SPN channel layer supports 480 slots. Each FGU base frame consists of an overhead (overhead, OH), a payload (payload), and other structures.

A slicing packet network (slicing packet network, SPN) slice channel, which is a transmission path between source and sink nodes in an SPN network, provides an end-to-end ethernet slice connection in the network, and features a low delay, transparent transmission, hard isolation, and the like. A cross-connection technology based on an ethernet 66B block sequence, a metro transport network path (MTN Path) layer frame structure, and a metro transport network section (MTN Section) layer frame structure, and operation, administration and maintenance (operation administration and maintenance, OAM) overheads thereof are used. A client layer service is mapped to an MTN client at a source node, intermediate nodes of the network perform cross-connection based on the ethernet 66B block (66B block) sequence, and the client layer service is demapped from the MTN client at a destination node. This can implement functions such as access/restoration of client data, addition/deletion of OAM information, cross-connection of data flows, and monitoring and protection of channels.

In the SPN slice channel, a two-way service flow exists between the source node and the sink node. In embodiments of this application, a direction from the source node to the sink node is referred to as a first direction, and a direction from the sink node to the source node is referred to as a second direction. A procedure for processing a service bit flow in the first direction is independent of a procedure for processing a service bit flow in the second direction. Because processing delays of nodes in the SPN network may be different, delays of service bit flows in two directions may not keep consistent.

## SUMMARY

According to a first aspect, an embodiment of this application provides a delay compensation method, including:

A first communication apparatus determines a first transmission delay, where the first transmission delay indicates a transmission delay of a fine granularity service in the first communication apparatus; and
the first communication apparatus sends the first transmission delay to a second communication apparatus.

For example, the first communication apparatus is used in a source node. After the first communication apparatus receives a first service bit flow, the first communication apparatus processes the first service bit flow. First, the first communication apparatus performs slicing processing on the first service bit flow to obtain a service slice corresponding to the first service bit flow. The service slice is also referred to as a service slice corresponding to a first fine granularity service.

Then, the first communication apparatus encapsulates the service slice to obtain a service container. Specifically, one or more of the following information is added on the basis of the service slice: an expanded sequence (Expanded Sequence, ESQ) number, a frequency synchronization message (for example, a timestamp), a payload length, padding (padding), or a check field. The ESQ sequence number is for performing lossless protection or loss detection on the service slice. The frequency synchronization message is for transferring service-related clock information. When a length of the service slice is less than a length of a lower-order slot payload, a payload length or padding needs to be encapsulated, where the payload length or the padding identifies a valid payload length. The check field is for performing bit error check on the service slice.

After adding an overhead to the service slice, the first communication apparatus further encapsulates the service slice to which the overhead is added, to obtain the service container. Specifically, frame boundary and frame interval encapsulations are added to the service slice to which the overhead is added, to obtain the service container.

Then, the first communication apparatus converts the service container into a 64B/66B block flow, to be specific, maps the service container to a corresponding block I, block S, block T, and block D.

Then, the first communication apparatus inserts an operation, administration and maintenance (operation, administration and maintenance, OAM) block into the block flow.

Then, the first communication apparatus maps the block flow into which the OAM block is inserted to an egress slot location of the first communication apparatus. Data that is of the block flow and that is mapped to the egress slot location is referred to as FGU slot data.

Finally, the first communication apparatus sends the FGU slot data at the egress slot location through an ethernet interface or a flexible ethernet client (flexible ethernet client, FlexE Client) interface.

In the foregoing procedure, the first communication apparatus determines the transmission delay of the fine granularity service in the first communication apparatus. For ease of description, in this embodiment of this application, the transmission delay of the fine granularity service in the first communication apparatus is referred to as the first transmission delay.

In this embodiment of this application, a transmission delay of the fine granularity service in each node is collected, and then an end-to-end delay compensation value is obtained through calculation based on an end-to-end target delay. In a sink node, a service slice corresponding to the fine granularity service is buffered. When residence time of the service slice reaches the end-to-end delay compensation value, the sink node extracts the service slice from a buffer, performs reassembly to obtain a service bit flow, and then sends the service bit flow. According to the foregoing method, end-to-end delay compensation is implemented, and it is ensured that the service bit flow sent by the sink node meets a delay compensation requirement, to ensure that a network transmission delay from the source node to the sink node and a network transmission delay from the sink node to the source node in a fine granularity service network are equal or meet an expected error range, or that the network transmission delay from the source node to the sink node and the network transmission delay from the sink node to the source node are adjusted to an expected value, to meet a service requirement. For example, when the delay compensation method provided in embodiments of this application is applied to a power grid system, it can be ensured that information collection moments of any two terminal devices are consistent, thereby improving accuracy of performing a relay protection service by a power system. A terminal device in the power grid system includes but is not limited to a relay protection apparatus, a power management unit, a data transmission unit, a meter, a switch, a power generation apparatus, a power transformation apparatus, or the like. Information collected by each terminal device in the power grid system includes but is not limited to: a voltage, a current, or a voltage frequency.

In a possible implementation of the first aspect, that a first communication apparatus determines a transmission delay of a fine granularity service in the first communication apparatus includes:

The first communication apparatus obtains the transmission delay of the fine granularity service in the first communication apparatus through calculation in the following manner, including:

$$\mathrm{Node_{delay}} = T2 - T1.$$

$\mathrm{Node_{delay}}$ is the transmission delay of the fine granularity service in the first communication apparatus, T1 is a first moment, the first moment is a moment at which the first communication apparatus receives the fine granularity service, T2 is a second moment, and the second moment is a moment at which the first communication apparatus sends the fine granularity service.

T1 is the first moment, and the first moment is the moment at which the first communication apparatus receives the fine granularity service.

Optionally, T1 is a moment at which the first communication apparatus receives a specific bit in a service bit flow that carries the fine granularity service. For example, the 1st bit in the service bit flow is selected as the specific bit. When the first communication apparatus receives the 1st bit in the service bit flow, the first communication apparatus records a receiving moment at which the 1st bit is received. The receiving moment of the 1st bit is used as T1. The specific bit may be selected according to an actual situation. For example, the specific bit may be the 1st bit, the 100th bit, the 200th bit, the 500th bit, and/or the 1000th bit of the service bit flow.

Optionally, the first communication apparatus periodically records a receiving moment based on a bit quantity of the received service bit flow, and the receiving moment is used as T1. For example, each time the first communication apparatus receives 1000 bits, the first communication apparatus records a receiving moment (for example, a receiving moment of the 1001st bit), and the receiving moment is used as T1.

Optionally, when the first communication apparatus receives the service bit flow, a receiving moment is recorded at an interval of one or more bits. Then, a receiving moment is periodically selected as T1. For example, each time the first communication apparatus receives one bit, the first communication apparatus records a receiving moment. The first communication apparatus determines a moment at an interval of 1000 receiving moments as T1.

Optionally, T1 is a moment at which the first communication apparatus receives the FGU slot data at an ingress slot location. For example, T1 is a moment at which the first communication apparatus receives the 1st piece of FGU slot data. It may be understood that the first communication apparatus may alternatively select a receiving moment of another piece of FGU slot data as T1. For example, T1 is a moment at which the first communication apparatus receives the 10th piece of FGU slot data of the fine granularity service, T1 is a moment at which the first communication apparatus receives the 50th piece of FGU slot data of the fine granularity service, or T1 is a moment at which the first communication apparatus receives the 100th piece of FGU slot data of the fine granularity service. This is not limited herein.

Optionally, the first communication apparatus periodically records a receiving moment based on a slot quantity of pieces of received FGU slot data, and the receiving moment is used as T1. For example, each time the first communication apparatus receives 1000 pieces of FGU slot data, the first communication apparatus records a receiving moment (for example, a receiving moment of the 1001st piece of FGU slot data), and the receiving moment is used as T1.

In a possible implementation of the first aspect, the second moment is a moment at which the first communication apparatus sends fine granularity unit FGU slot data, and the FGU slot data carries the specific bit in the service bit flow of the fine granularity service.

T2 is the second moment. Optionally, T2 is a moment at which the first communication apparatus sends the FGU slot data at the egress slot location. For example, T2 is a moment at which the first communication apparatus sends the 1st piece of FGU slot data, or T2 is a moment at which the first communication apparatus sends the 50th piece of FGU slot data. This is not limited herein.

Optionally, T2 is a moment at which the first communication apparatus maps the service container including the specific bit to the egress slot location.

Optionally, T2 is a moment at which the first communication apparatus sends the FGU slot data that carries the specific bit in the service bit flow, and the service bit flow carries the fine granularity service. For example, T1 is the moment at which the first communication apparatus receives the specific bit in the service bit flow, and T2 is the moment at which the first communication apparatus sends the FGU slot data that carries the specific bit.

Optionally, the first communication apparatus periodically records a sending moment based on a quantity of pieces of FGU slot data, and the sending moment is used as T2. For example, each time the first communication apparatus sends 1000 pieces of FGU slot data, the first communication apparatus records a sending moment (for example, a sending moment of the 1001st piece of FGU slot data), and the sending moment is used as T2.

Optionally, when sending the FGU slot data, the first communication apparatus records a sending moment each time one or more pieces of FGU slot data are sent. Then, a sending moment is periodically selected as T2. For example, each time the first communication apparatus sends one piece of FGU slot data, the first communication apparatus records a sending moment. The first communication apparatus determines a moment at an interval of 1000 sending moments as T2.

Optionally, T2 is a moment at which the first communication apparatus sends the 1st egress slot location of the fine granularity service, that is, a moment at which the first communication apparatus sends the 1st egress slot location that carries the fine granularity service, or a moment at which the first communication apparatus sends the 1st piece of FGU slot data. It may be understood that the first communication apparatus may alternatively select a sending moment of another egress slot location as T2. For example, T2 is a moment at which the first communication apparatus sends the 10th egress slot location of the fine granularity service, T2 is a moment at which the first communication apparatus sends the 50th egress slot location of the fine granularity service, or T2 is a moment at which the first communication apparatus sends the 100th egress slot location of the fine granularity service. This is not limited herein.

Optionally, the first communication apparatus periodically records a sending moment based on a slot quantity of sent egress slot locations (FGU slots), and the sending moment is used as T2. For example, each time the first communication apparatus sends 1000 egress slot locations (FGU slots), the first communication apparatus records a sending moment (for example, a sending moment of the 1001st piece of FGU slot data), and the sending moment is used as T2.

In a possible implementation of the first aspect, the fine granularity service is a constant bit rate CBR service.

In a possible implementation of the first aspect, the first communication apparatus is used in an intermediate node, and the method further includes:

The first communication apparatus receives a second transmission delay from a previous-hop node, where the second transmission delay indicates a transmission delay of the fine granularity service from a source node to the previous-hop node; and

the first communication apparatus sends the first transmission delay and the second transmission delay to a next-hop node.

In a possible implementation of the first aspect, the second transmission delay includes a transmission delay corresponding to each node that the fine granularity service passes through when being transmitted from the source node to the previous-hop node; or

the second transmission delay includes a sum of transmission delays corresponding to all nodes that the fine granularity service passes through when being transmitted from the source node to the previous-hop node.

In a possible implementation of the first aspect, that the first communication apparatus sends the first transmission delay to a second communication apparatus includes:

The first communication apparatus receives a delay collection message from the previous-hop node, where the delay collection message includes the second transmission delay;

the first communication apparatus updates the delay collection message, where an updated delay collection message includes the first transmission delay and the second transmission delay; and

the first communication apparatus sends the updated delay collection message to the second communication apparatus.

Optionally, the first communication apparatus sends the first transmission delay to the second communication apparatus by using the delay collection message. After receiving the delay collection information from the previous-hop node, the first communication apparatus adds, to the delay collection message, the first transmission delay obtained through measurement by the first communication apparatus. When an upstream of the first communication apparatus further includes another node, the first communication apparatus receives the delay collection message from the previous-hop node, where the delay collection message includes the second transmission delay. Then, the first communication apparatus updates the delay collection message, where the updated delay collection message includes the first transmission delay and the second transmission delay. The first communication apparatus sends the updated delay collection message to the second communication apparatus (or another downstream node).

For example, the delay collection message has a plurality of possible implementations, including but not limited to a message (message), a packet, a newly added field of a packet header, bit information (including a plurality of bits), type length value (type length value, TLV) information, or the like.

In a possible implementation of the first aspect, the delay collection message further includes path information.

The first communication apparatus determines, based on an indication of the path information, the second communication apparatus that receives the delay collection message.

Optionally, the delay collection message further includes the path information, where the path information indicates a transmission path of the delay collection message. The path information includes forwarding information of one or more nodes. For example, the forwarding information includes but is not limited to: a port number of the previous-hop node and/or the next-hop node, a media access control (Media Access Control, MAC) address of the previous-hop node and/or the next-hop node, an internet protocol (Internet Protocol, IP) address of the previous-hop node and/or the next-hop node, a fine granularity channel (channel) number of the previous-hop node and/or the next-hop node, or the like.

A node indicated by the path information needs to add a first transmission delay of the node to the delay collection message. The first communication apparatus determines a destination node (that is, the next-hop node that receives the delay collection message) based on the path information. Then, the first communication apparatus sends the delay collection message to the destination node, where the delay collection message carries the first transmission delay of the first communication apparatus. After the destination node receives the delay collection message, the destination node adds a first transmission delay of the destination node to the delay collection message. The destination node determines, based on the indication of the path information, a next-hop node that receives the updated delay collection message. Then, the destination node sends the updated delay collection message to the next-hop node.

Optionally, for the first communication apparatus that receives the delay collection message, whether to process the delay collection message is determined by detecting whether address information of the first communication apparatus matches address information included in the path information. If the address information matches, the first communication apparatus adds the first transmission delay of the first communication apparatus to the delay collection message; or if the address information does not match, the first communication apparatus directly forwards the delay collection message, the first communication apparatus discards the delay collection message, or the first communication apparatus determines the next-hop node based on the indication of the path information, and then the first communication apparatus forwards the delay collection message to the next-hop node.

In a possible implementation of the first aspect, the second communication apparatus is used in a sink node or a network management device.

According to a second aspect, an embodiment of this application provides a delay compensation method. The method is applied to a second communication apparatus, and the method includes:

The second communication apparatus obtains a first transmission delay, where the first transmission delay indicates a transmission delay of a fine granularity service in a first communication apparatus;

the second communication apparatus obtains a transmission delay of the fine granularity service in a sink node; and
the second communication apparatus determines a delay compensation value based on an end-to-end target delay, a first transmission delay of first n hops of first communication apparatuses, and the transmission delay of the fine granularity service in the sink node, where the delay compensation value is for performing delay compensation on the fine granularity service in the sink node, and n is a positive integer.

In this embodiment of this application, a transmission delay of the fine granularity service in each node is collected, and then an end-to-end delay compensation value is obtained through calculation based on an end-to-end target delay. In a sink node, a service slice corresponding to the fine granularity service is buffered. When residence time of the service slice reaches the end-to-end delay compensation value, the sink node extracts the service slice from a buffer, performs reassembly to obtain a service bit flow, and then sends the service bit flow. According to the foregoing method, end-to-end delay compensation is implemented, and it is ensured that the service bit flow sent by the sink node meets a delay compensation requirement, to ensure that a network transmission delay from the source node to the sink node and a network transmission delay from the sink node to the source node in a fine granularity service network are equal or meet an expected error range, or that the network transmission delay from the source node to the sink node and the network transmission delay from the sink node to the source node are adjusted to an expected value, to meet a service requirement. For example, when the delay compensation method provided in embodiments of this application is applied to a power grid system, it can be ensured that information collection moments of any two terminal devices are consistent, thereby improving accuracy of performing a relay protection service by a power system. A terminal device in the power grid system includes but is not limited to a relay protection apparatus, a power management unit, a data transmission unit, a meter, a switch, a power generation apparatus, a power transformation apparatus, or the like. Information collected by each terminal device in the power grid system includes but is not limited to: a voltage, a current, or a voltage frequency.

In a possible implementation of the second aspect, the end-to-end target delay is greater than or equal to a larger one of the following two transmission delay values: a service transmission delay value in a first direction or a service transmission delay value in a second direction, where

the first direction is from a source node to the sink node; and
the second direction is from the sink node to the source node.

Specifically, the second communication apparatus obtains the end-to-end target delay, where the end-to-end target delay is greater than or equal to the larger one of the following two transmission delay values: the service transmission delay value in the first direction or the service transmission delay value in the second direction, where the first direction is from the source node to the sink node, and the second direction is from the sink node to the source node.

The end-to-end target delay may be preconfigured in the second communication apparatus, or may be obtained through calculation based on the transmission delay value in the first direction and the transmission delay value in the second direction that are actually obtained through measurement. This is not limited herein. For example, if the transmission delay value in the first direction is 500 milliseconds, and the transmission delay value in the second direction is 450 milliseconds, the end-to-end target delay is set to 500 milliseconds.

In a possible implementation of the second aspect, the second communication apparatus is used in the sink node, and the method further includes:

The second communication apparatus performs delay compensation on the fine granularity service based on the delay compensation value.

In a possible implementation of the second aspect, the determining, by the second communication apparatus, a delay compensation value based on an end-to-end target delay, a first transmission delay of first n hops of first communication apparatuses, and the transmission delay of the fine granularity service in the sink node includes:

The second communication apparatus obtains the delay compensation value through calculation in the following manner, including:

$$\Delta = \text{Target}_{delay1} - \sum_{i=1}^{n} \text{Node}_{delay}i - \text{Node}'_{delay}.$$

$\Delta$ is the delay compensation value, $\text{Target}_{delay1}$ is the end-to-end target delay, $\sum_{i=1}^{n} \text{Node}_{delay}i$ is the first transmission delay of the first n hops of first communication apparatuses, the first communication apparatus is used in the source node or an intermediate node, n is a quantity of nodes of the source node and the intermediate node, and $\text{Node}'_{delay}$ is the transmission delay of the fine granularity service in the sink node.

In a possible implementation of the second aspect, the second communication apparatus is used in the sink node.

That the second communication apparatus obtains a transmission delay of the fine granularity service in a sink node includes:

The second communication apparatus obtains the transmission delay of the fine granularity service in the sink node through calculation in the following manner, including:

$$\text{Node}'_{delay} = T4 - T3.$$

$\text{Node}'_{delay}$ is the transmission delay of the fine granularity service in the sink node, T3 is a third moment, the third moment is a moment at which the sink node receives fine granularity unit FGU slot data, the FGU slot data carries a specific bit in a service bit flow of the fine granularity service, T4 is a fourth moment, and the fourth moment is a moment at which the sink node decapsulates a service container obtained by demapping the FGU slot data.

In a possible implementation of the second aspect, the second communication apparatus is used in the sink node.

That the second communication apparatus performs delay compensation on the fine granularity service based on the delay compensation value includes:

The second communication apparatus demaps the FGU slot data to obtain the service container;
the second communication apparatus decapsulates the service container to obtain a service slice;
the second communication apparatus stores the service slice in a memory;
when residence time of the service slice in the memory reaches the delay compensation value, the second communication apparatus extracts the service slice from the memory;
the second communication apparatus reassembles the service bit flow based on a plurality of service slices; and
the second communication apparatus sends the service bit flow.

Specifically, after the second communication apparatus (the sink node) receives the FGU slot data at an ingress slot location, the second communication apparatus demaps the FGU slot data to obtain the service container, where the service container carries the service bit flow of the fine granularity service; then the second communication apparatus decapsulates the service container to obtain the service slice, where the service slice carries the fine granularity service; the second communication apparatus stores the service slice in the memory. When the residence time of the service slice in the memory reaches the delay compensation value, the second communication apparatus extracts the service slice from the memory; the second communication apparatus reassembles the service bit flow based on the plurality of service slices; and the second communication apparatus sends the service bit flow.

Specifically, the second communication apparatus stores the obtained service slice in the memory. The memory may be a memory located in the second communication apparatus, or the memory may be a memory independent of the second communication apparatus. This is not limited herein. After the second communication apparatus stores the service slice in the memory, the second communication apparatus starts a timer. When time of the timer reaches the delay compensation value, it means that the residence time of the service slice in the memory reaches the delay compensation value. The second communication apparatus extracts the service slice from the memory, and then performs service reassembling based on the plurality of service slices, to obtain the corresponding service bit flow. The second communication apparatus sends the service bit flow over a physical interface, to implement delay compensation on the fine granularity service.

In a possible implementation of the second aspect, the second communication apparatus is used in a network management device.

That the second communication apparatus obtains a transmission delay of the fine granularity service in a sink node includes:

The second communication apparatus receives, from the sink node, the transmission delay of the fine granularity service in the sink node.

According to the foregoing method, it is ensured that the service bit flow sent by the sink node meets a delay compensation requirement, to ensure that a network transmission delay from the source node to the sink node and a network transmission delay from the sink node to the source node in a fine granularity service network are equal or meet an expected error range, or that the network transmission delay from the source node to the sink node and the network transmission delay from the sink node to the source node are adjusted to an expected value, to meet a service requirement.

In a possible implementation of the second aspect, the second communication apparatus is used in the network management device.

After the second communication apparatus determines the delay compensation value based on the end-to-end target delay, the first transmission delay, and the transmission delay of the fine granularity service in the sink node, the method further includes:

The second communication apparatus sends the delay compensation value to the sink node.

According to a third aspect, an embodiment of this application provides a delay compensation method, including:

A communication apparatus determines a transmission delay of a fine granularity service in the communication apparatus; and

the communication apparatus performs delay compensation on the fine granularity service based on a target delay of a node and the transmission delay of the fine granularity service in the communication apparatus.

In this embodiment of this application, it is ensured that a service bit flow sent by each node meets a delay compensation requirement, to ensure that a network transmission delay from the source node to the sink node and a network transmission delay from the sink node to the source node in a fine granularity service network are equal or meet an expected error range, or that the network transmission delay from the source node to the sink node and the network transmission delay from the sink node to the source node are adjusted to an expected value, to meet a service requirement.

In a possible implementation of the third aspect, the target delay of the node includes: a target delay of a source node, a target delay of an intermediate node, and/or a target delay of a sink node.

Specifically, the target delay of the node includes: the target delay of the source node, the target delay of the intermediate node, and/or the target delay of the sink node.

Optionally, the target delay of the source node, the target delay of the intermediate node, and the target delay of the sink node meet the following condition: A sum of the target delay of the source node, the target delay of the intermediate node, and the target delay of the sink node is greater than or equal to a larger one of the following two transmission delay values: a service transmission delay value in a first direction or a service transmission delay value in a second direction, where the first direction is from the source node to the sink node, and the second direction is from the sink node to the source node. The service transmission delay value may be a transmission delay value, for a plurality of communication apparatuses between the source node and the sink node, of a service bit flow that carries the fine granularity service.

Optionally, a network management device configures a corresponding target delay for each node. The target delay of the source node may range from 0 to 100 microseconds; the target delay of the intermediate node may range from 10 to 20 microseconds; and the target delay of the sink node may range from 100 to 500 microseconds.

In a possible implementation of the third aspect, the communication apparatus is used in the source node.

That a communication apparatus determines a transmission delay of a fine granularity service in the communication apparatus includes:

The communication apparatus obtains a first receiving moment, where the first receiving moment is a moment at which the source node receives a specific bit in a service bit flow that carries the fine granularity service;

the communication apparatus obtains a second sending moment, where the second sending moment is a moment at which the source node sends fine granularity unit FGU slot data, and the FGU slot data carries the specific bit in the service bit flow of the fine granularity service; and

the communication apparatus subtracts the first receiving moment from the second sending moment, to obtain a transmission delay of the fine granularity service in the source node.

A possible manner in which the communication apparatus obtains the first receiving moment is similar to the foregoing manner in which the source node obtains the first moment in the first aspect, and details are not described herein. A possible manner in which the communication apparatus obtains the second sending moment is similar to the foregoing manner in which the source node obtains the second moment in the first aspect, and details are not described herein again.

In a possible implementation of the third aspect, when the communication apparatus is used in the intermediate node:

That a communication apparatus determines a transmission delay of a fine granularity service in the communication apparatus includes:

The communication apparatus obtains a third receiving moment, where the third receiving moment is a moment at which the intermediate node receives the fine granularity unit FGU slot data at an ingress slot location, and the FGU slot data carries the specific bit in the service bit flow of the fine granularity service;

the communication apparatus obtains a fourth sending moment, where the fourth sending moment is a moment at which the intermediate node sends the FGU slot data; and

the communication apparatus subtracts the third receiving moment from the fourth sending moment, to obtain a transmission delay of the fine granularity service in the intermediate node.

Specifically, when the communication apparatus is used in the intermediate node, the communication apparatus obtains the third receiving moment, where the third receiving moment is the moment at which the intermediate node receives the FGU slot data, and the FGU slot data carries the specific bit in the service bit flow of the fine granularity service; the communication apparatus obtains the fourth sending moment, where the fourth sending moment is the moment at which the intermediate node sends the FGU slot data, and the service bit flow carries the fine granularity service; and the communication apparatus subtracts the third receiving moment from the fourth sending moment, to obtain the transmission delay of the fine granularity service in the intermediate node.

Specifically, the communication apparatus receives the FGU slot data at the ingress slot location. Then, the communication apparatus maps the FGU slot data received at the ingress slot location to an egress slot location based on an indication of a slot cross-mapping table. Finally, the communication apparatus sends the FGU slot data at the egress slot location through a physical interface.

A possible manner in which the communication apparatus obtains the third receiving moment is similar to the foregoing manner in which the intermediate node obtains the first moment in the first aspect, and details are not described herein again. A possible manner in which the communication apparatus obtains the fourth sending moment is similar to the foregoing manner in which the intermediate node obtains the second moment in the first aspect, and details are not described herein again.

In a possible implementation of the third aspect, when the communication apparatus is used in the sink node: That a communication apparatus determines a transmission delay of a fine granularity service in the communication apparatus includes:

The communication apparatus obtains a fifth receiving moment, where the fifth receiving moment is a moment at which the sink node receives the fine granularity unit FGU slot data, and the FGU slot data carries the specific bit in the service bit flow of the fine granularity service;

the communication apparatus obtains a sixth sending moment, where the sixth sending moment is a moment at which the sink node decapsulates a service container, the service container is obtained by the communication apparatus by demapping the FGU slot data, and the service container carries the specific bit in the service bit flow of the fine granularity service; and

the communication apparatus subtracts the fifth receiving moment from the sixth sending moment, to obtain a transmission delay of the fine granularity service in the sink node.

A possible manner in which the communication apparatus obtains the fifth receiving moment is similar to the foregoing manner in which the sink node obtains the third moment in the second aspect, and details are not described herein again. A possible manner in which the communication apparatus obtains the sixth sending moment is similar to the foregoing manner in which the intermediate node obtains the fourth moment in the second aspect, and details are not described herein again.

In a possible implementation of the third aspect, that the communication apparatus performs delay compensation on the fine granularity service based on a target delay of a node and the transmission delay of the fine granularity service in the communication apparatus includes:

The communication apparatus determines a delay compensation value based on the target delay of the node and the transmission delay of the fine granularity service in the communication apparatus; and

the communication apparatus performs delay compensation on the fine granularity service based on the delay compensation value.

In this embodiment, after the communication apparatus obtains the transmission delay of the fine granularity service in the communication apparatus, the communication apparatus calculates the delay compensation value of the node based on the target delay of the node and the transmission delay. Then, the communication apparatus performs delay compensation on the fine granularity service in the communication apparatus (a node corresponding to the communication apparatus) based on the delay compensation value of the node, to implement node-by-node delay compensation.

In a possible implementation of the third aspect, when the communication apparatus is used in the source node: That the communication apparatus performs delay compensation on the fine granularity service based on the delay compensation value includes:

> The communication apparatus stores the FGU slot data in a memory, where the FGU slot data carries the service bit flow of the fine granularity service;
> when residence time of the FGU slot data in the memory reaches the delay compensation value, the communication apparatus extracts the FGU slot data from the memory; and
> the communication apparatus sends the FGU slot data.

Specifically, when the communication apparatus is used in the source node, that the source node performs delay compensation on the fine granularity service based on the delay compensation value includes: After the source node receives the service bit flow, the source node processes the service bit flow and maps the service bit flow to the egress slot location, including: The service bit flow is sliced to obtain a plurality of service slices. Then the service slice is encapsulated to obtain a service container. The service container is mapped to the egress slot location. Specifically, the source node maps the service container to a block flow. Then, the block flow is segmented to obtain an FGU slot data. The source node stores the FGU slot data in the memory, where the FGU slot data carries the service bit flow of the fine granularity service. When the residence time of the FGU slot data of the source node in the memory reaches the delay compensation value, the source node extracts the FGU slot data of the source node from the memory. The source node sends the FGU slot data of the source node at the egress slot location.

In a possible implementation of the third aspect, when the communication apparatus is used in the intermediate node:
That the communication apparatus performs delay compensation on the fine granularity service based on the delay compensation value includes:

> the communication apparatus cross-maps the ingress slot location of the intermediate node to an egress slot location of the intermediate node;
> the communication apparatus stores, in a memory, the FGU slot data received at the ingress slot location of the intermediate node;
> when residence time of the FGU slot data in the memory reaches the delay compensation value, the communication apparatus extracts the FGU slot data from the memory; and
> the communication apparatus sends the FGU slot data at the egress slot location of the intermediate node.

Specifically, when the communication apparatus is used in the intermediate node, that the intermediate node performs delay compensation on the fine granularity service based on the delay compensation value includes: The intermediate node receives the FGU slot data at the ingress slot location, where the FGU slot data carries the service bit flow of the fine granularity service; the intermediate node cross-maps the ingress slot location of the intermediate node to the egress slot location of the intermediate node; the intermediate node stores the FGU slot data in the memory; when the residence time of the FGU slot data in the memory reaches the delay compensation value, the intermediate node extracts the FGU slot data from the memory; and the intermediate node sends the FGU slot data at the egress slot location of the intermediate node.

In a possible implementation of the third aspect, when the communication apparatus is used in the sink node:
That the communication apparatus performs delay compensation on the fine granularity service based on the delay compensation value includes:

> The communication apparatus demaps the FGU slot data to obtain the service container;
> the communication apparatus decapsulates the service container to obtain a service slice;
> the communication apparatus stores the service slice in a memory;
> when residence time of the service slice in the memory reaches the delay compensation value, the communication apparatus extracts the service slice from the memory;
> the communication apparatus reassembles the service bit flow based on a plurality of service slices; and
> the communication apparatus sends the service bit flow. Specifically, when the communication apparatus is used in the sink node, that the sink node performs delay compensation on the fine granularity service based on the delay compensation value includes: The sink node demaps the FGU slot data to obtain the service container, where the service container carries the service bit flow of the fine granularity service; the sink node decapsulates the service container to obtain the service slice, where the service slice carries the service bit flow of the fine granularity; the sink node stores the service slice in the memory; when the residence time of the service slice in the memory reaches the delay compensation value, the sink node extracts the service slice from the memory; the sink node reassembles the service bit flow based on the plurality of service slices; and the sink node sends the service bit flow.

In a possible implementation of the third aspect, the fine granularity service carries a constant bit rate CBR service.

According to a fourth aspect, an embodiment of this application provides a communication apparatus, where the communication apparatus is used as a first communication apparatus, and the communication apparatus includes:

a transceiver module, configured to perform a receiving- and/or sending-related operation performed by the first communication apparatus according to the first aspect; and
a processing module, configured to perform an operation other than the receiving and/or sending-related operation performed by the first communication apparatus in the first aspect.

It should be noted that the communication apparatus mentioned in embodiments of this application may be, for example, a network device such as a switch or a router, may be some components of a network device, for example, a board or a line card of the network device, may be a functional module of the network device, or may be a chip configured to implement the methods in this application. This is not specifically limited in embodiments of this application. When the communication apparatus is a chip, the transceiver module configured to implement the method may be, for example, an interface circuit of the chip, and the processing module may be a processing circuit having a processing function in the chip. Communication apparatuses may be directly connected, for example, but not limited to, by using an ethernet cable or an optical cable.

For example, the communication apparatus includes:

a processing module, configured to determine a first transmission delay, where the first transmission delay indicates a transmission delay of a fine granularity service in the first communication apparatus; and
a transceiver module, configured to send the first transmission delay to a second communication apparatus.

In a possible implementation, the processing module is specifically configured to obtain the transmission delay of the fine granularity service in the first communication apparatus through calculation in the following manner, including:

$$\mathrm{Node}_{\mathrm{delay}} = \mathrm{T2} - \mathrm{T1}.$$

$\mathrm{Node}_{\mathrm{delay}}$ is the transmission delay of the fine granularity service in the first communication apparatus, T1 is a first moment, the first moment is a moment at which the first communication apparatus receives the fine granularity service, T2 is a second moment, and the second moment is a moment at which the first communication apparatus sends the fine granularity service.

In a possible implementation, the first moment is a moment at which the first communication apparatus receives a specific bit in a service bit flow that carries the fine granularity service.

In a possible implementation, the second moment is a moment at which the first communication apparatus sends fine granularity unit FGU slot data, and the FGU slot data carries the specific bit in the service bit flow of the fine granularity service.

In a possible implementation, the fine granularity service is a constant bit rate CBR service.

In a possible implementation, the transceiver module is further configured to receive a second transmission delay from a previous-hop node, where the second transmission delay indicates a transmission delay of the fine granularity service from a source node to the previous-hop node; and
the transceiver module is further configured to send the first transmission delay and the second transmission delay to a next-hop node.

In a possible implementation, the second transmission delay includes a transmission delay corresponding to each node that the fine granularity service passes through when being transmitted from the source node to the previous-hop node; or
the second transmission delay includes a sum of transmission delays corresponding to all nodes that the fine granularity service passes through when being transmitted from the source node to the previous-hop node.

In a possible implementation, the transceiver module is further configured to receive a delay collection message from the previous-hop node, where the delay collection message includes the second transmission delay.

The processing module is further configured to update the delay collection message, where an updated delay collection message includes the first transmission delay and the second transmission delay.

The transceiver module is further configured to send the updated delay collection message to the second communication apparatus.

In a possible implementation, the delay collection message further includes path information.

The processing module is further configured to determine, based on an indication of the path information, the second communication apparatus that receives the delay collection message.

In a possible implementation, the second communication apparatus is used in a sink node or a network management device.

According to a fifth aspect, an embodiment of this application provides a communication apparatus, where the communication apparatus is used as a second communication apparatus, and the communication apparatus includes:

a transceiver module, configured to perform a receiving- and/or sending-related operation performed by the second communication apparatus according to the second aspect; and

a processing module, configured to perform an operation other than the receiving and/or sending-related operation performed by the second communication apparatus in the second aspect.

It should be noted that the communication apparatus mentioned in embodiments of this application may be, for example, a network device such as a switch or a router, may be some components of a network device, for example, a board or a line card of the network device, may be a functional module of the network device, or may be a chip configured to implement the methods in this application. This is not specifically limited in embodiments of this application. When the communication apparatus is a chip, the transceiver module configured to implement the method may be, for example, an interface circuit of the chip, and the processing module may be a processing circuit having a processing function in the chip. Communication apparatuses may be directly connected, for example, but not limited to, by using an ethernet cable or an optical cable.

For example, the communication apparatus includes: a transceiver module, configured to obtain a first transmission delay, where the first transmission delay indicates a transmission delay of a fine granularity service in a first communication apparatus; and

the transceiver module is further configured to obtain a transmission delay of the fine granularity service in a sink node; and

a processing module, configured to determine a delay compensation value based on an end-to-end target delay, a first transmission delay of first n hops of first communication apparatuses, and the transmission delay of the fine granularity service in the sink node, where the delay compensation value is for performing delay compensation on the fine granularity service in the sink node, and n is a positive integer.

In a possible implementation, the end-to-end target delay is greater than or equal to a larger one of the following two transmission delay values:

a service transmission delay value in a first direction or a service transmission delay value in a second direction, where the first direction is from a source node to the sink node; and

the second direction is from the sink node to the source node.

In a possible implementation, the processing module is further configured to perform delay compensation on the fine granularity service based on the delay compensation value.

In a possible implementation, that the processing module is further configured to obtain the delay compensation value through calculation in the following manner, including:

$$\Delta = \text{Target}_{\text{delay1}} - \sum_{i=1}^{n} \text{Node}_{\text{delay}} i - \text{Node}'_{\text{delay}}.$$

$\Delta$ is the delay compensation value, $\text{Target}_{\text{delay1}}$ is the end-to-end target delay, $\sum_{i=1}^{n} \text{Node}_{\text{delay}} i$ is the first transmission delay of the first n hops of first communication apparatuses, the first communication apparatus is used in the source node or an intermediate node, n is a quantity of nodes of the source node and the intermediate node, and $\text{Node}'_{\text{delay}}$ is the transmission delay of the fine granularity service in the sink node.

In a possible implementation, the processing module is further configured to obtain the transmission delay of the fine granularity service in the sink node through calculation in the following manner, including:

$$\text{Node}'_{\text{delay}} = \text{T4} - \text{T3}.$$

Node'$_{\text{delay}}$ is the transmission delay of the fine granularity service in the sink node, T3 is a third moment, the third moment is a moment at which the sink node receives fine granularity unit FGU slot data, the FGU slot data carries a specific bit in a service bit flow of the fine granularity service, T4 is a fourth moment, and the fourth moment is a moment at which the sink node decapsulates a service container obtained by demapping the FGU slot data.

In a possible implementation, the processing module is further configured to demap the FGU slot data to obtain the service container.

The processing module is further configured to decapsulate the service container to obtain a service slice.

The processing module is further configured to store the service slice in a memory.

The processing module is further configured to: when residence time of the service slice in the memory reaches the delay compensation value, extract the service slice from the memory.

The processing module is further configured to reassemble the service bit flow based on a plurality of service slices.

The transceiver module is further configured to send the service bit flow.

In a possible implementation, the transceiver module is further configured to receive, from the sink node, the transmission delay of the fine granularity service in the sink node.

In a possible implementation, after the processing module is further configured to determine the delay compensation value based on the end-to-end target delay, the first transmission delay, and the transmission delay of the fine granularity service in the sink node, the method further includes:

The transceiver module is further configured to send the delay compensation value to the sink node.

According to a sixth aspect, an embodiment of this application provides a communication apparatus, where the communication apparatus includes:

a transceiver module, configured to perform a receiving- and/or sending-related operation performed by the communication apparatus in the third aspect; and

a processing module, configured to perform an operation other than the receiving and/or sending-related operation performed by the communication apparatus in the third aspect.

It should be noted that the communication apparatus mentioned in embodiments of this application may be, for example, a network device such as a switch or a router, may be some components of a network device, for example, a board or a line card of the network device, may be a functional module of the network device, or may be a chip configured to implement the methods in this application. This is not specifically limited in embodiments of this application. When the communication apparatus is a chip, the transceiver module configured to implement the method may be, for example, an interface circuit of the chip, and the processing module may be a processing circuit having a processing function in the chip. Communication apparatuses may be directly connected, for example, but not limited to, by using an ethernet cable or an optical cable.

For example, the communication apparatus includes a processing module, configured to determine a transmission delay of a fine granularity service in the communication apparatus.

The processing module is further configured to perform delay compensation on the fine granularity service based on a target delay of a node and the transmission delay of the fine granularity service in the communication apparatus.

In a possible implementation, the target delay of the node includes: a target delay of a source node, a target delay of an intermediate node, and/or a target delay of a sink node.

In a possible implementation, the transceiver module is configured to obtain a first receiving moment, where the first receiving moment is a moment at which the source node receives a specific bit in a service bit flow that carries the fine granularity service.

The transceiver module is further configured to obtain a second sending moment, where the second sending moment is a moment at which the source node sends fine granularity unit FGU slot data, and the FGU slot data carries the specific bit in the service bit flow of the fine granularity service.

The processing module is further configured to subtract the first receiving moment from the second sending moment, to obtain a transmission delay of the fine granularity service in the source node.

In a possible implementation, the transceiver module is configured to obtain a third receiving moment, where the third receiving moment is a moment at which the intermediate node receives the fine granularity unit FGU slot data at an ingress slot location, and the FGU slot data carries the specific bit in the service bit flow of the fine granularity service.

The transceiver module is further configured to obtain a fourth sending moment, where the fourth sending moment is a moment at which the intermediate node sends the FGU slot data.

The processing module is further configured to subtract the third receiving moment from the fourth sending moment, to obtain the transmission delay of the fine granularity service in the intermediate node.

In a possible implementation, the transceiver module is configured to obtain a fifth receiving moment, where the fifth receiving moment is a moment at which the sink node receives the fine granularity unit FGU slot data, and the FGU slot data carries the specific bit in the service bit flow of the fine granularity service.

The transceiver module is further configured to obtain a sixth sending moment, where the sixth sending moment is a moment at which the sink node decapsulates a service container, the service container is obtained by the communication apparatus by demapping the FGU slot data, and the service container carries the specific bit in the service bit flow of the fine granularity service.

The processing module is further configured to subtract the fifth receiving moment from the sixth sending moment, to obtain a transmission delay of the fine granularity service in the sink node.

In a possible implementation:

the processing module is further configured to determine a delay compensation value based on the target delay of the node and the transmission delay of the fine granularity service in the communication apparatus.

The processing module is further configured to perform delay compensation on the fine granularity service based on the delay compensation value.

In a possible implementation, the processing module is further configured to store the FGU slot data in a memory, where the FGU slot data carries the service bit flow of the fine granularity service.

The transceiver module is further configured to: when residence time of the FGU slot data in the memory reaches the delay compensation value, extract the FGU slot data from the memory.

The transceiver module is further configured to send the FGU slot data.

In a possible implementation, the processing module is further configured to cross-map the ingress slot location of the intermediate node to an egress slot location of the intermediate node.

The processing module is further configured to store, in a memory, the FGU slot data received at the ingress slot location of the intermediate node.

The processing module is further configured to: when residence time of the FGU slot data in the memory reaches the delay compensation value, extract the FGU slot data from the memory.

The transceiver module is further configured to send the FGU slot data at the egress slot location of the intermediate node.

In a possible implementation, the processing module is further configured to demap the FGU slot data to obtain the service container.

The processing module is further configured to decapsulate the service container to obtain a service slice.

The processing module is further configured to store the service slice in a memory.

The processing module is further configured to: when residence time of the service slice in the memory reaches the delay compensation value, extract the service slice from the memory.

The processing module is further configured to reassemble the service bit flow based on a plurality of service slices.

The transceiver module is further configured to send the service bit flow.

In a possible implementation, the fine granularity service carries a constant bit rate CBR service.

According to a seventh aspect, an embodiment of this application provides a network device, where the network device is used in a first communication apparatus, and the network device includes:

a processor, configured to determine a first transmission delay, where the first transmission delay indicates a transmission delay of a fine granularity service in the first communication apparatus; and
a transceiver, configured to send the first transmission delay to a second communication apparatus.

In a possible implementation, the processor is specifically configured to obtain the transmission delay of the fine granularity service in the first communication apparatus through calculation in the following manner, including:

$$\mathrm{Node_{delay}} = \mathrm{T2} - \mathrm{T1}.$$

$\mathrm{Node_{delay}}$ is the transmission delay of the fine granularity service in the first communication apparatus, T1 is a first moment, the first moment is a moment at which the first communication apparatus receives the fine granularity service, T2 is a second moment, and the second moment is a moment at which the first communication apparatus sends the fine granularity service.

In a possible implementation, the first moment is a moment at which the first communication apparatus receives a specific bit in a service bit flow that carries the fine granularity service.

In a possible implementation, the second moment is a moment at which the first communication apparatus sends fine granularity unit FGU slot data, and the FGU slot data carries the specific bit in the service bit flow of the fine granularity service.

In a possible implementation, the fine granularity service is a constant bit rate CBR service.

In a possible implementation, the transceiver is further configured to receive a second transmission delay from a previous-hop node, where the second transmission delay indicates a transmission delay of the fine granularity service from a source node to the previous-hop node; and

the transceiver is further configured to send the first transmission delay and the second transmission delay to a next-hop node.

In a possible implementation, the second transmission delay includes a transmission delay corresponding to each node that the fine granularity service passes through when being transmitted from the source node to the previous-hop node; or

the second transmission delay includes a sum of transmission delays corresponding to all nodes that the fine granularity service passes through when being transmitted from the source node to the previous-hop node.

In a possible implementation, the transceiver is further configured to receive a delay collection message from the previous-hop node, where the delay collection message includes the second transmission delay.

The processor is further configured to update the delay collection message, where an updated delay collection message includes the first transmission delay and the second transmission delay.

The transceiver is further configured to send the updated delay collection message to the second communication apparatus.

In a possible implementation, the delay collection message further includes path information.

The processor is further configured to determine, based on an indication of the path information, the second communication apparatus that receives the delay collection message.

In a possible implementation, the second communication apparatus is used in a sink node or a network management device.

According to an eighth aspect, an embodiment of this application provides a network device, where the network device is used in a second communication apparatus, and the network device includes:

a transceiver, configured to obtain a first transmission delay, where the first transmission delay indicates a transmission delay of a fine granularity service in the first communication apparatus; and

the transceiver is further configured to obtain a transmission delay of the fine granularity service in a sink node; and

a processor, configured to determine a delay compensation value based on an end-to-end target delay, a first transmission delay of first n hops of first communication apparatuses, and the transmission delay of the fine granularity service in the sink node, where the delay compensation value is for performing delay compensation on the fine granularity service in the sink node, and n is a positive integer.

In a possible implementation, the end-to-end target delay is greater than or equal to a larger one of the following two transmission delay values:

a service transmission delay value in a first direction or a service transmission delay value in a second direction, where the first direction is from a source node to the sink node; and

the second direction is from the sink node to the source node.

In a possible implementation, the processor is further configured to perform delay compensation on the fine granularity service based on the delay compensation value.

In a possible implementation, that the processor is further configured to obtain the delay compensation value through calculation in the following manner, including:

$$\Delta = \text{Target}_{\text{delay1}} - \sum_{i=1}^{n} \text{Node}_{\text{delay}}i - \text{Node'}_{\text{delay}}.$$

$\Delta$ is the delay compensation value, $\text{Target}_{\text{delay1}}$ is the end-to-end target delay, $\sum_{i=1}^{n} \text{Node}_{\text{delay}}i$ is the first transmission delay of the first n hops of first communication apparatuses, the first communication apparatus is used in the source node or an intermediate node, n is a quantity of nodes of the source node and the intermediate node, and Node'$_{delay}$ is the transmission delay of the fine granularity service in the sink node.

In a possible implementation, the processor is further configured to obtain the transmission delay of the fine granularity service in the sink node through calculation in the following manner, including:

$$\mathrm{Node'_{delay} = T4 - T3.}$$

Node'$_{delay}$ is the transmission delay of the fine granularity service in the sink node, T3 is a third moment, the third moment is a moment at which the sink node receives fine granularity unit FGU slot data, the FGU slot data carries a specific bit in a service bit flow of the fine granularity service, T4 is a fourth moment, and the fourth moment is a moment at which the sink node decapsulates a service container obtained by demapping the FGU slot data.

In a possible implementation, the processor is further configured to demap the FGU slot data to obtain the service container.

The processor is further configured to decapsulate the service container to obtain a service slice.

The processor is further configured to store the service slice in a memory.

The processor is further configured to: when residence time of the service slice in the memory reaches the delay compensation value, extract the service slice from the memory.

The processor is further configured to reassemble the service bit flow based on a plurality of service slices.

The transceiver is further configured to send the service bit flow.

In a possible implementation, the transceiver is further configured to receive, from the sink node, the transmission delay of the fine granularity service in the sink node.

In a possible implementation, after the processor is further configured to determine the delay compensation value based on the end-to-end target delay, the first transmission delay, and the transmission delay of the fine granularity service in the sink node, the method further includes:

The transceiver is further configured to send the delay compensation value to the sink node.

According to a ninth aspect, an embodiment of this application provides a network device, where the network device is used in a communication apparatus, and the network device includes:

a processor, configured to determine a transmission delay of a fine granularity service in the communication apparatus.

The processor is further configured to perform delay compensation on the fine granularity service based on a target delay of a node and the transmission delay of the fine granularity service in the communication apparatus.

In a possible implementation, the target delay of the node includes: a target delay of a source node, a target delay of an intermediate node, and/or a target delay of a sink node.

In a possible implementation, the transceiver is configured to obtain a first receiving moment, where the first receiving moment is a moment at which the source node receives a specific bit in a service bit flow that carries the fine granularity service.

The transceiver is further configured to obtain a second sending moment, where the second sending moment is a moment at which the source node sends fine granularity unit FGU slot data, and the FGU slot data carries the specific bit in the service bit flow of the fine granularity service.

The processor is further configured to subtract the first receiving moment from the second sending moment, to obtain a transmission delay of the fine granularity service in the source node.

In a possible implementation, the transceiver is configured to obtain a third receiving moment, where the third receiving moment is a moment at which the intermediate node receives the fine granularity unit FGU slot data at an ingress slot location, and the FGU slot data carries the specific bit in the service bit flow of the fine granularity service.

The transceiver is further configured to obtain a fourth sending moment, where the fourth sending moment is a moment at which the intermediate node sends the FGU slot data.

The processor is further configured to subtract the third receiving moment from the fourth sending moment, to obtain the transmission delay of the fine granularity service in the intermediate node.

In a possible implementation, the transceiver is configured to obtain a fifth receiving moment, where the fifth receiving moment is a moment at which the sink node receives the fine granularity unit FGU slot data, and the FGU slot data carries the specific bit in the service bit flow of the fine granularity service.

The transceiver is further configured to obtain a sixth sending moment, where the sixth sending moment is a moment at which the sink node decapsulates a service container, the service container is obtained by the communication apparatus by demapping the FGU slot data, and the service container carries the specific bit in the service bit flow of the fine granularity service.

The processor is further configured to subtract the fifth receiving moment from the sixth sending moment, to obtain a transmission delay of the fine granularity service in the sink node.

In a possible implementation:
the processor is further configured to determine a delay compensation value based on the target delay of the node and the transmission delay of the fine granularity service in the communication apparatus.

The processor is further configured to perform delay compensation on the fine granularity service based on the delay compensation value.

In a possible implementation, the processor is further configured to store the FGU slot data in a memory, where the FGU slot data carries the service bit flow of the fine granularity service.

The transceiver is further configured to: when residence time of the FGU slot data in the memory reaches the delay compensation value, extract the FGU slot data from the memory.

The transceiver is further configured to send the FGU slot data.

In a possible implementation, the processor is further configured to cross-map the ingress slot location of the intermediate node to an egress slot location of the intermediate node.

The processor is further configured to store, in a memory, the FGU slot data received at the ingress slot location of the intermediate node.

The processor is further configured to: when residence time of the FGU slot data in the memory reaches the delay compensation value, extract the FGU slot data from the memory.

The transceiver is further configured to send the FGU slot data at the egress slot location of the intermediate node.

In a possible implementation, the processor is further configured to demap the FGU slot data to obtain the service container.

The processor is further configured to decapsulate the service container to obtain a service slice.

The processor is further configured to store the service slice in a memory.

The processor is further configured to: when residence time of the service slice in the memory reaches the delay compensation value, extract the service slice from the memory.

The processor is further configured to reassemble the service bit flow based on a plurality of service slices.

The transceiver is further configured to send the service bit flow.

In a possible implementation, the fine granularity service carries a constant bit rate CBR service.

According to a tenth aspect, a communication system is provided, where the communication system includes the network device according to the fourth aspect or the fifth aspect.

According to an eleventh aspect, a communication system is provided, where the communication system includes the network device according to the sixth aspect.

A twelfth aspect of this application provides a computer storage medium. The computer storage medium may be non-volatile. The computer storage medium stores computer-readable instructions. When the computer-readable instructions are executed by a processor, the method according to any one of the implementations of the first aspect, the second aspect, or the third aspect is implemented.

A thirteenth aspect of this application provides a computer program product including instructions. When the computer program product runs on a computer, the computer is enabled to perform the method according to any one of the implementations of the first aspect, the second aspect, or the third aspect.

A fourteenth aspect of this application provides a chip system, where the chip system includes a processor and an interface circuit. The processor and the interface circuit are configured to support a communication apparatus in implementing functions in the method according to any one of the foregoing aspects, for example, sending or processing data and/or information in the foregoing method. In a possible design, the chip system further includes a memory, configured to store program instructions and data that are necessary for a network device. The chip system may include a chip, or may include a chip and another discrete component.

A fifteenth aspect of this application provides a network device, where the network device is used as a first communication apparatus, and the network device includes: a communication interface; and
a processor connected to the communication interface, where based on the communication interface and the processor, the first communication apparatus performs the method according to the first aspect.

A sixteenth aspect of this application provides a network device, where the network device is used as a second communication apparatus, and the network device includes: a communication interface; and
a processor connected to the communication interface, where based on the communication interface and the processor, the second communication apparatus performs the method according to the second aspect.

A seventeenth aspect of this application provides a network device, where the network device is used as a communication apparatus, and the network device includes: a communication interface; and
a processor connected to the communication interface, where based on the communication interface and the processor, the communication apparatus performs the method according to the third aspect.

## BRIEF DESCRIPTION OF DRAWINGS

FIG. 1 is a schematic diagram of an application scenario in which a fine granularity technology is applied to a smart grid;

FIG. 2 is a schematic diagram of a structure of an FGU base frame;

FIG. 3a is a schematic diagram of a structure of an FGU multiframe;

FIG. 3b is a schematic diagram of an overhead of an FGU base frame;

FIG. 4A and FIG. 4B are a schematic diagram of a CBR service processing procedure;

FIG. 5 is a schematic diagram of a base frame payload;

FIG. 6 is a schematic diagram of a fine granularity service multiframe according to an embodiment of this application;

FIG. 7 is a schematic diagram of a network scenario according to an embodiment of this application;

FIG. 8A and FIG. 8B are a schematic diagram of a 1DM procedure;

FIG. 9 is a schematic diagram of an embodiment of a delay compensation method according to an embodiment of this application;

FIG. 10 is a schematic diagram of an embodiment of a delay compensation method according to an embodiment of this application;

FIG. 11 is a schematic diagram of a specific bit in a service bit flow according to an embodiment of this application;

FIG. 12 is a schematic diagram of a specific bit in a service bit flow according to an embodiment of this application;

FIG. 13 is a schematic diagram of a specific bit in a service bit flow according to an embodiment of this application;

FIG. 14 is a schematic diagram of a transmission delay scenario according to an embodiment of this application;

FIG. 15 is a schematic diagram of another transmission delay scenario according to an embodiment of this application;

FIG. 16A and FIG. 16B are a schematic diagram of an application scenario according to an embodiment of this application;

FIG. 17A and FIG. 17B are a schematic diagram of another application scenario according to an embodiment of this application;

FIG. 18 is a schematic diagram of measuring a transmission delay according to an embodiment of this application;

FIG. 19A to FIG. 19C are a schematic diagram of another application scenario according to an embodiment of this application;

FIG. 20A to FIG. 20C are a schematic diagram of another embodiment of a delay compensation method according to an embodiment of this application;

FIG. 21A to FIG. 21C are a schematic diagram of another embodiment of a delay compensation method according to an embodiment of this application;

FIG. 22 is a schematic diagram of forwarding a delay collection message according to an embodiment of this application;

FIG. 23 is a schematic diagram of a structure of a communication apparatus 2300 according to an embodiment of this application;

FIG. 24 is a schematic diagram of a structure of a communication apparatus 2400 according to an embodiment of this application;

FIG. 25 is a schematic diagram depicting a structure of a communication apparatus 2500 according to an embodiment of this application;

FIG. 26 is a schematic diagram depicting a structure of a communication apparatus 2600 according to an embodiment of this application;

FIG. 27 is a schematic diagram of a network system 2700 according to an embodiment of this application; and

FIG. 28 is a schematic diagram of a network system 2800 according to an embodiment of this application.

## DESCRIPTION OF EMBODIMENTS

The following describes embodiments of this application. It is clearly that described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. Moreover, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Division into units in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

First, some technical concepts in embodiments of this application are described.

(1) Fine granularity technology

In the fine granularity technology, a fine granularity unit (fine granularity unit, FGU) carries a fine granularity service. The fine granularity technology inherits a high-efficiency ethernet kernel of a slicing packet network (slicing packet network, SPN) and integrates a fine-grained slicing technology into an overall architecture of the SPN to provide low-cost, refined, and hard-isolated fine granularity bearer pipes. The FGU refines a granularity of hard slicing from 5 gigabits per second (G-bits per-second, Gbps) to 10 megabits per second (megabits per second, Mbps), to meet differentiated service carrying requirements such as a small bandwidth, high isolation, and high security in scenarios such as a 5th generation mobile communication technology+ (5th generation mobile communication technology+, 5G+) vertical industry application and a private line service.

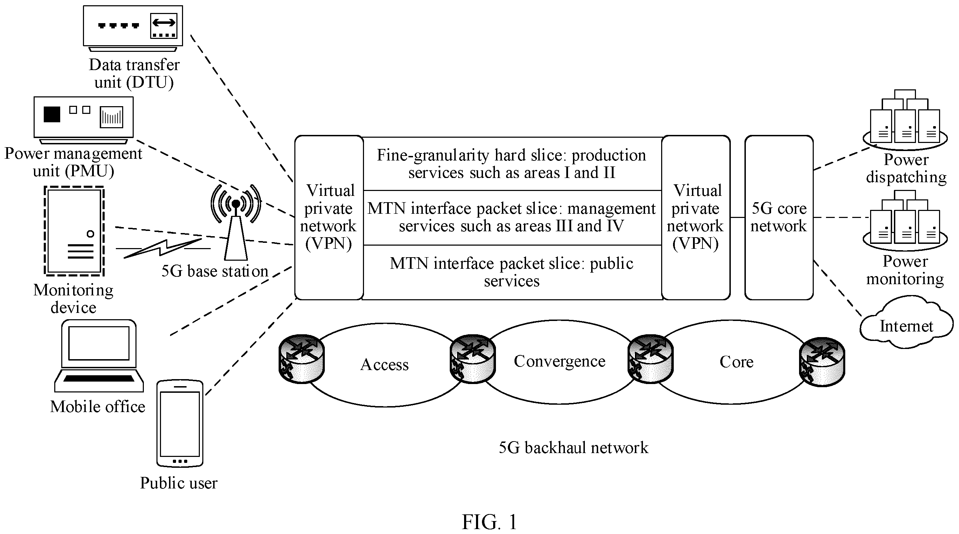

The following describes an application scenario of the fine granularity technology with reference to the accompanying drawings. For example, in a scenario shown in FIG. 1, FIG. 1 is a schematic diagram of an application scenario in which a fine granularity technology is applied to a smart grid. The smart grid includes many parts, which may include: a smart substation, a smart power distribution network, a smart electricity meter, a smart interactive terminal, smart scheduling, a smart household appliance, a smart power consumption building, a smart city power grid, a smart power generation system, and/or a new energy storage system.

The smart grid integrates an information technology, a sensor technology, an automatic control technology, and a power grid infrastructure to obtain panoramic information about the power grid and detect and predict possible faults in a timely manner. When a fault occurs, the power grid can quickly isolate the fault and implement self-recovery, preventing large-scale power outages. In the smart grid, wide application of technologies such as flexible alternating/direct current transmission, grid plant coordination, smart scheduling, power storage, and power distribution automation makes power grid operation control more flexible and economical and can adapt to access of a large quantity of distributed power supplies, microgrids, and electric vehicle charging and discharging facilities. The comprehensive application of communication, information, and modern management technologies will greatly improve utilization efficiency of power equipment, reduce power consumption, and make the power grid run more economically and efficiently. Real-time and non-real-time information is highly integrated, shared, and used, so that a comprehensive, complete, and refined grid running status diagram is displayed for operation management, and corresponding decision-making support, control implementation solutions, and response plans can be provided. A two-way interactive service mode is established in the smart grid. Users can learn about power supply capabilities, power quality, power price, and power outage information in real time, and properly use electrical appliances. Electric power enterprises can obtain detailed power consumption information of the users and provide more value-added services for the users.

Based on the foregoing requirements, smart grid services have high requirements on real-time performance and security. This type of services usually requires a bandwidth not greater than 20 Mbps, an end-to-end one-way delay less than 20 milliseconds (ms), and a high reliability and security requirement, to ensure that no power supply accident occurs due to a communication reason. This has typical service features of a small bandwidth, a deterministic low delay, high reliability, and high security. In a fine granularity service scenario, a plurality of terminal devices and network devices may be included, for example, a power management unit (Power Management Unit, PMU), a data transfer unit (Data Transfer unit, DTU) at each level, or various types of smart meters or smart switches.

In smart grid scenarios, a plurality of types of slices can be obtained through classification based on their functions. For example, a fine-granularity hard slice is for production services such as a transport network (area I) and a data dispatching network (area II); an MTN interface packet slice is for management services such as an integrated data network (area III) and an area IV; and an MTN interface packet slice is for public services.

It may be understood that the fine granularity technology may be further applied to a plurality of scenarios, including but not limited to: medical care, a port, a railway, a private line service, or the like. This is not limited herein.

(2) Fine granularity unit frame

The following describes a specific frame structure of a fine granularity unit. The fine granularity unit frame is also referred to as a fine granularity unit (fine granularity unit, FGU) frame or an FGU frame. In the fine granularity technology, a time division multiplexing (time-division multiplexing, TDM) mechanism is used to cyclically send fine granularity unit frames in a fixed period. A quantity of slots and locations of the slots included in each frame are strictly fixed. Therefore, a transmission period in each slot is also deterministic. To support more slot channels at a finer granularity and improve bandwidth utilization, for example, the fine granularity service solution uses a multiframe manner to perform slot division on a 5 Gbps granularity at an SPN channel layer or perform slot division on a 1 Gbps granularity.

The SPN channel layer is located at a physical coding sublayer (physical coding sublayer, PCS) layer of IEEE 802.3 and uses a PCS64/66B coding format of IEEE 802.3. The fine granularity unit frame uses a same 64/66B coding format as the SPN channel layer, encodes an overhead and a payload including a plurality of slots, and encapsulates the overhead and the payload into a fixed-length sequence of block S + block D + block T after encoding.

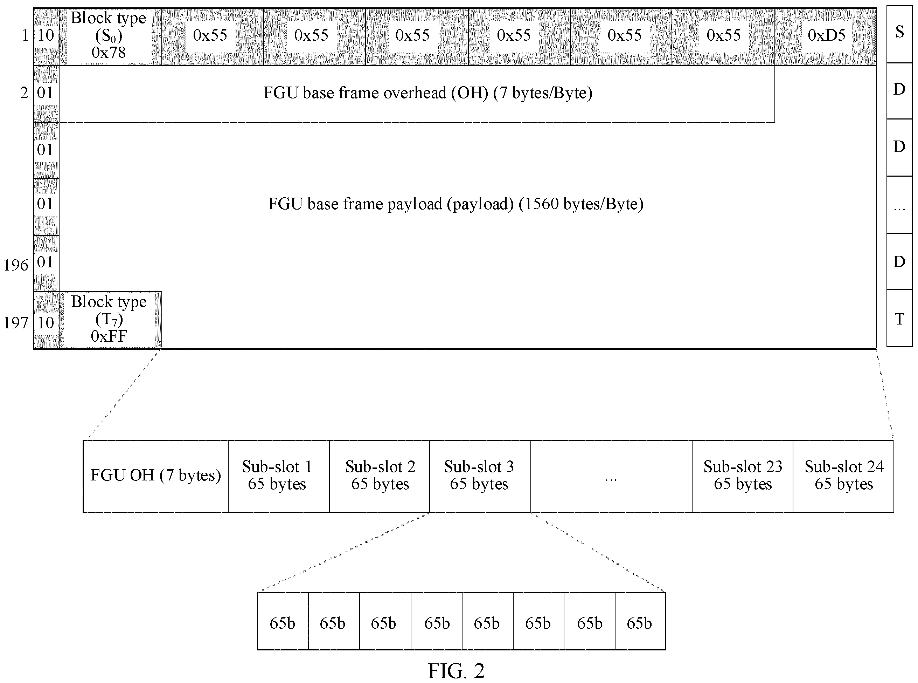

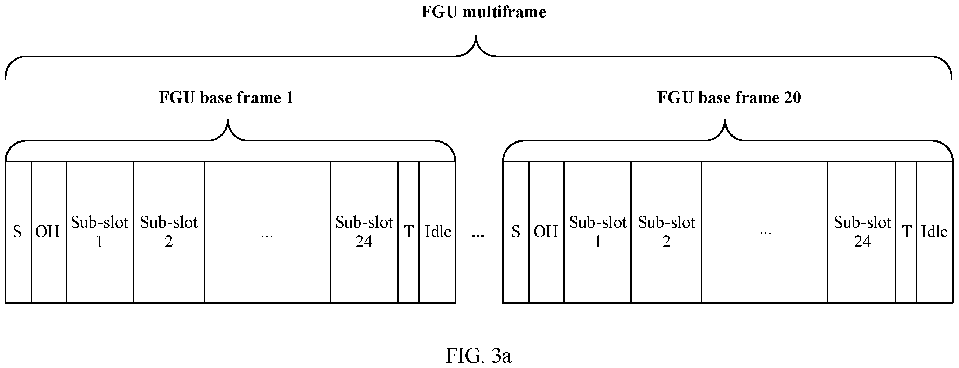

For example, the fine granularity unit frame includes an FGU base unit frame (also referred to as an FGU basic frame, an FGU base frame, a base frame, or a single frame), and the FGU base frame has a fixed length, includes one start block (S0), 195 data blocks (D), and one termination block (T7), and has a total of 197 66B blocks (66B blocks). The 195 data blocks and the termination block (T7) of the single FGU frame provide 1567 (195x8+7) bytes of data content, including a 7-byte overhead and a 1560-byte payload. The payload is divided into 24 sub-slots (Sub-Slot) of a same size. The 66B blocks from the service are compressed from 66B to 65B and then filled in the sub-slot payloads. Each sub-slot (Sub-Slot) is 65 bytes, and can carry eight 65-bit blocks. Specifically, refer to FIG. 2. FIG. 2 is a schematic diagram of a structure of an FGU base frame. For an FGU multiframe, refer to FIG. 3a. FIG. 3a is a schematic diagram of a structure of an FGU multiframe. One FGU multiframe includes 20 FGU base frames. Each FGU base frame supports 24 slots. A 5 Gbps granularity at an SPN channel layer supports 480 slots. Each FGU base frame includes a base frame overhead (overhead, OH) and a base frame payload (payload). In embodiments of this application, the base frame overhead is also referred to as an overhead or an OH. It should be noted that the FGU base frame may further include other content. This is not limited in embodiments of this application.

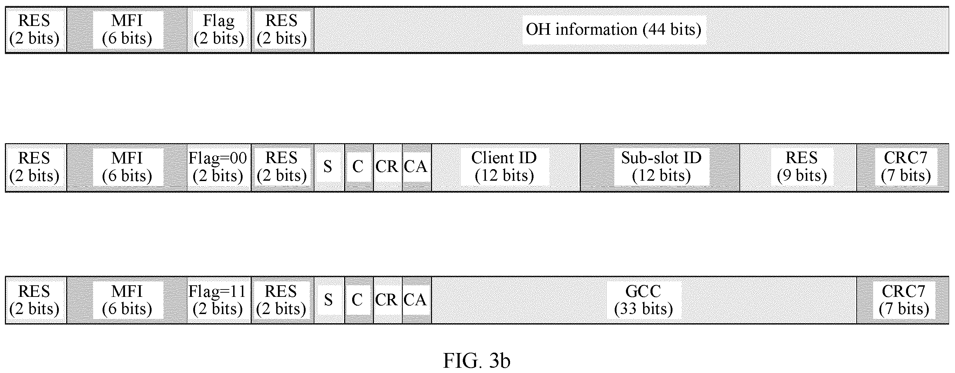

A length of the overhead included in each FGU base frame is 56 bits. Refer to FIG. 3b. FIG. 3b is a schematic diagram of an overhead of an FGU base frame. The overhead includes: a multiframe indicator (MFI), a flag (Flag) field, a reserved (RES) field, and an overhead information area. Details are as follows:

Multiframe indicator (multiframe indicator, MFI): The MFI has a length of 6 bits and indicates a sequence number of each base frame in an FGU multiframe. For the 1st base frame in the multiframe, a value of an MFI is 0. For a base frame following the 1st base frame, a value of an MFI is sequentially increased by 1.

The flag (Flag) field indicates use of a bit location following a CA field in the overhead. The flag field is also referred to as an overhead channel usage indicator field.

The overhead information area includes: a slot increase adjustment announcement (S field), a slot effective indicator (C field), a change answer (change answer, CA) field (the CA field is also referred to as a slot adjustment answer field), a change request (change request, CR) field (the CR field is also referred to as a slot adjustment request field), a general communication channel (general communication channel, GCC), a client identifier (client ID), a slot identifier (sub-slot ID), and cyclic redundancy check (cyclic redundancy check, CRC).

(4) From a service bit flow to a fine granularity service multiframe

The following uses an example in which a fine granularity service is a constant bit rate (constant bit rate, CBR) service to describe how a node specifically processes a service bit flow to obtain a fine granularity service multiframe after receiving the service bit flow. It may be understood that the fine granularity service in embodiments of this application may alternatively be another service, for example, an ethernet (Ethernet) service, transmitted based on the fine granularity technology. This is not limited in embodiments of this application.

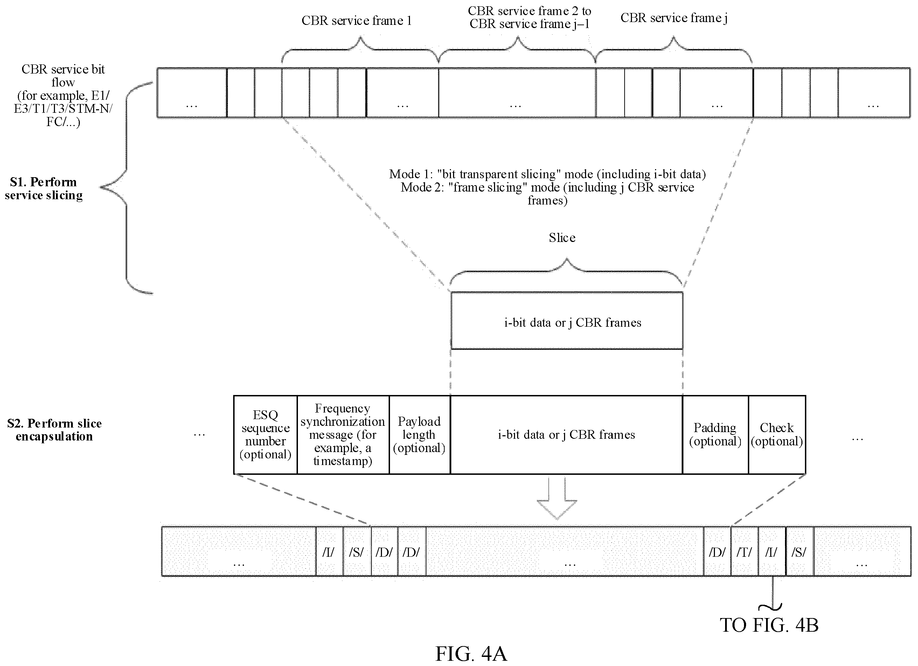

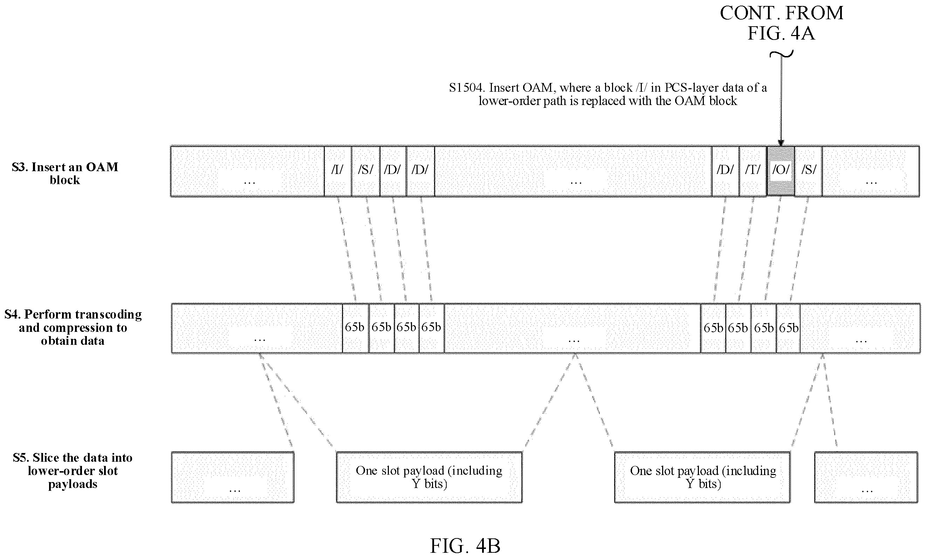

Refer to FIG. 4A and FIG. 4B. FIG. 4A and FIG. 4B are a schematic diagram of a CBR service processing procedure. The CBR service processing procedure is as follows:

S1. Perform service slicing.

In step S1, a node receives a service bit flow, where the service bit flow carries a CBR service. Specifically, the service bit flow includes j CBR service frames, where j is a positive integer greater than 1. After receiving the j CBR service frames, the node slices service data to obtain a corresponding service slice. A specific slicing solution includes: a bit transparent slicing mode, in which specific content of a service frame is not identified, and slicing is performed based on a fixed quantity of bits, for example, slicing is performed on every i bits to obtain a service slice, where i is a positive integer greater than 1; a frame slicing model, in which a specific frame format is identified, and then slicing is performed based on a fixed quantity of frames, for example, slicing is performed on every j frames to obtain a service slice, where j is a positive integer greater than 1.

S2. Perform slice encapsulation.

In step S2, after performing slicing processing on the service bit flow to obtain the corresponding service slice, the node performs encapsulation processing on the service slice to obtain a corresponding service container. Specifically, an overhead is added to the service slice, so that a length of the service slice to which the overhead is added is the same as a length of a lower-order slot payload, for example, both are Y bits, where Y is a positive integer greater than 1. A specific encapsulation procedure is as follows: One or more of the following information is added on the basis of the service slice: an expanded sequence (Expanded Sequence, ESQ) number, a frequency synchronization message (for example, a timestamp), a payload length, padding (padding), or a check field. The ESQ sequence number is for performing lossless protection or loss detection on the service slice. The frequency synchronization message is for transferring service-related clock information. When the length of the service slice is less than the length of the lower-order slot payload, the payload length or the padding needs to be encapsulated, where the payload length or the padding identifies a valid payload length. The check field is for performing bit error check on the service slice.

After adding the overhead to the service slice, the node further encapsulates the service slice to which the overhead is added, to obtain the service container. Specifically, frame boundary and frame interval encapsulations are added to the service slice to which the overhead is added, to obtain the service container.

Then, the node converts the service container into a 64B/66B block flow, to be specific, maps the service container to a corresponding block I, block S, block T, and block D.

S3. Insert an operation, administration and maintenance (operation, administration and maintenance, OAM) block.

In step S3, the node inserts the OAM block into the block flow. The OAM block is also referred to as an OAM message in embodiments of this application.

S4. Perform transcoding and compression to obtain data.

Step S4 is an optional step. To improve carrying efficiency of a data channel, transcoding and compression processing is performed on the 64B/66B block flow into which the OAM block is inserted. A specific transcoding algorithm may be a 64B/65B transcoding algorithm or a 256B/257B transcoding algorithm. This is not limited in embodiments of this application.

S5. Slice the data into lower-order slot payloads.

In step S5, the node performs slicing processing on a transcoded data flow based on a specific bit length. For example, the node performs slicing processing based on a payload length (Y bits, where Y is a positive integer greater than 1) per slot, where the payload length per slot is equal to the length of the lower-order slot payload. For another example, the payload length per slot may be Z blocks, and the block may be a 64B/66B block, a transcoded 64B/65B block, or a 256B/257B block. This is not limited in embodiments of this application.

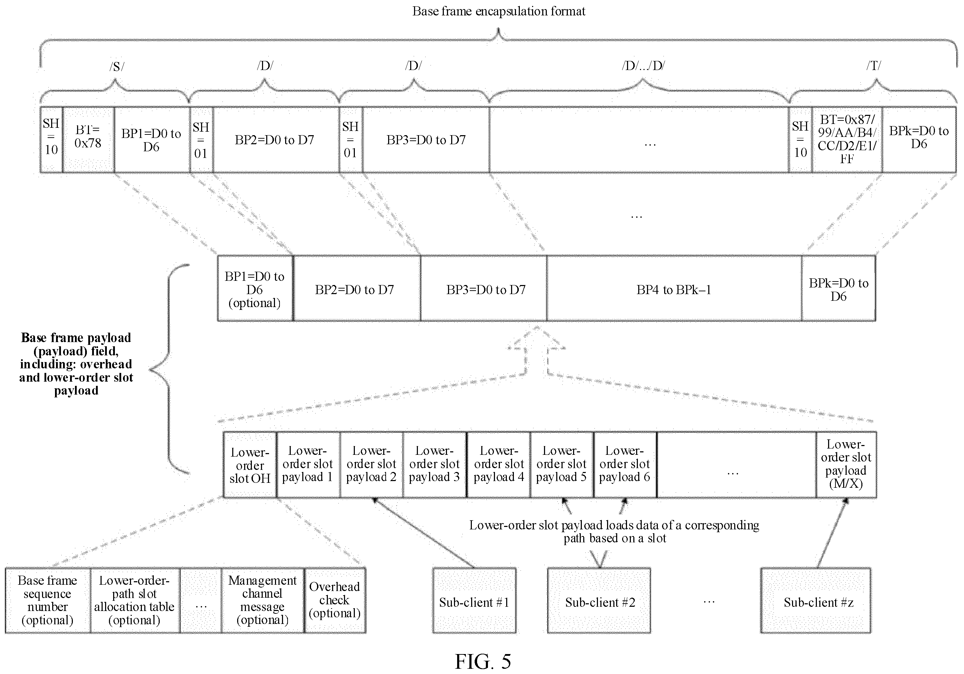

After obtaining the lower-order slot payload, the node loads the lower-order slot payload to a base frame payload (payload). For details, refer to FIG. 5. FIG. 5 is a schematic diagram of a base frame payload. A process of encapsulating a fine granularity service base frame (the fine granularity service base frame is referred to as a base frame for short in embodiments of this application) is as follows: A block S (also referred to as a block /S/), a block D (also referred to as a block /D/), and a block T (also referred to as a block /T/) are encapsulated in the FGU base frame. Data fields in the block flow jointly form a payload (payload) field of the base frame. A data field in the block S is used as an optional field, and the block T may be any one of seven blocks $T_0$ to $T_7$. The base frame payload field is for loading (M/X) lower-order slot payloads and a lower-order slot overhead (overhead, OH) field. The (M/X) lower-order slot payload fields load different lower-order path (sub-Client) data based on a slot table, where M is a positive integer greater than 1, and X is a positive integer greater than 1. The lower-order slot overhead field includes a base frame sequence number, a lower-order-path slot allocation table, a management message channel (the management message channel is optional), overhead check (the overhead check is optional), and the like.

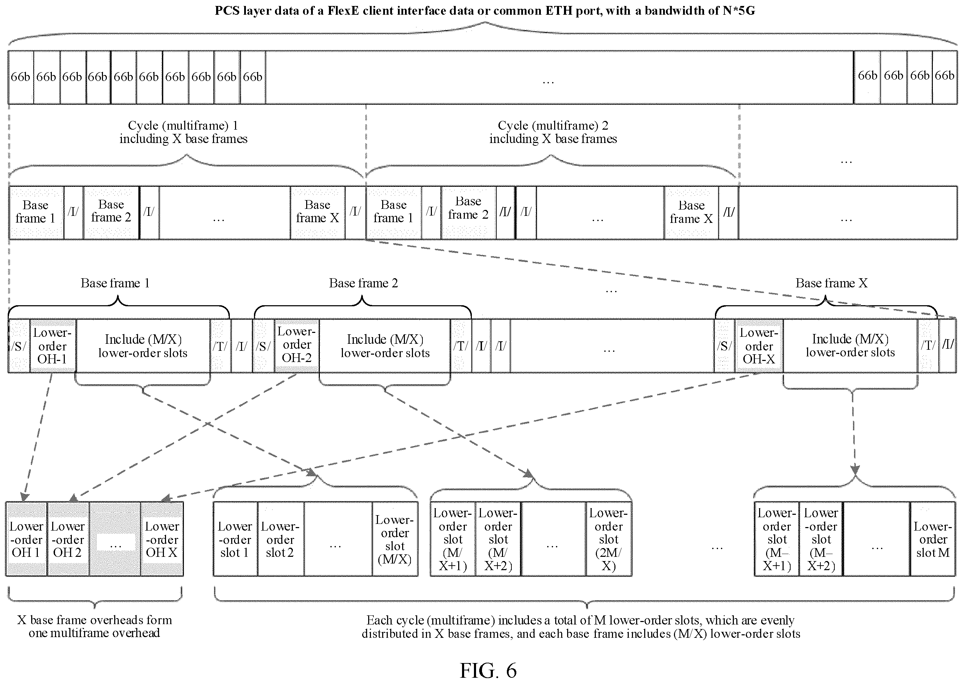

After obtaining the base frame, the node sends the base frame in a form of a fine granularity service multiframe, to be specific, maps the fine granularity service multiframe to an egress slot location and sends the fine granularity service multiframe. Specifically, refer to FIG. 6. FIG. 6 is a schematic diagram of a fine granularity service multiframe according to an embodiment of this application. A node divides a flexible ethernet (Flexible Ethernet, FlexE) client (Client) interface or a common ethernet (ETH) port with a bandwidth of N*5 (gigabit per second, Gbps) into M lower-order slots for cyclic transmission. Each cycle is defined as a multiframe, and the multiframe is further divided into X fixed-length base frames, where N is a positive integer greater than 1. A payload of each base frame carries (M/X) lower-order slots. The base frame is encapsulated by using a block S, a block T, and a block I (that is, an idle (idle) block), to determine a boundary of each base frame. Each base frame header carries some lower-order overheads, and X base frame overheads form a multiframe overhead to transmit a lower-order-path slot configuration and management message.

(5) Delay measurement of a fine granularity service

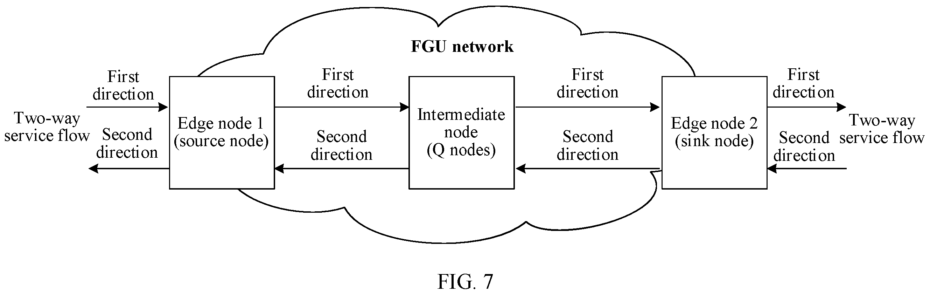

First, a network scenario in embodiments of this application is described. Refer to FIG. 7. FIG. 7 is a schematic diagram of a network scenario according to an embodiment of this application. A fine granularity service network (FGU network) includes an edge node 1, an edge node 2, and an intermediate node. The edge node 1 is considered as a source node, the edge node 2 is considered as a sink node, and the intermediate node includes Q nodes, where Q is an integer greater than 1. A bidirectional service flow (the bidirectional service flow is also referred to as a service bit flow) exists between the source node and the sink node, and the service flow carries a fine granularity service. In this embodiment of this application, a service flow direction of sending from the source node to the sink node is referred to as a first direction, and the first direction may also be referred to as a forward direction. A service flow direction of sending from the sink node to the source node is referred to as a second direction, and the second direction may also be referred to as a backward direction. The node may also be referred to as a network device, and the network device includes but is not limited to a switch, a router, or a packet transport network (packet transport network, PTN) device.

Based on the foregoing network scenario, delay measurement currently supported by the FGU network includes one-way delay measurement (One-way Delay Measurement, 1DM) and two-way delay measurement (Two-way Delay Measurement, 2DM). The following separately provides descriptions.

One-way delay measurement:

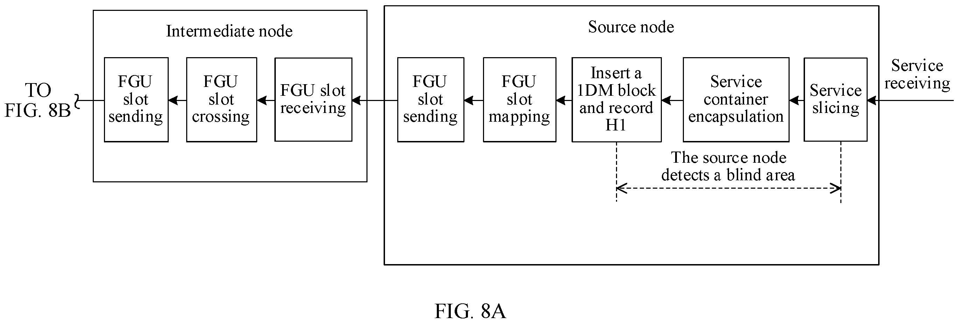

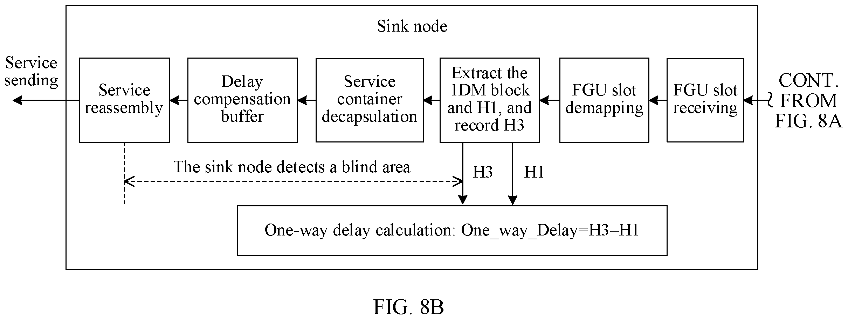

For ease of understanding, refer to FIG. 8A and FIG. 8B. FIG. 8A and FIG. 8B are a schematic diagram of a 1DM procedure. Currently, after receiving a service bit flow that carries a fine granularity service, the source node performs slicing processing on the service bit flow to obtain a corresponding service slice. Then, encapsulation processing is performed on the service slice to obtain a corresponding service container, and the service container is converted into a block flow. The source node determines an idle (idle) block between block flows corresponding to two adjacent service slices, and then replaces the idle block with a 1DM block. This procedure is also referred to as inserting a 1DM block (or referred to as inserting a 1DM message, where the 1DM message includes one or more 1DM blocks). In this case, the source node records a moment of inserting the 1DM block as H1. H1 is used as a moment (which may be specifically a moment at which the 1st block (block) in the 1DM message is sent) at which the 1DM block is sent, and H1 is written into a timestamp (timestamp) field of the 1DM message. Then, the source node maps a block flow including the 1DM block to an egress slot location. Because data sent at the egress slot location carries a fine granularity service, a slot sent at the egress slot location is also referred to as FGU slot data. Finally, the source node sends the FGU slot data through an ethernet interface or a flexible ethernet client (flexible ethernet client, FlexE Client) interface.

In this embodiment of this application, a resource granularity of the FGU slot data may be a slot, a sub-slot, a frame, a subframe, a multiframe, or the like. This is not limited in this embodiment of this application. For ease of description, in this embodiment of this application, an example in which the resource granularity of the FGU slot data is a sub-slot is used for description.

After the intermediate node receives the FGU slot data at an ingress slot location, the intermediate node sends the FGU slot data at an egress slot location. A mapping relationship between the ingress slot location and the egress slot location is indicated by a slot cross-configuration table.

The sink node receives, at an ingress slot location, the FGU slot data from the intermediate node through an ethernet interface or a flexible ethernet client (flexible ethernet client, FlexE Client) interface. First, the sink node performs demapping processing on the FGU slot data to obtain the corresponding block flow, to obtain one or more corresponding service containers. In this case, the sink node records a moment H3 at which the 1DM block is extracted from the block flow, where H3 is used as a moment (which may be specifically a moment at which the 1st block (block) in the 1DM message is received) at which the 1DM block is received. Then, the sink node further decapsulates the service container to obtain the corresponding service slice. After the sink node extracts, from the 1DM block, the moment H1 at which the 1DM block is sent, the sink node calculates a one-way delay based on H1 and H3. Based on the calculated one-way delay, the sink node specifically reassembles the service bit flow by using a plurality of service slices. Finally, the sink node sends the service bit flow.

The applicant finds through research that, in the SPN slice channel, a two-way service flow exists between the source node and the sink node. In embodiments of this application, a direction from the source node to the sink node is referred to as a first direction, and a direction from the sink node to the source node is referred to as a second direction. A procedure for processing a service bit flow in the first direction is independent of a procedure for processing a service bit flow in the second direction. Because processing delays of nodes in the SPN network may be different, delays of service bit flows in two directions may not keep consistent.

Based on this, embodiments of this application provide a delay compensation method, including: A communication apparatus determines a transmission delay of a fine granularity service in the communication apparatus; and the communication apparatus performs delay compensation on the fine granularity service based on a target delay and the transmission delay of the fine granularity service in the communication apparatus. According to the foregoing method, the communication apparatus implements delay compensation on the fine granularity service, to ensure that a delay of a service bit flow in a first direction is consistent with a delay of the service bit flow in a second direction.

It should be noted that the fine granularity service in embodiments of this application may be a constant bit rate (constant bit rate, CBR) service, an ethernet frame service, or another fine granularity service. This is not limited in embodiments of this application. In embodiments of this application, an example in which the fine granularity service is a CBR service is used for description.

The following specifically describes embodiments of this application with reference to the accompanying drawings. Embodiments of this application may be specifically classified into the following cases based on a location at which delay compensation is implemented:

(1) end-to-end delay compensation from a source node to a sink node; and
(2) node-by-node delay compensation.

First, (1) of the end-to-end delay compensation from the source node to the sink node is described. Specifically, depending on whether a network management device participates in delay compensation, embodiments of this application may be further classified into the following two solutions:

(1.1) The network management device does not participate in delay compensation. (1.2) The network management device participates in delay compensation.

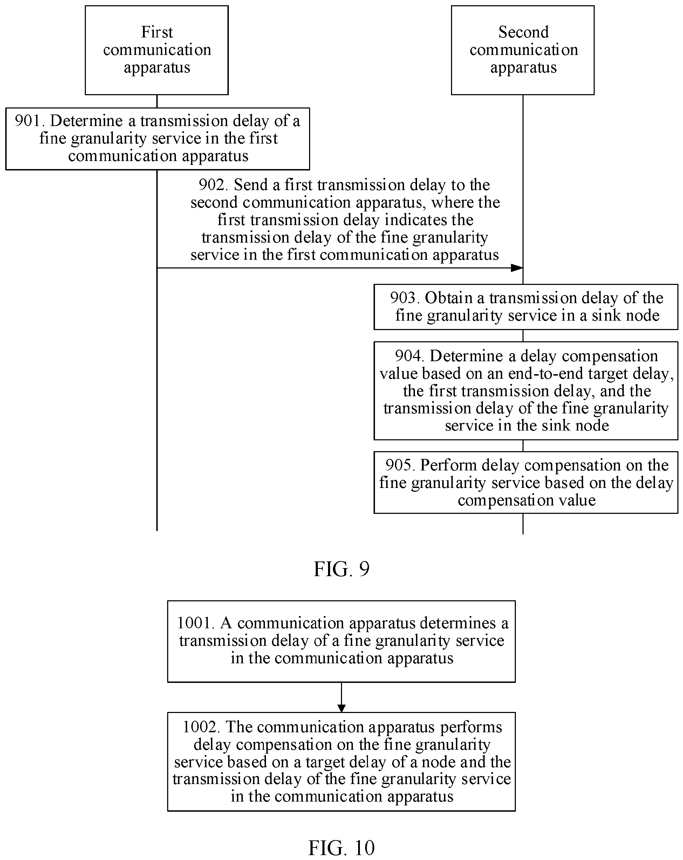

In embodiments of this application, a first communication apparatus may be used in the source node and/or the intermediate node, and a second communication apparatus may be used in the sink node or the network management device. Refer to FIG. 9. FIG. 9 is a schematic diagram of an embodiment of a delay compensation method according to an embodiment of this application. The delay compensation method provided in this embodiment of this application includes the following steps.

901. A first communication apparatus determines a transmission delay of a fine granularity service in the first communication apparatus.

In this embodiment, a process of processing a service bit flow by the first communication apparatus is first described. A service carried in the service bit flow is the fine granularity service. Details are as follows:

Specifically, the scenario shown in FIG. 7 is used as an example for description.

The first communication apparatus is used in a source node. After the first communication apparatus receives a first service bit flow, the first communication apparatus processes the first service bit flow. A specific processing procedure is similar to the scenarios shown in FIG. 4A and FIG. 4B and FIG. 5. First, the first communication apparatus performs slicing processing on the first service bit flow to obtain a service slice corresponding to the first service bit flow. The service slice is also referred to as a service slice corresponding to a first fine granularity service.

Then, the first communication apparatus encapsulates the service slice to obtain a service container. Specifically, one or more of the following information is added on the basis of the service slice: an expanded sequence (Expanded Sequence, ESQ) number, a frequency synchronization message (for example, a timestamp), a payload length, padding (padding), or a check field. The ESQ sequence number is for performing lossless protection or loss detection on the service slice. The frequency synchronization message is for transferring service-related clock information. When a length of the service slice is less than a length of a lower-order slot payload, the payload length or the padding needs to be encapsulated, where the payload length or the padding identifies a valid payload length. The check field is for performing bit error check on the service slice.

After adding an overhead to the service slice, the first communication apparatus further encapsulates the service slice to which the overhead is added, to obtain the service container. Specifically, frame boundary and frame interval encapsulations are added to the service slice to which the overhead is added, to obtain the service container.

Then, the first communication apparatus converts the service container into a 64B/66B block flow, to be specific, maps the service container to a corresponding block I, block S, block T, and block D.

Then, the first communication apparatus inserts an operation, administration and maintenance (operation, administration and maintenance, OAM) block into the block flow.

Then, the first communication apparatus maps the block flow into which the OAM block is inserted to an egress slot location of the first communication apparatus. Data that is of the block flow and that is mapped to the egress slot location is referred to as FGU slot data.

Finally, the first communication apparatus sends the FGU slot data at the egress slot location through an ethernet interface or a flexible ethernet client (flexible ethernet client, FlexE Client) interface.

In the foregoing procedure, the first communication apparatus determines the transmission delay of the fine granularity service in the first communication apparatus. For ease of description, in this embodiment of this application, the transmission delay of the fine granularity service in the first communication apparatus is referred to as a first transmission delay. Specifically, first, the first communication apparatus determines T1, where T1 is a moment at which the first communication apparatus receives the fine granularity service; and the first communication apparatus determines T2, where T2 is a moment at which the first communication apparatus sends the fine granularity service. Then, the first communication apparatus subtracts T1 from T2 to determine the transmission delay of the fine granularity service in the first communication apparatus. The first communication apparatus obtains the transmission delay of the fine granularity service in the first communication apparatus through calculation in the following manner, including:

$$\text{Node}_{\text{delay}} = T2 - T1.$$

$\text{Node}_{\text{delay}}$ is the transmission delay (namely, the first transmission delay) of the fine granularity service in the first communication apparatus, T1 is a first moment, the first moment is the moment at which the first communication apparatus receives the fine granularity service, T2 is a second moment, and the second moment is the moment at which the first communication apparatus sends the fine granularity service.

First, T1 is described. When the first communication apparatus is used in the source node:

Optionally, T1 is a moment at which the first communication apparatus receives a specific bit in a service bit flow that carries the fine granularity service. For example, the 1st bit in the service bit flow is selected as the specific bit. When the first communication apparatus receives the 1st bit in the service bit flow, the first communication apparatus records a receiving moment at which the 1st bit is received. The receiving moment of the 1st bit is used as T1. The specific bit may be selected according to an actual situation. For example, the specific bit may be the 1st bit, the 100th bit, the 200th bit, the 500th bit, and/or the 1000th bit of the service bit flow.

Optionally, the first communication apparatus periodically records a receiving moment based on a bit quantity of the received service bit flow, and the receiving moment is used as T1. For example, each time the first communication apparatus receives 1000 bits, the first communication apparatus records a receiving moment (for example, a receiving moment of the 1001st bit), and the receiving moment is used as T1.

Optionally, when the first communication apparatus receives the service bit flow, a receiving moment is recorded at an interval of one or more bits. Then, a receiving moment is periodically selected as T1. For example, each time the first communication apparatus receives one bit, the first communication apparatus records a receiving moment. The first communication apparatus determines a moment at an interval of 1000 receiving moments as T1.

When the first communication apparatus is used in an intermediate node:

Optionally, T1 is a moment at which the first communication apparatus receives the FGU slot data at an ingress slot location. For example, T1 is a moment at which the first communication apparatus receives the 1st piece of FGU slot data. It may be understood that the first communication apparatus may alternatively select a receiving moment of another piece of FGU slot data as T1. For example, T1 is a moment at which the first communication apparatus receives the 10th piece of FGU slot data of the fine granularity service, T1 is a moment at which the first communication apparatus receives the 50th piece of FGU slot data of the fine granularity service, or T1 is a moment at which the first communication apparatus receives the 100th piece of FGU slot data of the fine granularity service. This is not limited herein.

Optionally, the first communication apparatus periodically records a receiving moment based on a slot quantity of pieces of received FGU slot data, and the receiving moment is used as T1. For example, each time the first communication apparatus receives 1000 pieces of FGU slot data, the first communication apparatus records a receiving moment (for example, a receiving moment of the 1001st piece of FGU slot data), and the receiving moment is used as T1.

Next, T2 is described. When the first communication apparatus is used in the source node:

Optionally, T2 is a moment at which the first communication apparatus sends the FGU slot data at the egress slot location. For example, T2 is a moment at which the first communication apparatus sends the 1st piece of FGU slot data, or T2 is a moment at which the first communication apparatus sends the 50th piece of FGU slot data. This is not limited herein.

Optionally, T2 is a moment at which the first communication apparatus maps the service container including the specific bit to the egress slot location.

Optionally, T2 is a moment at which the first communication apparatus sends the FGU slot data that carries the specific bit in the service bit flow, and the service bit flow carries the fine granularity service. For example, T1 is the moment at which the first communication apparatus receives the specific bit in the service bit flow, and T2 is the moment at which the first communication apparatus sends the FGU slot data that carries the specific bit.

Optionally, the first communication apparatus periodically records a sending moment based on a quantity of pieces of FGU slot data, and the sending moment is used as T2. For example, each time the first communication apparatus sends 1000 pieces of FGU slot data, the first communication apparatus records a sending moment (for example, a sending moment of the 1001st piece of FGU slot data), and the sending moment is used as T2.

Optionally, when sending the FGU slot data, the first communication apparatus records a sending moment each time one or more pieces of FGU slot data are sent. Then, a sending moment is periodically selected as T2. For example, each time the first communication apparatus sends one piece of FGU slot data, the first communication apparatus records a sending moment. The first communication apparatus determines a moment at an interval of 1000 sending moments as T2.

When the first communication apparatus is used in the intermediate node:

Optionally, T2 is a moment at which the first communication apparatus sends the 1st egress slot location of the fine granularity service, that is, a moment at which the first communication apparatus sends the 1st egress slot location that carries the fine granularity service, or a moment at which the first communication apparatus sends the 1st piece of FGU slot data. It may be understood that the first communication apparatus may alternatively select a sending moment of another egress slot location as T2. For example, T2 is a moment at which the first communication apparatus sends the 10th egress slot location of the fine granularity service, T2 is a moment at which the first communication apparatus sends the 50th egress slot location of the fine granularity service, or T2 is a moment at which the first communication apparatus sends the 100th egress slot location of the fine granularity service. This is not limited herein.

Optionally, the first communication apparatus periodically records a sending moment based on a slot quantity of sent egress slot locations (FGU slots), and the sending moment is used as T2. For example, each time the first communication apparatus sends 1000 egress slot locations (FGU slots), the first communication apparatus records a sending moment (for example, a sending moment of the 1001st piece of FGU slot data), and the sending moment is used as T2.

Further, the first communication apparatus may select associated T1 and T2 to calculate the first transmission delay. The first transmission delay indicates the transmission delay of the fine granularity service in the first communication apparatus.

For example, T1 is a receiving moment of a specific bit, and T2 is a sending moment of FGU slot data carrying the specific bit.

For another example, T1 is a receiving moment of FGU slot data carrying a specific bit, and T2 is a sending moment of the FGU slot data carrying the specific bit.

For another example, T1 is a receiving moment of the 100th bit in the service bit flow, and T2 is a sending moment of the 100th bit in the service bit flow.

For another example, T1 is the 50th receiving moment, and T2 is the 50th sending moment.

Because the first communication apparatus may be specifically used in the source node or the intermediate node (the scenario shown in FIG. 7), the following separately provides descriptions with reference to the accompanying drawings.

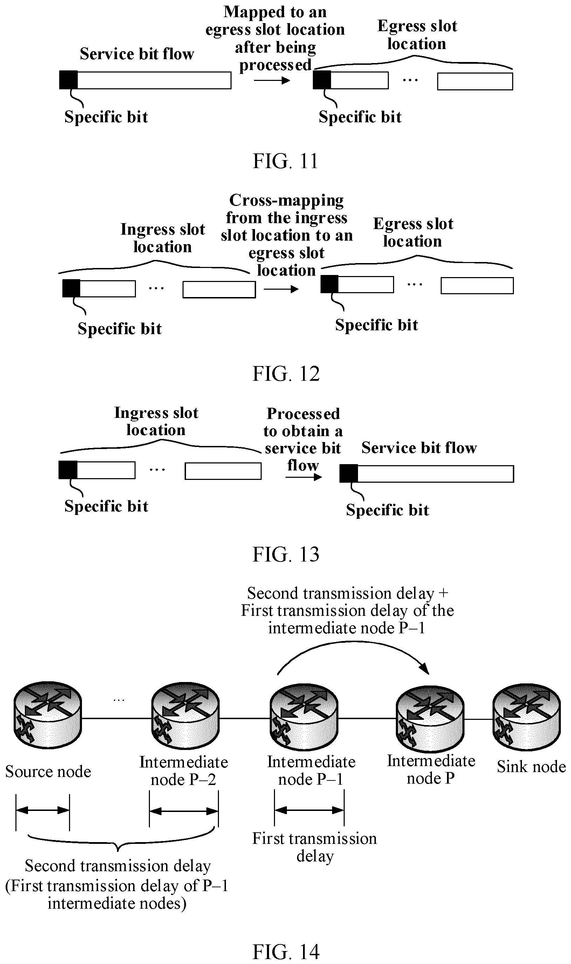

For example, (A) when the first communication apparatus is used in the source node, to facilitate understanding of how the source node determines a transmission delay of the fine granularity service in the source node, refer to FIG. 11. FIG. 11 is a schematic diagram of the specific bit in the service bit flow according to an embodiment of this application.

The service bit flow carries the fine granularity service, and the 1st bit of the service bit flow is set as the specific bit. When the source node receives the 1st bit of the service bit flow, the source node records a receiving moment of the 1st bit, where the receiving moment is used as T1. Then, the source node processes the service bit flow (for example, FIG. 4A and FIG. 4B and FIG. 5), and maps the service bit flow to an egress slot location. The source node sends the FGU slot data at the egress slot location through a physical interface.

For example, (B) when the first communication apparatus is used in the intermediate node, to facilitate understanding of how the intermediate node determines a transmission delay of the fine granularity service in the intermediate node, refer to FIG. 12. FIG. 12 is a schematic diagram of the specific bit in the service bit flow according to an embodiment of this application.

After the intermediate node receives the FGU slot data at an ingress slot location through a physical interface, the intermediate node maps the ingress slot location to an egress slot location based on a slot cross-configuration table. The slot cross-configuration table indicates a mapping rule from the ingress slot location to the egress slot location of the intermediate node. Then, the intermediate node sends the FGU slot data at the egress slot location through a physical interface. In the foregoing procedure, the intermediate node records a moment of receiving the FGU slot data (carrying the specific bit) at the ingress slot location, and the moment is used as T1. The intermediate node records a moment of sending the FGU slot data (carrying the specific bit) at the egress slot location, and the moment is used as T2.

902. The first communication apparatus sends the first transmission delay to a second communication apparatus, where the first transmission delay indicates the transmission delay of the fine granularity service in the first communication apparatus.

In this embodiment, after the first communication apparatus determines the first transmission delay, the first communication apparatus sends the first transmission delay to the second communication apparatus, so that the second communication apparatus obtains the first transmission delay.

The following describes, for different scenarios, a specific solution in which the first communication apparatus sends the first transmission delay to the second communication apparatus.

For the solution (1.1), when the first communication apparatus is used in the source node and/or the intermediate node, and the second communication apparatus is used in a sink node, the first communication apparatus receives a second transmission delay from a previous-hop node, where the second transmission delay indicates a transmission delay of the fine granularity service from the source node to the previous-hop node. Specifically, when the previous-hop node is another intermediate node, the second transmission delay indicates the transmission delay of the fine granularity service from the source node to the previous-hop node. The first communication apparatus sends the first transmission delay and the second transmission delay to a next-hop node.

In this embodiment of this application, for ease of differentiation, the transmission delay in the first communication apparatus is classified into the first transmission delay and the second transmission delay. A transmission delay of a node corresponding to the first communication apparatus is referred to as the first transmission delay, and a transmission delay from the previous-hop node is referred to as the second transmission delay.

Optionally, the first communication apparatus sends the first transmission delay to the second communication apparatus by using a delay collection message. After receiving the delay collection information from the previous-hop node, the first communication apparatus adds, to the delay collection message, the first transmission delay obtained through measurement by the first communication apparatus. When an upstream of the first communication apparatus further includes another node, the first communication apparatus receives the delay collection message from the previous-hop node, where the delay collection message includes the second transmission delay. Then, the first communication apparatus updates the delay collection message, where the updated delay collection message includes the first transmission delay and the second transmission delay. The first communication apparatus sends the updated delay collection message to the second communication apparatus (or another downstream node).

For example, the delay collection message has a plurality of possible implementations, including but not limited to a message (message), a packet, a newly added field of a packet header, bit information (including a plurality of bits), type length value (type length value, TLV) information, or the like.

Optionally, the delay collection message further includes the path information, where the path information indicates a transmission path of the delay collection message. The path information includes forwarding information of one or more nodes. For example, the forwarding information includes but is not limited to: a port number of the previous-hop node and/or the next-hop node, a media access control (Media Access Control, MAC) address of the previous-hop node and/or the next-hop node, an internet protocol (Internet Protocol, IP) address of the previous-hop node and/or the next-hop node, a fine granularity channel (channel) number of the previous-hop node and/or the next-hop node, or the like.

A node indicated by the path information needs to add a first transmission delay of the node to the delay collection message. The first communication apparatus determines a destination node (that is, the next-hop node that receives the delay collection message) based on the path information. Then, the first communication apparatus sends the delay collection message to the destination node, where the delay collection message carries the first transmission delay of the first communication apparatus. After the destination node receives the delay collection message, the destination node adds a first transmission delay of the destination node to the delay collection message. The destination node determines, based on the indication of the path information, a next-hop node that receives the updated delay collection message. Then, the destination node sends the updated delay collection message to the next-hop node.

Optionally, for the first communication apparatus that receives the delay collection message, whether to process the delay collection message is determined by detecting whether address information of the first communication apparatus matches address information included in the path information. If the address information matches, the first communication apparatus adds the first transmission delay of the first communication apparatus to the delay collection message; or if the address information does not match, the first communication apparatus directly forwards the delay collection message, the first communication apparatus discards the delay collection message, or the first communication apparatus determines the next-hop node based on the indication of the path information, and then the first communication apparatus forwards the delay collection message to the next-hop node.

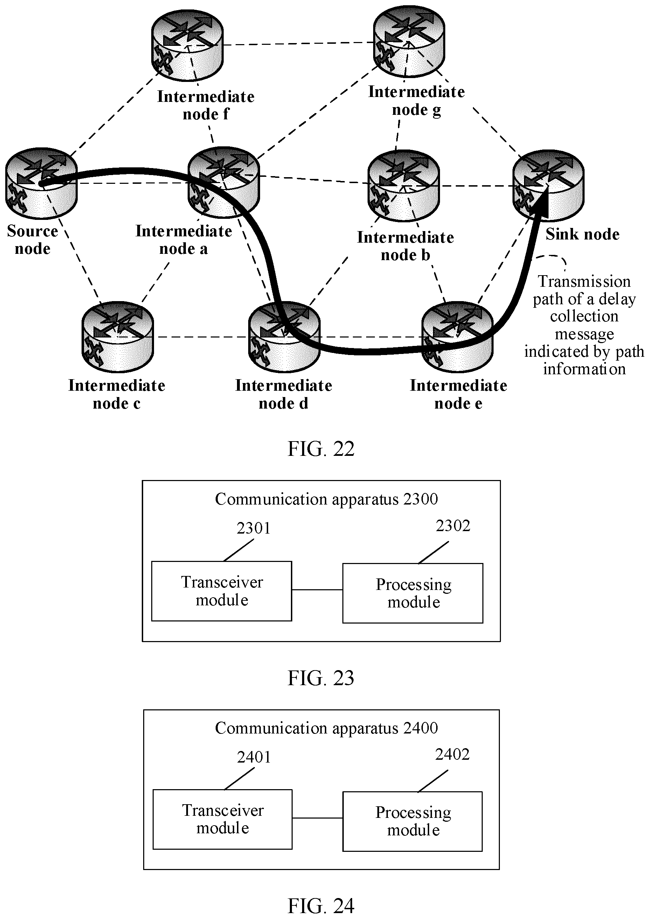

For ease of understanding, refer to FIG. 22. FIG. 22 is a schematic diagram of forwarding the delay collection message according to an embodiment of this application. A scenario shown in FIG. 22 includes a source node, an intermediate node a to an intermediate node g, and a sink node. For example, the path information included in the delay collection message is shown in Table 1.

**Table 1**

| Node | Address information (port number) |
|---|---|
| Intermediate node a | AAA |
| Intermediate node d | DDD |
| Intermediate node e | EEE |

## EP 4 507 221 A1

(continued)

| Node | Address information (port number) |
|---|---|
| Sink node | SSS |

After obtaining a first transmission delay of the source node, the source node adds the first transmission delay of the source node to a delay collection message. Then, the source node sends the delay collection message to another downstream node.

For the intermediate node f, because a port number of the intermediate node f does not match the path information, the intermediate node f directly discards a received delay collection message. For the intermediate node c, because a port number of the intermediate node c does not match the path information, the intermediate node c directly discards a received delay collection message.

For the intermediate node a, because a port number (AAA) of the intermediate node a matches the path information, the intermediate node a updates a delay collection message. A specific update manner is as follows: adding a first transmission delay of the intermediate node a to a delay collection message. Then, the intermediate node a sends an updated delay collection message to another downstream node. By analogy, a delay collection message received by the sink node includes the first transmission delay of the source node, the first transmission delay of the intermediate node a, a first transmission delay of the intermediate node d, and a first transmission delay of the intermediate node e.

Optionally, the second transmission delay includes a transmission delay corresponding to each node that the fine granularity service passes through when being transmitted from the source node to the previous-hop node. For example, for an intermediate node n-1, where n is a positive integer greater than 2, a second transmission delay sent by the intermediate node n-1 to an intermediate node n includes a sum of first transmission delays of first n nodes (n-1 nodes in total from the source node to an intermediate node n-2). For example, n=3, the first transmission delay of the source node is 5 milliseconds, a first transmission delay of an intermediate node 1 is 2 milliseconds, and a first transmission delay of an intermediate node 2 is 3 milliseconds. The intermediate node 3 receives a second transmission delay {5, 2} from the intermediate node 1, where "5" indicates that a transmission delay of the fine granularity service in the source node is 5 milliseconds, and "2" indicates that a transmission delay of the fine granularity service in the intermediate node 1 is 2 milliseconds.

Optionally, the second transmission delay includes a sum of transmission delays corresponding to all nodes that the fine granularity service passes through when being transmitted from the source node to the previous-hop node. For example, n=3, the first transmission delay of the source node is 5 milliseconds, a first transmission delay of an intermediate node 1 is 2 milliseconds, and a first transmission delay of an intermediate node 2 is 3 milliseconds. A second transmission delay received by an intermediate node 3 from the intermediate node 2 is "7", where "7" indicates that a sum of transmission delays of the fine granularity service transmitted from the source node to the intermediate node 1 is 7 milliseconds, to be specific, a sum of the first transmission delay of the source node and the first transmission delay of the intermediate node 1 is 7 milliseconds.

For ease of understanding, refer to FIG. 14. FIG. 14 is a schematic diagram of a transmission delay scenario according to an embodiment of this application. The scenario shown in FIG. 14 includes a source node, P intermediate nodes, and a sink node, where P is a positive integer greater than 3. After obtaining a first transmission delay of the source node, the source node sends the first transmission delay to a next-hop node (for example, an intermediate node 1).

After the intermediate node 1 obtains a second transmission delay (that is, the first transmission delay of the source node) from the source node, the intermediate node 1 sends a first transmission delay of the intermediate node 1 and the second transmission delay from the source node to a next-hop node (for example, an intermediate node 2).

After the intermediate node 2 obtains a second transmission delay from the intermediate node 1 (the second transmission delay from the intermediate node 1 includes the first transmission delay of the intermediate node 1 and the first transmission delay of the source node), the intermediate node 2 sends a first transmission delay of the intermediate node 2 and the second transmission delay from the intermediate node 1 to a next-hop node (for example, an intermediate node 3).

By analogy, as shown in FIG. 14, a second transmission delay sent by an intermediate node P-1 to an intermediate node P includes first transmission delays of P-1 nodes in total from the source node to an intermediate node P-2. After receiving a second transmission delay from a previous-hop node (an intermediate node P-1), the intermediate node P-1 sends the second transmission delay and a first transmission delay of the intermediate node P-1 to the intermediate node P.

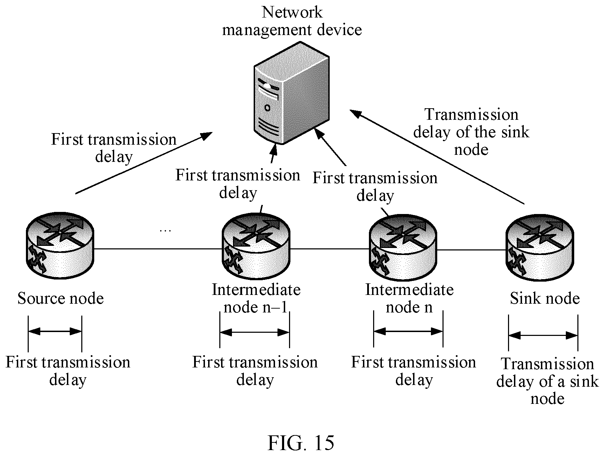

For the solution (1.2), when the first communication apparatus is used in the source node and/or the intermediate node, and the second communication apparatus is used in a sink node or a network management device, refer to FIG. 15. FIG. 15 is a schematic diagram of another transmission delay scenario according to an embodiment of this application. The scenario shown in FIG. 15 includes a source node, n intermediate nodes, a sink node, and a network management device.

The network management device is connected to the source node, the n intermediate nodes, and the sink node, and the network management device is responsible for managing and controlling the foregoing nodes, where n is a positive integer greater than 1. Each node reports a transmission delay of the fine granularity service in the node to the network management device. For example, as shown in FIG. 15, after obtaining a first transmission delay through measurement, the source node reports the first transmission delay of the source node to the network management device; after obtaining a first transmission delay through measurement, an intermediate node n-1 reports the first transmission delay of the intermediate node n-1 to the network management device; after obtaining a first transmission delay through measurement, an intermediate node n reports the first transmission delay of the intermediate node n to the network management device; and after obtaining a transmission delay of the sink node through measurement, the sink node reports the transmission delay of the sink node to the network management device.

Optionally, the second communication apparatus (the network management device) establishes communication connections to the source node, the intermediate node, and the sink node based on the network configuration protocol (Network Configuration Protocol, NETCONF). It should be noted that, in this embodiment of this application, the second communication apparatus (the network management device) may alternatively establish communication connections to the source node, the intermediate node, and the sink node based on another protocol. This is not limited herein.

903. The second communication apparatus obtains a transmission delay of the fine granularity service in a sink node.

In this embodiment, when the second communication apparatus is used in the sink node, the second communication apparatus detects and determines a transmission delay of the fine granularity service in the second communication apparatus; and when the second communication apparatus is used in a network management device, the second communication apparatus obtains, from the sink node, a transmission delay of the fine granularity service in the sink node.

For example, when the second communication apparatus is used in the sink node, to facilitate understanding of how the sink node determines the transmission delay of the fine granularity service in the sink node, refer to FIG. 13. FIG. 13 is a schematic diagram of the specific bit in the service bit flow according to an embodiment of this application. The sink node receives, at an ingress slot location, a slot that carries the fine granularity service. In other words, the sink node receives the FGU slot data. In the foregoing process, when the FGU slot data received by the sink node includes the specific bit, the sink node records a moment at which the FGU slot data including the specific bit is received. Then, the sink node processes the FGU slot data to obtain the service bit flow (for example, FIG. 4A and FIG. 4B and FIG. 5). When the sink node sends the service bit flow, the sink node records a moment at which the specific bit in the service bit flow is sent. The sink node determines the transmission delay of the fine granularity service in the sink node based on the moment at which the FGU slot data that carries the specific bit is received and the moment at which the specific bit in the service bit flow is sent.

For another example, the second communication apparatus obtains the transmission delay of the fine granularity service in the sink node through calculation in the following manner, including:

$$\mathrm{Node'_{delay}} = \mathrm{T4} - \mathrm{T3}.$$

$\mathrm{Node'_{delay}}$ is the transmission delay of the fine granularity service in the sink node, T3 is a third moment, the third moment is a moment at which the sink node receives the FGU slot data, the FGU slot data carries a specific bit in a service bit flow of the fine granularity service, T4 is a fourth moment, the fourth moment is a moment at which the sink node decapsulates a service container carried in the FGU slot data (the FGU slot data includes the specific bit), and the service container carries the specific bit.

Optionally, T3 is the moment at which the sink node receives the slot data that carries the fine granularity service. The FGU slot data carries data corresponding to the fine granularity service. In other words, T3 may also be referred to as the moment at which the sink node receives the FGU slot data. It should be noted that, for example, T3 is a moment at which the sink node receives the 1st piece of FGU slot data, or T3 is a moment at which the sink node receives the 50th piece of FGU slot data. This is not limited herein.

Optionally, T3 is the moment at which the sink node receives, at the ingress slot location, the FGU slot data that carries the specific bit in the service bit flow, and the service bit flow carries the fine granularity service. For example, T1 is the moment at which the sink node receives the specific bit in the service bit flow, and T3 is the moment at which the sink node receives the FGU slot data that carries the specific bit.

Optionally, the sink node periodically records a receiving moment based on a quantity of received ingress slot locations (FGU slots), and the receiving moment is used as T3. For example, each time the sink node receives 1000 pieces of FGU slot data, the first communication apparatus records a receiving moment (for example, a receiving moment of the 1001st piece of FGU slot data), and the receiving moment is used as T3.

Optionally, when receiving the FGU slot data at the ingress slot location, the sink node records a receiving moment each time one or more pieces of FGU slot data are received. Then, a receiving moment is periodically selected as T3. For example, each time the sink node receives one piece of FGU slot data, a receiving moment is recorded. The sink node determines a receiving moment at an interval of 1000 receiving moments as T3.

Optionally, T4 is a moment at which the sink node sends the specific bit in the service bit flow that carries the fine granularity service. For example, the 1st bit in the service bit flow is selected as the specific bit. When the sink node sends the 1st bit in the service bit flow, the sink node records a sending moment at which the 1st bit is sent. The sending moment of the 1st bit is used as T4. The specific bit may be selected according to an actual situation. For example, the specific bit may be the 1st bit, the 100th bit, the 200th bit, the 500th bit, and/or the 1000th bit of the service bit flow.

Optionally, the sink node periodically records a sending moment based on a quantity of bits of the sent service bit flow, and the sending moment is used as T4. For example, each time the sink node sends 1000 bits, the sink node records a sending moment (for example, a sending moment of the 1001st bit), and the sending moment is used as T4.

Optionally, when the sink node sends the service bit flow, a sending moment is recorded at an interval of one or more bits. Then, a sending moment is periodically selected as T4. For example, each time the sink node sends one bit, a sending moment is recorded. The sink node determines a moment at an interval of 1000 sending moments as T4.

When the second communication apparatus is used in the network management device, the network management device configures, for the source node, the intermediate node, and the sink node, a path for reporting a transmission delay, for example, performs configuration based on the NETCONF protocol. Then, the network management device obtains a transmission delay of the fine granularity service in each node from the source node, the intermediate node, and the sink node.

904. The second communication apparatus determines a delay compensation value based on an end-to-end target delay, the first transmission delay, and the transmission delay of the fine granularity service in the sink node.

In this embodiment, the second communication apparatus obtains the end-to-end target delay, where the end-to-end target delay is greater than or equal to a larger one of the following two transmission delay values: a service transmission delay value in a first direction or a service transmission delay value in a second direction, where the first direction is from the source node to the sink node, and the second direction is from the sink node to the source node.

The end-to-end target delay may be preconfigured in the second communication apparatus, or may be obtained through calculation based on the transmission delay value in the first direction and the transmission delay value in the second direction that are actually obtained through measurement. This is not limited herein. For example, if the transmission delay value in the first direction is 500 milliseconds, and the transmission delay value in the second direction is 450 milliseconds, the end-to-end target delay is set to 500 milliseconds.

Then, the second communication apparatus determines the delay compensation value based on the end-to-end target delay, the first transmission delay, and the transmission delay of the fine granularity service in the sink node. For example, the second communication apparatus obtains the delay compensation value through calculation in the following manner, including:

$$\Delta = \text{Target}_{delay1} - \sum_{i=1}^{n} \text{Node}_{delay}i - \text{Node}'_{delay}.$$

$\Delta$ is the delay compensation value, $\text{Target}_{delay1}$ is the end-to-end target delay, $\sum_{i=1}^{n} \text{Node}_{delay}i$ is the first transmission delay of the first n hops of first communication apparatuses, the first communication apparatus is used in the source node or an intermediate node, n is a quantity of nodes of the source node and the intermediate node, and $\text{Node}'_{delay}$ is the transmission delay of the fine granularity service in the sink node.

When the second communication apparatus is used in the sink node, step 905 is performed. When the second communication apparatus is used in the network management device, the second communication apparatus (the network management device) sends the delay compensation value to the sink node, and the sink node performs delay compensation on the fine granularity service based on the delay compensation value. A specific compensation method is similar to step 905.

905. The second communication apparatus performs delay compensation on the fine granularity service based on the delay compensation value.

In this embodiment, after the second communication apparatus (the sink node) receives the FGU slot data at the ingress slot location, the second communication apparatus demaps the FGU slot data to obtain the service container, where the service container carries the service bit flow of the fine granularity service; then the second communication apparatus decapsulates the service container to obtain the service slice, where the service slice carries the fine granularity service; the second communication apparatus stores the service slice in the memory. When the residence time of the service slice in the memory reaches the delay compensation value, the second communication apparatus extracts the service slice from the memory; the second communication apparatus reassembles the service bit flow based on a plurality of service slices; and the second communication apparatus sends the service bit flow.

Specifically, the second communication apparatus stores the obtained service slice in the memory. The memory may be a memory located in the second communication apparatus, or the memory may be a memory independent of the second communication apparatus. This is not limited herein. After the second communication apparatus stores the service slice in the memory, the second communication apparatus starts a timer. When time of the timer reaches the delay compensation value, it means that the residence time of the service slice in the memory reaches the delay compensation value. The second communication apparatus extracts the service slice from the memory, and then performs service reassembling based on the plurality of service slices, to obtain the corresponding service bit flow. The second communication apparatus sends the service bit flow over a physical interface, to implement delay compensation on the fine granularity service.

In this embodiment of this application, a transmission delay of the fine granularity service in each node is collected, and then an end-to-end delay compensation value is obtained through calculation based on an end-to-end target delay. In a sink node, a service slice corresponding to the fine granularity service is buffered. When residence time of the service slice reaches the end-to-end delay compensation value, the sink node extracts the service slice from a buffer, performs reassembly to obtain a service bit flow, and then sends the service bit flow. According to the foregoing method, end-to-end delay compensation is implemented, and it is ensured that the service bit flow sent by the sink node meets a delay compensation requirement, to ensure that a network transmission delay from the source node to the sink node and a network transmission delay from the sink node to the source node in a fine granularity service network are equal or meet an expected error range, or that the network transmission delay from the source node to the sink node and the network transmission delay from the sink node to the source node are adjusted to an expected value, to meet a service requirement. For example, when the delay compensation method provided in embodiments of this application is applied to a power grid system, it can be ensured that information collection moments of any two terminal devices are consistent, thereby improving accuracy of performing a relay protection service by a power system. A terminal device in the power grid system includes but is not limited to a relay protection apparatus, a power management unit, a data transmission unit, a meter, a switch, a power generation apparatus, a power transformation apparatus, or the like. Information collected by each terminal device in the power grid system includes but is not limited to: a voltage, a current, or a voltage frequency.

With reference to the foregoing embodiments, the following describes in detail (1.1) that the network management device does not participate in delay compensation and (1.2) that the network management device participates in delay compensation.

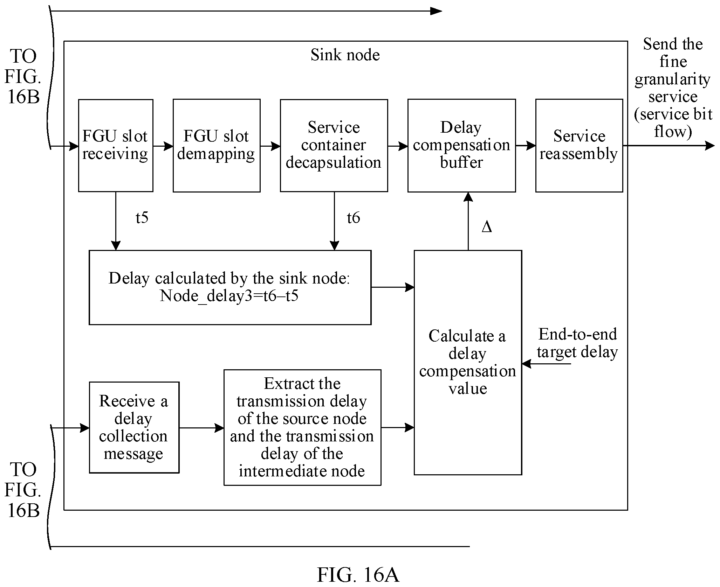

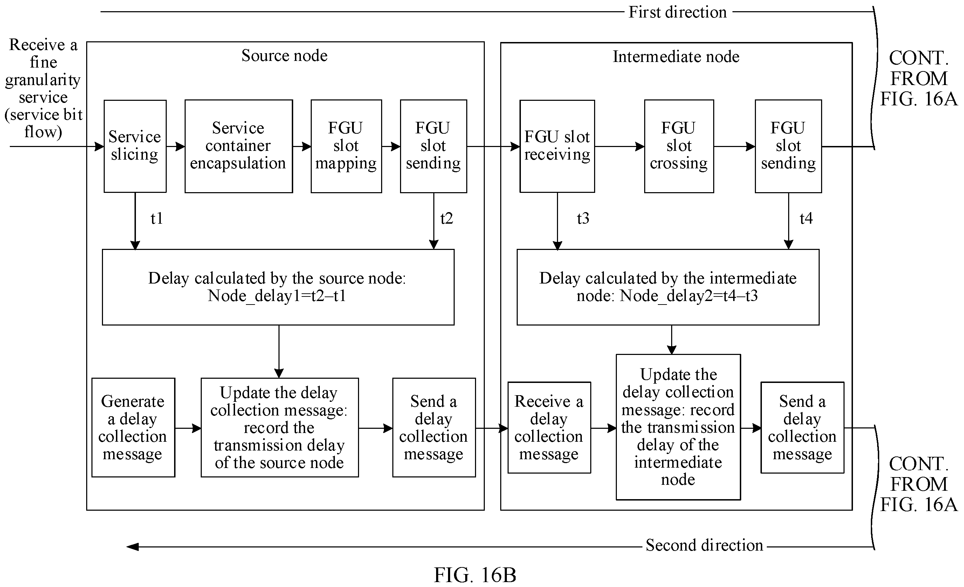

First, (1.1) the network management device does not participate in delay compensation. Refer to FIG. 16A and FIG. 16B. FIG. 16A and FIG. 16B are a schematic diagram of an application scenario according to an embodiment of this application.

After the source node receives the service bit flow, the source node processes the service bit flow and maps the service bit flow to the egress slot location, including: The service bit flow is sliced to obtain a plurality of service slices. Then the service slice is encapsulated to obtain a service container. The service container is mapped to the egress slot location. Specifically, the source node maps the service container to a block flow. Then, the block flow is segmented to obtain an FGU slot data. Finally, the source node sends the FGU slot data at the egress slot location through an ethernet interface or a flexible ethernet client (flexible ethernet client, FlexE Client) interface. In this embodiment of this application, slot data that carries a fine granularity service is referred to as FGU slot data.

In the foregoing procedure, the source node records a first moment (t1) of the source node and a second moment (t2) of the source node, and then the source node determines a first transmission delay (Node_delay1=t2-t1) of the source node based on the first moment and the second moment. The source node updates a generated delay collection message based on the first transmission delay of the source node. An updated delay collection message records the first transmission delay of the source node. Then, the source node sends the updated delay collection message to a next-hop node (an intermediate node).

After the intermediate node receives the FGU slot data at an ingress slot location through a physical interface, the intermediate node maps the ingress slot location to an egress slot location based on a slot cross-configuration table. The slot cross-configuration table indicates a mapping rule from the ingress slot location to the egress slot location of the intermediate node. Then, the intermediate node sends the FGU slot data at the egress slot location through a physical interface.

In the foregoing procedure, the intermediate node records a first moment (t3) of the intermediate node and a second moment (t4) of the intermediate node, and then the intermediate node determines a first transmission delay (Node_delay2=t4-t3) of the intermediate node based on the first moment and the second moment. The intermediate node updates the delay collection message from the previous-hop node based on the first transmission delay of the intermediate node. An updated delay collection message records the first transmission delay of the intermediate node. Then, the intermediate node sends the updated delay collection message to a next-hop node.

The sink node receives the FGU slot data at an ingress slot location through a physical interface. Then, the sink node performs demapping processing on the FGU slot data to obtain the corresponding service container. Further, the sink node performs decapsulation processing on the service container, to obtain the corresponding service slice. The sink node buffers the service slice in a memory and waits for delay compensation.

In the foregoing procedure, the sink node records a third moment (t5) and a fourth moment (t6), and then the sink node calculates a transmission delay (Node_delay3=t6-t5) of the fine granularity service in the sink node based on the third moment and the fourth moment. The sink node obtains a transmission delay of the fine granularity service from the source node to a previous-hop node by using a delay collection message from the previous-hop node. The sink node obtains an end-to-end target delay. Finally, the sink node calculates a delay compensation value based on the first transmission delay (Node_delay1) of the source node, the first transmission delay (Node_delay2) of the intermediate node, the transmission delay (Node_delay3) of the fine granularity service in the sink node, and the end-to-end target delay. After residence time of the service slice in the memory of the sink node reaches the delay compensation value, the sink node extracts the service slice. Then, the sink node performs service reassembling based on a plurality of service slices to obtain a service bit flow. Finally, the sink node sends the service bit flow through a physical interface.

According to the foregoing method, it is ensured that the service bit flow sent by the sink node meets a delay compensation requirement, to ensure that a network transmission delay from the source node to the sink node and a network transmission delay from the sink node to the source node in a fine granularity service network are equal or meet an expected error range, or that the network transmission delay from the source node to the sink node and the network transmission delay from the sink node to the source node are adjusted to an expected value, to meet a service requirement.

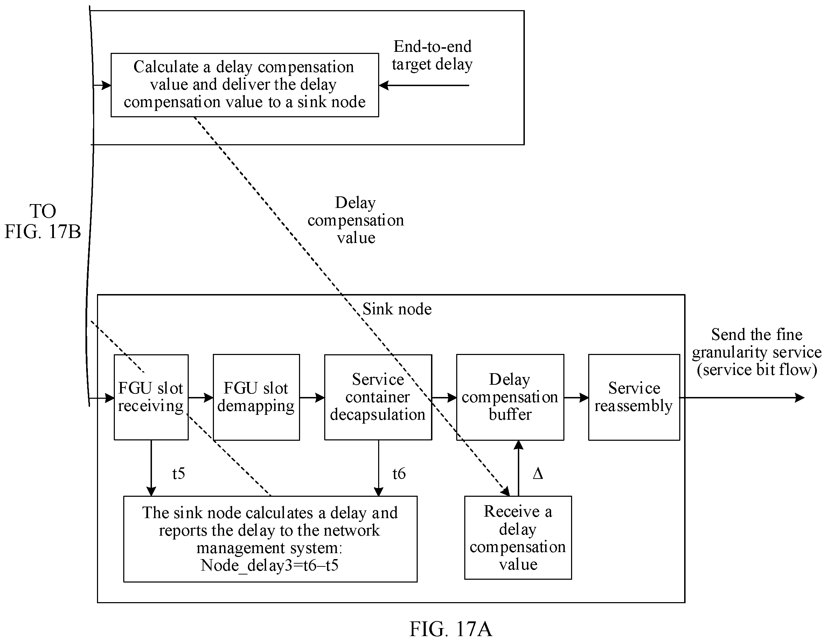

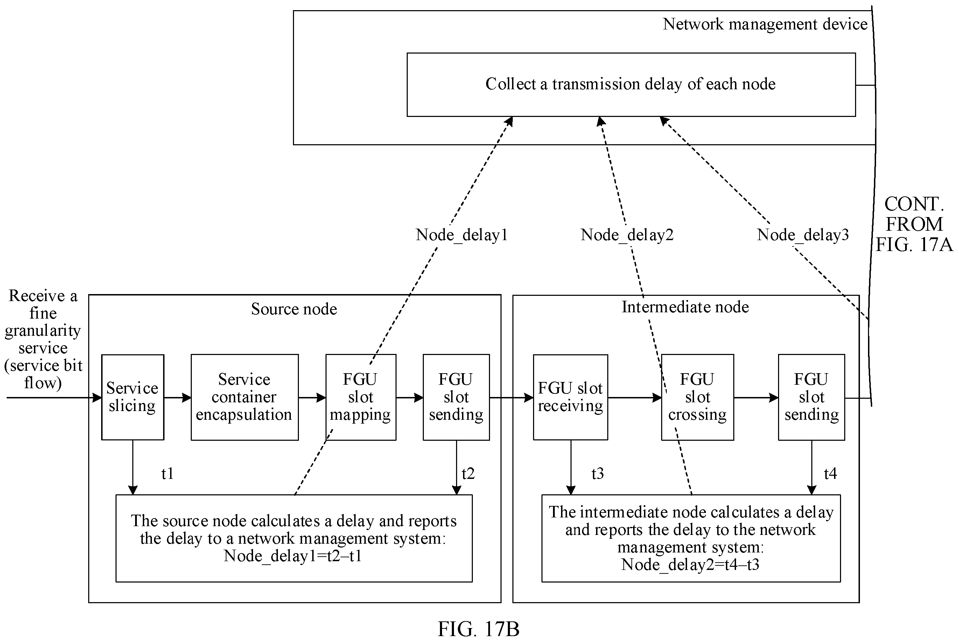

(1.2) The network management device participates in delay compensation. Refer to FIG. 17A and FIG. 17B. FIG. 17A and FIG. 17B are a schematic diagram of another application scenario according to an embodiment of this application.

After the source node receives the service bit flow, the source node processes the service bit flow and maps the service bit flow to the egress slot location, including: The service bit flow is sliced to obtain a plurality of service slices. Then the service slice is encapsulated to obtain a service container. The service container is mapped to the egress slot location. Specifically, the source node maps the service container to a block flow. Then, the block flow is segmented to obtain an FGU slot data. Finally, the source node sends the FGU slot data at the egress slot location through an ethernet interface or a flexible ethernet client (flexible ethernet client, FlexE Client) interface. In this embodiment of this application, slot data that carries a fine granularity service is referred to as FGU slot data.

In the foregoing procedure, the source node records a first moment (t1) of the source node and a second moment (t2) of the source node, and then the source node determines a first transmission delay (Node_delay1=t2-t1) of the source node based on the first moment and the second moment. The source node uploads the first transmission delay of the source node to a network management device.

After the intermediate node receives the FGU slot data at an ingress slot location through a physical interface, the intermediate node maps the ingress slot location to an egress slot location based on a slot cross-configuration table. The slot cross-configuration table indicates a mapping rule from the ingress slot location to the egress slot location of the intermediate node. Then, the intermediate node sends the FGU slot data at the egress slot location through a physical interface.

In the foregoing procedure, the intermediate node records a first moment (t3) of the intermediate node and a second moment (t4) of the intermediate node, and then the intermediate node determines a first transmission delay (Node_delay2=t4-t3) of the intermediate node based on the first moment and the second moment. The intermediate node uploads the first transmission delay of the intermediate node to the network management device.

The sink node receives the FGU slot data at an ingress slot location through a physical interface. Then, the sink node performs demapping processing on the FGU slot data to obtain the corresponding service container. Further, the sink node performs decapsulation processing on the service container, to obtain the corresponding service slice. The sink node buffers the service slice in a memory and waits for delay compensation.

In the foregoing procedure, the sink node records a third moment (t5) and a fourth moment (t6), and then the sink node calculates a transmission delay (Node_delay3=t6-t5) of the fine granularity service in the sink node based on the third moment and the fourth moment.

Optionally, the sink node uploads Node_delay3 to the network management device. The network management device calculates a delay compensation value based on Node_delay1, Node_delay2, Node_delay3, and an end-to-end target delay. Then, the sink node receives the delay compensation value, and the sink node performs delay compensation based on the delay compensation value. A specific delay compensation method is similar to the method shown in FIG. 16A and FIG. 16B. Details are not described herein again.

Optionally, after generating Node_delay3, the sink node requests the network management device to deliver Node_delay1 and Node_delay2. The sink node calculates a delay compensation value based on Node_delay1, Node_delay2, Node_delay3, and an end-to-end target delay. Then, the sink node performs delay compensation based on the delay compensation value. In this possible implementation, the end-to-end target delay may be configured by the network management device, or may be preconfigured. This is not limited herein.

According to the foregoing method, it is ensured that the service bit flow sent by the sink node meets a delay compensation requirement, to ensure that a network transmission delay from the source node to the sink node and a network transmission delay from the sink node to the source node in a fine granularity service network are equal or meet an expected error range, or that the network transmission delay from the source node to the sink node and the network transmission delay from the sink node to the source node are adjusted to an expected value, to meet a service requirement.

Next, (2) of the node-by-node delay compensation is described. Refer to FIG. 10. FIG. 10 is a schematic diagram of an embodiment of a delay compensation method according to an embodiment of this application. The delay compensation method provided in this embodiment of this application includes the following steps.

1001, A communication apparatus determines a transmission delay of a fine granularity service in the communication apparatus.

In this embodiment, the communication apparatus determines the transmission delay of the fine granularity service in the communication apparatus (that is, a node corresponding to the communication apparatus).

Specifically, when the communication apparatus is used in a source node, the communication apparatus obtains a first receiving moment, where the first receiving moment is a moment at which the source node receives a specific bit in a service bit flow that carries the fine granularity service; the communication apparatus obtains a second sending moment, where the second sending moment is a moment at which the source node sends FGU slot data that carries the specific bit; and the communication apparatus subtracts the first receiving moment from the second sending moment, to obtain a transmission delay of the fine granularity service in the source node.

A possible manner in which the communication apparatus obtains the first receiving moment is similar to the foregoing manner in which the source node obtains the first moment, and details are not described herein again. A possible manner in which the communication apparatus obtains the second sending moment is similar to the foregoing manner in which the source node obtains the second moment, and details are not described herein again.

Specifically, when the communication apparatus is used in an intermediate node, the communication apparatus obtains a third receiving moment, where the third receiving moment is a moment at which the intermediate node receives the FGU slot data, and the FGU slot data carries the specific bit in the service bit flow of the fine granularity service; the communication apparatus obtains a fourth sending moment, where the fourth sending moment is a moment at which the intermediate node sends the FGU slot data, and the service bit flow carries the fine granularity service; and the communication apparatus subtracts the third receiving moment from the fourth sending moment, to obtain a transmission delay of the fine granularity service in the intermediate node.

Specifically, the communication apparatus receives the FGU slot data at an ingress slot location. Then, the communication apparatus maps the FGU slot data received at the ingress slot location to an egress slot location based on an indication of a slot cross-mapping table. Finally, the communication apparatus sends the FGU slot data at the egress slot location through a physical interface.

A possible manner in which the communication apparatus obtains the third receiving moment is similar to the foregoing manner in which the intermediate node obtains the first moment, and details are not described herein again. A possible manner in which the communication apparatus obtains the fourth sending moment is similar to the foregoing manner in which the intermediate node obtains the second moment, and details are not described herein again.

Specifically, when the communication apparatus is used in a sink node, the communication apparatus obtains a fifth receiving moment, where the fifth receiving moment is a moment at which the sink node receives the FGU slot data that carries the specific bit in the service bit flow of the fine granularity service; the communication apparatus obtains a sixth sending moment, where the sixth sending moment is a moment at which the sink node decapsulates a service container, the service container is obtained by the communication apparatus by demapping the FGU slot data, and the service container carries the specific bit; and the communication apparatus subtracts the fifth receiving moment from the sixth sending moment, to obtain a transmission delay of the fine granularity service in the sink node.

The communication apparatus demaps the FGU slot data to obtain the service container. Then, the communication apparatus decapsulates the service container to obtain the service slice. In this case, the communication apparatus records a moment at which the service slice is obtained through decapsulation as the sixth sending moment.

A possible manner in which the communication apparatus obtains the fifth receiving moment is similar to the foregoing manner in which the sink node obtains the third moment, and details are not described herein again. A possible manner in which the communication apparatus obtains the sixth sending moment is similar to the foregoing manner in which the intermediate node obtains the fourth moment, and details are not described herein again.

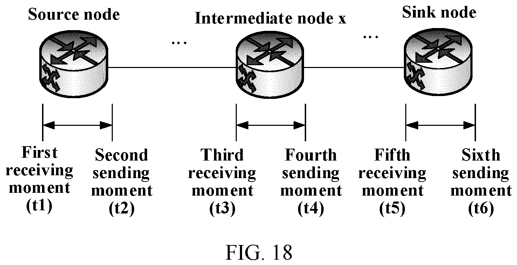

For ease of understanding, refer to FIG. 18. FIG. 18 is a schematic diagram of measuring a transmission delay according to an embodiment of this application. In a communication scenario of a fine granularity service, each node obtains a transmission delay of the fine granularity service in the node itself. In this embodiment of this application, the receiving moment of the fine granularity service in the source node is referred to as the first receiving moment, the sending moment of the fine granularity service in the source node is referred to as the second sending moment, the receiving moment of the fine granularity service in the intermediate node is referred to as the third receiving moment, the sending moment of the fine granularity service in the intermediate node is referred to as the fourth sending moment, the receiving moment of the fine granularity service in the sink node is referred to as the fifth receiving moment, and the sending moment of the fine granularity service in the sink node is referred to as the fifth receiving moment, and the sending moment of the fine granularity service in the sink node is referred to as the sixth sending moment.

1002. The communication apparatus performs delay compensation on the fine granularity service based on a target delay of a node and the transmission delay of the fine granularity service in the communication apparatus.

In this embodiment, after the communication apparatus obtains the transmission delay of the fine granularity service in the communication apparatus, the communication apparatus calculates a delay compensation value of the node based on the target delay of the node and the transmission delay. Then, the communication apparatus performs delay compensation on the fine granularity service in the communication apparatus (a node corresponding to the communication apparatus) based on the delay compensation value of the node, to implement node-by-node delay compensation.

Specifically, the target delay of the node includes: the target delay of the source node, the target delay of the intermediate node, and/or the target delay of the sink node.

Optionally, the target delay of the source node, the target delay of the intermediate node, and the target delay of the sink node meet the following condition: A sum of the target delay of the source node, the target delay of the intermediate node, and the target delay of the sink node is greater than or equal to a larger one of the following two transmission delay values: a service transmission delay value in a first direction or a service transmission delay value in a second direction, where the first direction is from the source node to the sink node, and the second direction is from the sink node to the source node. The service transmission delay value may be a transmission delay value, in a plurality of communication apparatuses between the source node and the sink node, of a service bit flow that carries the fine granularity service.

Optionally, a network management device configures a corresponding target delay for each node. The target delay of the source node may range from 0 to 100 microseconds; the target delay of the intermediate node may range from 10 to 20 microseconds; and the target delay of the sink node may range from 100 to 500 microseconds.

Specifically, when the communication apparatus is used in the source node, that the source node performs delay compensation on the fine granularity service based on the delay compensation value includes: After the source node receives the service bit flow, the source node processes the service bit flow and maps the service bit flow to the egress slot location, including: The service bit flow is sliced to obtain a plurality of service slices. Then the service slice is encapsulated to obtain a service container. The service container is mapped to the egress slot location. Specifically, the source node maps the service container to a block flow. Then, the block flow is segmented to obtain an FGU slot data. The source node stores the FGU slot data in the memory, where the FGU slot data carries the service bit flow of the fine granularity service. When the residence time of the FGU slot data of the source node in the memory reaches the delay compensation value, the source node extracts the FGU slot data of the source node from the memory. The source node sends the FGU slot data of the source node at the egress slot location.

Specifically, when the communication apparatus is used in the intermediate node, that the intermediate node performs delay compensation on the fine granularity service based on the delay compensation value includes: The intermediate node receives the FGU slot data at the ingress slot location, where the FGU slot data carries the service bit flow of the fine granularity service; the intermediate node cross-maps the ingress slot location of the intermediate node to the egress slot location of the intermediate node; the intermediate node stores the FGU slot data in the memory; when the residence time of the FGU slot data in the memory reaches the delay compensation value, the intermediate node extracts the FGU slot data from the memory; and the intermediate node sends the FGU slot data at the egress slot location of the intermediate node.

Specifically, when the communication apparatus is used in the sink node, that the sink node performs delay compensation on the fine granularity service based on the delay compensation value includes: The sink node demaps the FGU slot data to obtain the service container, where the service container carries the service bit flow of the fine granularity service; the sink node decapsulates the service container to obtain the service slice, where the service slice carries the service bit flow of the fine granularity; the sink node stores the service slice in the memory; when the residence time of the service slice in the memory reaches the delay compensation value, the sink node extracts the service slice from the memory; the sink node reassembles the service bit flow based on the plurality of service slices; and the sink node sends the service bit flow.

In this embodiment of this application, it is ensured that a service bit flow sent by each node meets a delay compensation requirement, to ensure that a network transmission delay from the source node to the sink node and a network transmission delay from the sink node to the source node in a fine granularity service network are equal or meet an expected error range, or that the network transmission delay from the source node to the sink node and the network transmission delay from the sink node to the source node are adjusted to an expected value, to meet a service requirement.

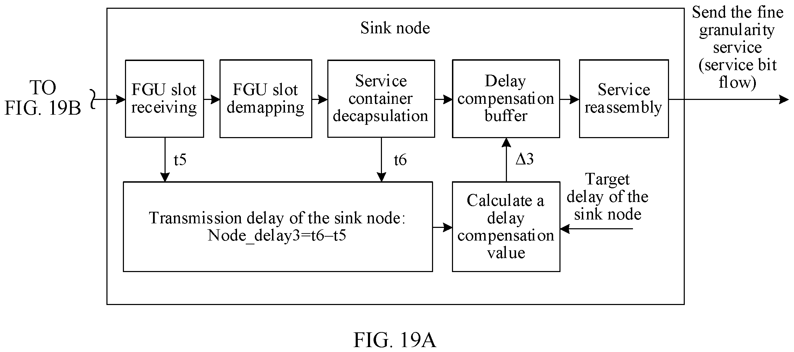

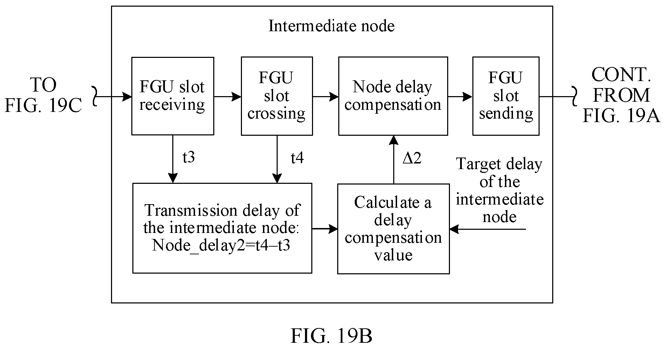

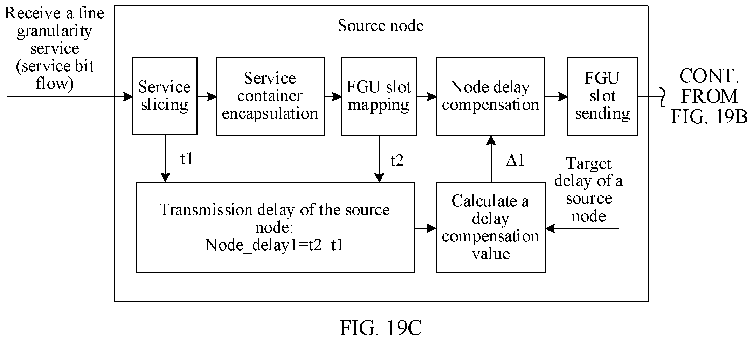

For ease of understanding, the following describes in detail (2) the node-by-node delay compensation with reference to the accompanying drawings. Refer to FIG. 19A to FIG. 19C. FIG. 19A to FIG. 19C are a schematic diagram of another application scenario according to an embodiment of this application.

First, delay compensation on the source node is described.

The service bit flow is sliced to obtain a plurality of service slices. Then the service slice is encapsulated to obtain a service container. The service container is mapped to the egress slot location, where data carried at the egress slot location is FGU slot data. The source node stores the FGU slot data of the source node in the memory, where the FGU slot data of the source node corresponds to the service bit flow of the fine granularity service.

In the foregoing procedure, the source node records the first receiving moment (t1) of the source node and the second sending moment (t2) of the source node, and then the source node determines the transmission delay (Node_delay1=t2-t1) of the fine granularity service in the source node based on the first receiving moment and the second sending moment. Finally, the source node obtains the delay compensation value of the source node through calculation based on the transmission delay of the fine granularity service in the source node and the target delay of the source node.

When the residence time of the FGU slot data of the source node in the memory reaches the delay compensation value of the source node, the source node extracts the FGU slot data of the source node from the memory. The source node sends the FGU slot data of the source node at the egress slot location through a physical interface (for example, an ethernet interface or a flexible ethernet client (flexible ethernet client, FlexE Client) interface).

Second, delay compensation on the intermediate node is described.

Optionally, the intermediate node receives the FGU slot data at the ingress slot location. The intermediate node stores the received FGU slot data in the memory. After the residence time of the FGU slot data in the memory reaches the delay compensation value of the intermediate node, the intermediate node extracts the FGU slot data from the memory. Then, the intermediate node maps the ingress slot location to the egress slot location based on the slot cross-configuration table. Finally, the intermediate node sends the FGU slot data at the egress slot location through the physical interface.

Optionally, the intermediate node receives the FGU slot data at the ingress slot location. The intermediate node maps the ingress slot location to the egress slot location based on the slot cross-configuration table. Then, the intermediate node may store the FGU slot data in the memory. After the residence time of the FGU slot data in the memory reaches the delay compensation value of the intermediate node, the intermediate node extracts the FGU slot data from the memory. Finally, the intermediate node sends the FGU slot data at the egress slot location through the physical interface.

In the foregoing procedure, the intermediate node records the third receiving moment (t3) of the intermediate node and the fourth sending moment (t4) of the intermediate node, and then the intermediate node determines the transmission delay (Node_delay2=t4-t3) of the fine granularity service in the intermediate node based on the third receiving moment and the fourth sending moment. Finally, the intermediate node obtains the delay compensation value of the intermediate node through calculation based on the transmission delay of the fine granularity service in the intermediate node and the target delay of the intermediate node.

Finally, the delay compensation on the sink node is described.

After the sink node receives the FGU slot at the ingress slot location, the sink node performs demapping processing on the FGU slot to obtain the corresponding service container. Then, the sink node performs decapsulation processing on the service container to obtain the service slice. The sink node buffers the service slice in the memory, and waits for delay compensation.

In the foregoing procedure, the sink node records the fifth receiving moment (t5) and the sixth sending moment (t6), and then the sink node calculates the transmission delay (Node_delay3=t6-t5) of the fine granularity service in the sink node based on the fifth receiving moment and the sixth sending moment. The sink node calculates the delay compensation value of the sink node based on the transmission delay (Node_delay3) of the fine granularity service in the sink node and the target delay of the sink node. After residence time of the service slice in the memory of the sink node reaches the delay compensation value of the sink node, the sink node extracts the service slice. Then, the sink node performs service reassembling based on a plurality of service slices to obtain a service bit flow. Finally, the sink node sends the service bit flow through a physical interface.

With reference to the foregoing embodiments, optionally, for the intermediate node, there is still another delay compensation method: A slot identifier of FGU slot data (hereinafter referred to as an ingress slot for short) at an ingress slot location or a slot identifier of FGU slot data (hereinafter referred to as an egress slot) at an egress slot location is obtained through calculation, and then a slot cross-mapping table is adjusted based on the slot identifier of the ingress slot and the slot identifier of the egress slot that are obtained through calculation. In this way, the intermediate node may map, based on an adjusted slot cross-mapping table, FGU slot data received by the intermediate node at the ingress slot location to the egress slot location, to forward the fine granularity service from a previous-hop node to a next-hop node. Forwarding the FGU slot data based on the adjusted slot cross-mapping table can ensure that the FGU slot data forwarded by the intermediate node meets a delay compensation requirement. A specific delay compensation method is as follows:

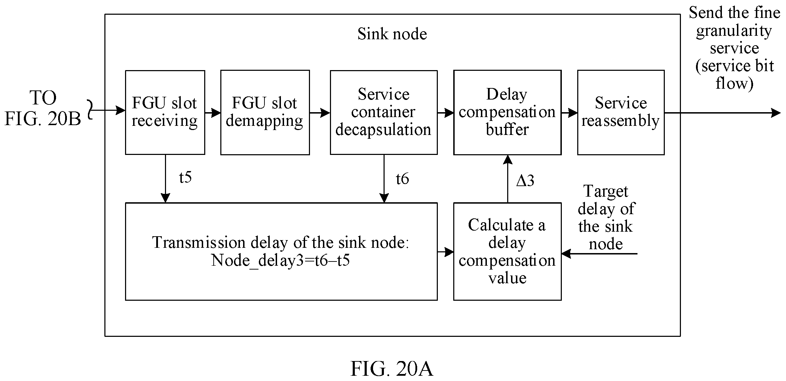

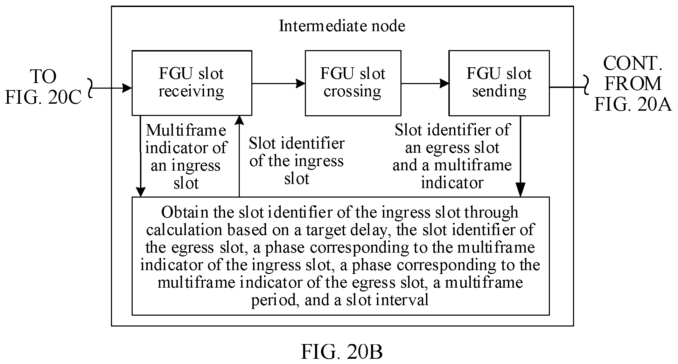

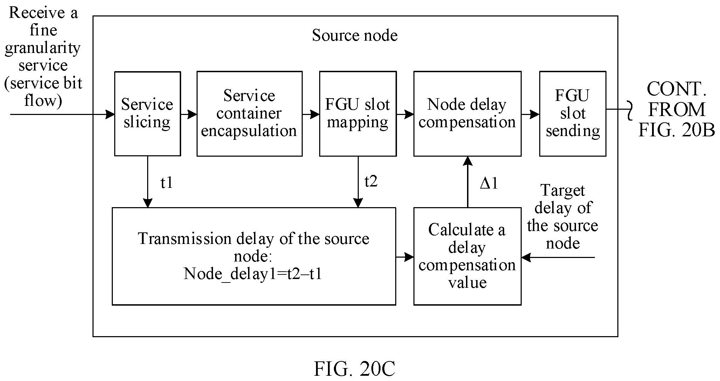

A1. The intermediate node obtains the slot identifier of the ingress slot based on the slot identifier of the egress slot, a multiframe indicator of the ingress slot, and a multiframe indicator of the egress slot. For ease of understanding, refer to FIG. 20A to FIG. 20C. FIG. 20A to FIG. 20C are a schematic diagram of another embodiment of a delay compensation method according to an embodiment of this application. The intermediate node performs delay compensation on the fine granularity service based on the target delay of the node and the transmission delay of the fine granularity service in the intermediate node, including:

The intermediate node obtains the slot identifier of the egress slot, a phase corresponding to the multiframe indicator of the ingress slot, and a phase corresponding to the multiframe indicator of the egress slot, where the ingress slot is a slot that carries the fine granularity service and is received by the intermediate node, and the egress slot is a slot that carries the fine granularity service and is sent by the intermediate node.

The intermediate node calculates the slot identifier of the ingress slot based on the target delay of the node, the slot identifier of the egress slot, the phase corresponding to the multiframe indicator of the ingress slot, the phase corresponding to the multiframe indicator of the egress slot, a multiframe period, and a slot interval, where the multiframe period is a transmission delay of each multiframe in the egress slot or the ingress slot, and the slot interval is a transmission delay of each slot in the egress slot or the ingress slot. For example, a 5G FlexE client interface is used as an example. In this case, the multiframe period is 50.688 microseconds ($\mu$s), and the slot interval is 50.688/480 $\approx$ 0.1056 microseconds.

The intermediate node forwards the fine granularity service from a previous-hop node to a next-hop node based on the slot identifier of the ingress slot and the slot identifier of the egress slot. Specifically, the intermediate node updates an ingress slot table based on the calculated slot identifier of the ingress slot. Subsequently, the intermediate node receives an FGU slot from the previous-hop node in the ingress slot based on an updated ingress slot table. The intermediate node may map the ingress slot (FGU slot) to the egress slot based on the slot cross-configuration table. Finally, the intermediate node maps the egress slot (FGU slot) to a physical interface, and sends the FGU slot to the next-hop node.

For example, the slot identifier of the ingress slot is obtained through calculation in the following manner:

$$\text{RxSlotId} = \frac{\left[\text{Target}_{\text{delay2}} - ((\text{RxMFI} - \text{TxMFI})\%\text{MF period}) - K\right]}{\text{slot time}} - \text{TxSlotId}.$$

RxSlotId is the slot identifier of the ingress slot, $\text{Target}_{\text{delay2}}$ is the target delay of the node, RxMFI is the phase corresponding to the multiframe indicator of the ingress slot, TxMFI is the phase corresponding to the multiframe indicator of the egress slot, MF period is the multiframe period, slot time is the slot interval, TxSlotId is the slot identifier of the egress slot, and K is a minimum delay value required by slot crossing in the intermediate node.

Specifically, RxMFI is the phase corresponding to the multiframe indicator of the ingress slot, and RxMFI is obtained by the intermediate node based on a multiframe header of the ingress slot. TxMFI is the phase corresponding to the multiframe indicator of the egress slot, and TxMFI is obtained by the intermediate node based on a multiframe header of the egress slot. (RxMFI - TxMFI) is a phase difference between multiframe headers, which can be obtained by subtracting an MFI sending time (OutMFI-Timestamp) from an MFI receiving time (InMFI-Timestamp) of the ingress slot.

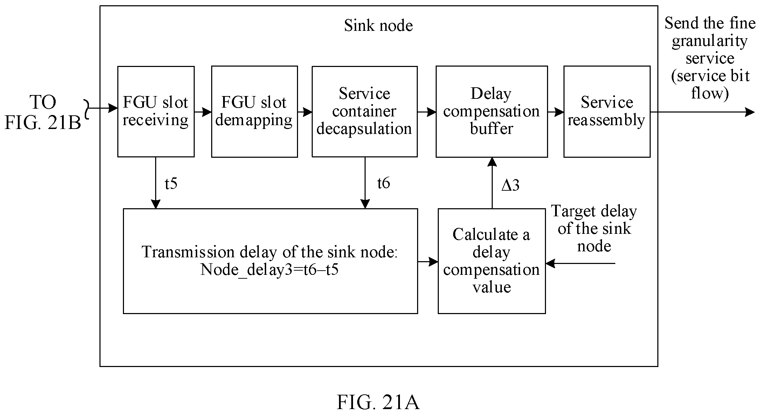

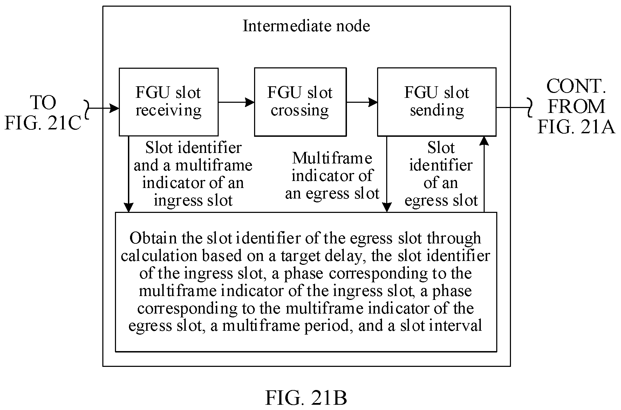

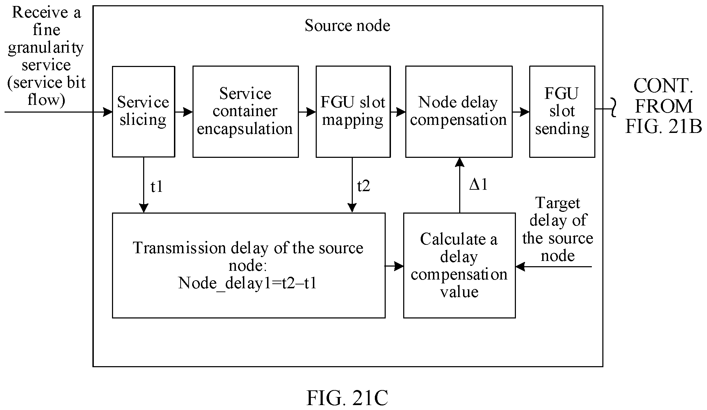

A2. The intermediate node obtains the slot identifier of the egress slot based on the slot identifier of the ingress slot, the multiframe indicator of the ingress slot, and the multiframe indicator of the egress slot. For ease of understanding, refer to FIG. 21A to FIG. 21C. FIG. 21A to FIG. 21C are a schematic diagram of another embodiment of a delay compensation method according to an embodiment of this application.

The intermediate node performs delay compensation on the fine granularity service based on the target delay of the node and the transmission delay of the fine granularity service in the intermediate node, including:
The intermediate node obtains the slot identifier of the ingress slot, the phase corresponding to the multiframe indicator of the ingress slot, and the phase corresponding to the multiframe indicator of the egress slot, where the ingress slot is the slot that carries the fine granularity service and is received by the intermediate node, and the egress slot is the slot that carries the fine granularity service and is sent by the intermediate node.

The intermediate node calculates the slot identifier of the egress slot based on the target delay of the node, the slot identifier of the ingress slot, the phase corresponding to the multiframe indicator of the ingress slot, the phase corresponding to the multiframe indicator of the egress slot, the multiframe period, and the slot interval, where the multiframe period is the transmission delay of each multiframe in the egress slot or the ingress slot, and the slot interval is the transmission delay of each slot in the egress slot or the ingress slot.

The intermediate node forwards the fine granularity service from a previous-hop node to a next-hop node based on the slot identifier of the ingress slot and the slot identifier of the egress slot. Specifically, the intermediate node updates an egress slot table based on the calculated slot identifier of the egress slot. Subsequently, the intermediate node sends the FGU slot from the previous-hop node in the egress slot based on an updated egress slot table. Subsequently, after receiving, in the ingress slot, the FGU slot from the previous-hop node, the intermediate node may map the ingress slot (FGU slot) to the egress slot based on the slot cross-configuration table. Finally, the intermediate node maps the egress slot (FGU slot) to a physical interface, and sends the FGU slot to the next-hop node.

For example, the slot identifier of the egress slot is obtained through calculation in the following manner:

$$\text{TxSlotId} = \frac{\left[\text{Target}_{\text{delay2}} - ((\text{RxMFI} - \text{TxMFI})\%\text{MF period}) - K\right]}{\text{slot time}} - \text{RxSlotId}.$$

TxSlotId is the slot identifier of the egress slot, $\text{Target}_{\text{delay2}}$ is the target delay of the node, RxMFI is the phase corresponding to the multiframe indicator of the ingress slot, TxMFI is the phase corresponding to the multiframe indicator of the egress slot, MF period is the multiframe period, slot time is the slot interval, RxSlotId is the slot identifier of the ingress slot, and K is a minimum delay value required by slot crossing in the intermediate node.

According to the foregoing method, it is ensured that the service bit flow sent by the intermediate node meets a delay compensation requirement, to ensure that a network transmission delay from the source node to the sink node and a network transmission delay from the sink node to the source node in a fine granularity service network are equal or meet an expected error range, or that the network transmission delay from the source node to the sink node and the network transmission delay from the sink node to the source node are adjusted to an expected value, to meet a service requirement.

With reference to the foregoing embodiments, the delay compensation method provided in embodiments of this application may also be applied to a large-granularity service scenario. In the large-granularity service scenario, a granularity of a hard slice may be greater than 5 gigabits per second (G-bits per-second, Gbps). A specific delay compensation method is similar to that in the foregoing embodiments. Details are not described herein again.

With reference to the foregoing embodiments, the delay compensation method provided in embodiments of this application may also be applied to a scenario in which a CBR service is carried in large-granularity slot data (referred to as a large-granularity slot for short below). A resource granularity of the large-granularity slot data may be E*1 Gbps, or may be E*5 Gbps. This is not limited in this embodiment of this application, where E is a positive integer. A specific service processing procedure is as follows: A source node encapsulates a CBR service bit flow into a service container and maps the service container to a large-granularity slot. An intermediate node cross-connects large-granularity slots, and then sends the large-granularity slots at an egress slot location. A sink node demaps the large-granularity slot to obtain a service container, and then decapsulates the service container to obtain a CBR service flow. Finally, the sink node sends the CBR service flow at a service port. A specific delay compensation method used when the CBR service is carried in the large-granularity slot is similar to the delay compensation method provided in the foregoing embodiments. Details are not described herein again.

The foregoing mainly describes the solutions provided in embodiments of this application from the perspective of the methods. It may be understood that, to implement the foregoing functions, the network device includes a corresponding hardware structure and/or software module for implementing each function. A person of ordinary skill in the art should easily be aware that, in combination with the examples described in embodiments disclosed in this specification, modules, algorithms and steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, functional modules of the network device may be obtained through division according to the foregoing method example. For example, the functional modules may be obtained through division corresponding to various functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

The following describes a network device in embodiments of this application. The network device described below has any function of the first communication apparatus, the second communication apparatus, or the communication apparatus in the foregoing method embodiments.

FIG. 23 is a schematic diagram of a structure of a communication apparatus 2300 according to an embodiment of this application. As shown in FIG. 23, the communication apparatus 2300 includes: a transceiver module 2301, configured to perform step 902; and a processing module 2302, configured to perform step 901, 903, 904, or 905.

For example, the communication apparatus 2300 is used in a first communication apparatus. The communication apparatus 2300 includes:

a processing module 2302, configured to determine a first transmission delay, where the first transmission delay indicates a transmission delay of a fine granularity service in the first communication apparatus; and
a transceiver module 2301, configured to send the first transmission delay to a second communication apparatus.

In a possible implementation, the processing module 2302 is specifically configured to obtain the transmission delay of the fine granularity service in the first communication apparatus through calculation in the following manner, including:

$$\mathrm{Node_{delay}} = T2 - T1.$$

$\mathrm{Node_{delay}}$ is the transmission delay of the fine granularity service in the first communication apparatus, T1 is a first moment, the first moment is a moment at which the first communication apparatus receives the fine granularity service, T2 is a second moment, and the second moment is a moment at which the first communication apparatus sends the fine granularity service.

In a possible implementation, the first moment is a moment at which the first communication apparatus receives a specific bit in a service bit flow that carries the fine granularity service.

In a possible implementation, the second moment is a moment at which the first communication apparatus sends fine granularity unit FGU slot data, and the FGU slot data carries the specific bit in the service bit flow of the fine granularity service.

In a possible implementation, the fine granularity service is a constant bit rate CBR service.

In a possible implementation, the transceiver module 2301 is further configured to receive a second transmission delay from a previous-hop node, where the second transmission delay indicates a transmission delay of the fine granularity service from a source node to the previous-hop node; and

the transceiver module 2301 is further configured to send the first transmission delay and the second transmission delay to a next-hop node.

In a possible implementation, the second transmission delay includes a transmission delay corresponding to each node that the fine granularity service passes through when being transmitted from the source node to the previous-hop node; or

the second transmission delay includes a sum of transmission delays corresponding to all nodes that the fine granularity service passes through when being transmitted from the source node to the previous-hop node.

In a possible implementation, the transceiver module 2301 is further configured to receive a delay collection message from the previous-hop node, where the delay collection message includes the second transmission delay.

The processing module 2302 is further configured to update the delay collection message, where an updated delay collection message includes the first transmission delay and the second transmission delay.

The transceiver module 2301 is further configured to send the updated delay collection message to the second communication apparatus.

In a possible implementation, the delay collection message further includes path information.

The processing module 2302 is further configured to determine, based on an indication of the path information, the second communication apparatus that receives the delay collection message.

In a possible implementation, the second communication apparatus is used in a sink node or a network management device.

For example, the communication apparatus 2300 is used in a second communication apparatus. The communication apparatus 2300 includes:

a transceiver module 2301, configured to obtain a first transmission delay, where the first transmission delay indicates a transmission delay of a fine granularity service in the first communication apparatus, where

the transceiver module 2301 is further configured to obtain a transmission delay of the fine granularity service in a sink node; and

a processing module 2302, configured to determine a delay compensation value based on an end-to-end target delay, a first transmission delay of first n hops of first communication apparatuses, and the transmission delay of the fine granularity service in the sink node, where the delay compensation value is for performing delay compensation on the fine granularity service in the sink node, and n is a positive integer.

In a possible implementation, the end-to-end target delay is greater than or equal to a larger one of the following two transmission delay values:

a service transmission delay value in a first direction or a service transmission delay value in a second direction, where the first direction is from a source node to the sink node; and

the second direction is from the sink node to the source node.

In a possible implementation, the processing module 2302 is further configured to perform delay compensation on the fine granularity service based on the delay compensation value.

In a possible implementation, that the processing module 2302 is further configured to obtain the delay compensation value through calculation in the following manner, including:

$$\Delta = \text{Target}_{delay1} - \sum_{i=1}^{n} \text{Node}_{delay}i - \text{Node}'_{delay}.$$

$\Delta$ is the delay compensation value, Target$_{delay1}$ is the end-to-end target delay, $\sum_{i=1}^{n} \text{Node}_{delay}i$ is the first transmission delay of the first n hops of first communication apparatuses, the first communication apparatus is used in the source node or an intermediate node, n is a quantity of nodes of the source node and the intermediate node, and Node'$_{delay}$ is the transmission delay of the fine granularity service in the sink node.

In a possible implementation, the processing module 2302 is further configured to obtain the transmission delay of the fine granularity service in the sink node through calculation in the following manner, including:

$$\text{Node'}_{delay} = T4 - T3.$$

Node'$_{delay}$ is the transmission delay of the fine granularity service in the sink node, T3 is a third moment, the third moment is a moment at which the sink node receives fine granularity unit FGU slot data, the FGU slot data carries a specific bit in a service bit flow of the fine granularity service, T4 is a fourth moment, and the fourth moment is a moment at which the sink node decapsulates a service container obtained by demapping the FGU slot data.

In a possible implementation, the processing module 2302 is further configured to demap the FGU slot data to obtain the service container.

The processing module 2302 is further configured to decapsulate the service container to obtain a service slice.

The processing module 2302 is further configured to store the service slice in a memory.

The processing module 2302 is further configured to: when residence time of the service slice in the memory reaches the delay compensation value, extract the service slice from the memory.

The processing module 2302 is further configured to reassemble the service bit flow based on a plurality of service slices.

The transceiver module 2301 is further configured to send the service bit flow.

In a possible implementation, the transceiver module 2301 is further configured to receive, from the sink node, the transmission delay of the fine granularity service in the sink node.

In a possible implementation, after the processing module 2302 is further configured to determine the delay compensation value based on the end-to-end target delay, the first transmission delay, and the transmission delay of the fine granularity service in the sink node, the method further includes:

The transceiver module 2301 is further configured to send the delay compensation value to the sink node.

The communication apparatus 2300 may correspond to the first communication apparatus or the second communication apparatus in the foregoing method embodiments. The units in the communication apparatus 2300 and the foregoing other operations and/or functions are respectively for implementing the steps and methods implemented by the first communication apparatus or the second communication apparatus in the method embodiments. For specific details, refer to the foregoing method embodiments. For brevity, details are not described herein again.

When the communication apparatus 2300 processes a data block, division into the foregoing functional modules is merely used as an example for description. In actual application, the foregoing functions may be allocated to different functional modules for implementation according to a requirement. In other words, an internal structure of the communication apparatus 2300 is divided into different functional modules, to implement all or some of the functions described above. In addition, the communication apparatus 2300 provided in the foregoing embodiment and the method in the embodiment corresponding to FIG. 9 belong to a same concept. For a specific implementation process of the communication apparatus 2300, refer to the foregoing method embodiment. Details are not described herein again.

FIG. 24 is a schematic diagram of a structure of a communication apparatus 2400 according to an embodiment of this application. As shown in FIG. 24, the communication apparatus 2400 includes: a transceiver module 2401, configured to send and receive data; and a processing module 2402, configured to perform step 1001 or 1002.

For example, the communication apparatus 2400 is used in a communication apparatus. The communication apparatus 2400 includes:

a processing module 2402, configured to determine a transmission delay of a fine granularity service in the communication apparatus.

The processing module 2402 is further configured to perform delay compensation on the fine granularity service based on a target delay of a node and the transmission delay of the fine granularity service in the communication apparatus.

In a possible implementation, the target delay of the node includes: a target delay of a source node, a target delay of an intermediate node, and/or a target delay of a sink node.

In a possible implementation, the transceiver module 2401 is configured to obtain a first receiving moment, where the first receiving moment is a moment at which the source node receives a specific bit in a service bit flow that carries the fine granularity service.

The transceiver module 2401 is further configured to obtain a second sending moment, where the second sending moment is a moment at which the source node sends fine granularity unit FGU slot data, and the FGU slot data carries the specific bit in the service bit flow of the fine granularity service.

The processing module 2402 is further configured to subtract the first receiving moment from the second sending moment, to obtain a transmission delay of the fine granularity service in the source node.

In a possible implementation, the transceiver module 2401 is configured to obtain a third receiving moment, where the third receiving moment is a moment at which the intermediate node receives the fine granularity unit FGU slot data at an ingress slot location, and the FGU slot data carries the specific bit in the service bit flow of the fine granularity service.

The transceiver module 2401 is further configured to obtain a fourth sending moment, where the fourth sending moment is a moment at which the intermediate node sends the FGU slot data.

The processing module 2402 is further configured to subtract the third receiving moment from the fourth sending moment, to obtain the transmission delay of the fine granularity service in the intermediate node.

In a possible implementation, the transceiver module 2401 is configured to obtain a fifth receiving moment, where the fifth receiving moment is a moment at which the sink node receives the fine granularity unit FGU slot data, and the FGU slot data carries the specific bit in the service bit flow of the fine granularity service.

The transceiver module 2401 is further configured to obtain a sixth sending moment, where the sixth sending moment is a moment at which the sink node decapsulates a service container, the service container is obtained by the communication apparatus by demapping the FGU slot data, and the service container carries the specific bit in the service bit flow of the fine granularity service.

The processing module 2402 is further configured to subtract the fifth receiving moment from the sixth sending moment, to obtain a transmission delay of the fine granularity service in the sink node.

In a possible implementation:

the processing module 2402 is further configured to determine a delay compensation value based on the target delay of the node and the transmission delay of the fine granularity service in the communication apparatus.

The processing module 2402 is further configured to perform delay compensation on the fine granularity service based on the delay compensation value.

In a possible implementation, the processing module 2402 is further configured to store the FGU slot data in a memory, where the FGU slot data carries the service bit flow of the fine granularity service.

The transceiver module 2401 is further configured to: when residence time of the FGU slot data in the memory reaches the delay compensation value, extract the FGU slot data from the memory.

The transceiver module 2401 is further configured to send the FGU slot data.

In a possible implementation, the processing module 2402 is further configured to cross-map the ingress slot location of the intermediate node to an egress slot location of the intermediate node.

The processing module 2402 is further configured to store, in a memory, the FGU slot data received at the ingress slot location of the intermediate node.

The processing module 2402 is further configured to: when residence time of the FGU slot data in the memory reaches the delay compensation value, extract the FGU slot data from the memory.

The transceiver module 2401 is further configured to send the FGU slot data at the egress slot location of the intermediate node.

In a possible implementation, the processing module 2402 is further configured to demap the FGU slot data to obtain the service container.

The processing module 2402 is further configured to decapsulate the service container to obtain a service slice.

The processing module 2402 is further configured to store the service slice in a memory.

The processing module 2402 is further configured to: when residence time of the service slice in the memory reaches the delay compensation value, extract the service slice from the memory.

The processing module 2402 is further configured to reassemble the service bit flow based on a plurality of service slices.

The transceiver module 2401 is further configured to send the service bit flow.

In a possible implementation, the fine granularity service carries a constant bit rate CBR service.

The communication apparatus 2400 may correspond to the communication apparatus in the foregoing method embodiments. The units in the communication apparatus 2400 and the foregoing other operations and/or functions are respectively for implementing the steps and methods implemented by the communication apparatus or a controller in the method embodiments. For specific details, refer to the foregoing method embodiments. For brevity, details are not described herein again.

When the communication apparatus 2400 processes a data block, division into the foregoing functional modules is merely used as an example for description. In actual application, the foregoing functions may be allocated to different functional modules for implementation according to a requirement. In other words, an internal structure of the communication apparatus 2400 is divided into different functional modules, to implement all or some of the functions described above. In addition, the communication apparatus 2400 provided in the foregoing embodiment and the method in the embodiment corresponding to FIG. 10 belong to a same concept. For a specific implementation process of the communication apparatus 2400, refer to the foregoing method embodiment. Details are not described herein again.

It should be noted that the communication apparatus mentioned in embodiments of this application may be, for example, a network device such as a switch or a router, may be some components of a network device, for example, a board or a line card of the network device, may be a functional module of the network device, or may be a chip configured to implement the methods in this application. This is not specifically limited in embodiments of this application. When the communication apparatus is a chip, the transceiver module configured to implement the method may be, for example, an interface circuit of the chip, and the processing module may be a processing circuit having a processing function in the chip. Communication apparatuses may be directly connected, for example, but not limited to, by using an ethernet cable or an optical cable.

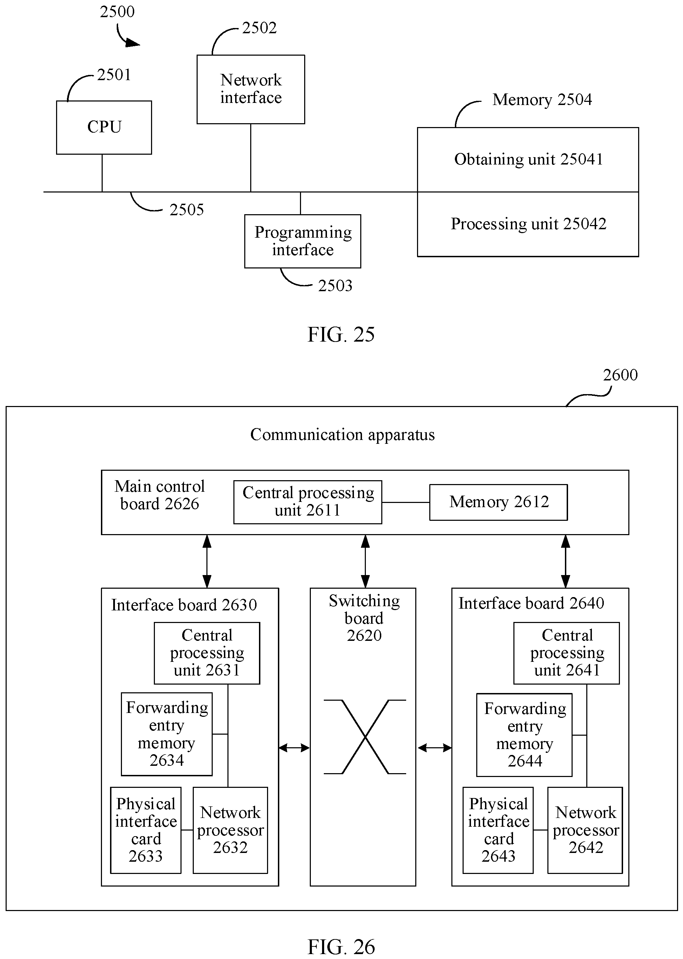

To implement the foregoing embodiments, this application further provides a communication apparatus. Refer to FIG. 25. FIG. 25 is a schematic diagram of a structure of a communication apparatus 2500 according to an embodiment of this application.

Although the communication apparatus 2500 shown in FIG. 25 shows some specific features, a person skilled in the art may be aware, from embodiments of this application, that, for brevity, FIG. 25 does not show various other features, to avoid confusing more related aspects of implementations disclosed in embodiments of this application. Therefore, for example, in some implementations, the communication apparatus 2500 includes one or more processing units (for example, a CPU) 2501, a network interface 2502, a programming interface 2503, a memory 2504, and one or more communication buses 2505, configured to interconnect various components. In some other implementations, some functional components or units may be omitted or added to the communication apparatus 2500 based on the foregoing example.

In some implementations, the network interface 2502 is configured to connect to one or more other communication apparatuses/servers in a network system. In some implementations, the communication bus 2505 includes a circuit that interconnects and controls communication between system components. The memory 2504 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. Alternatively, the memory 2504 may include a volatile memory. The volatile memory may be a random access memory (random access memory, RAM), and is used as an external cache.

In some implementations, the memory 2504 or a non-transitory computer-readable storage medium of the memory 2504 stores the following programs, modules, and data structures, or a subset thereof, for example, includes a transceiver unit (not shown), an obtaining unit 25041, and a processing unit 25042.

In a possible embodiment, the communication apparatus 2500 may have any function of the first communication apparatus, the second communication apparatus, or the communication apparatus in the method embodiment corresponding to FIG. 9 or FIG. 10.

It should be understood that the communication apparatus 2500 corresponds to the first communication apparatus, the second communication apparatus, the communication apparatus, or the controller in the foregoing method embodiments. The modules in the communication apparatus 2500 and the foregoing other operations and/or functions are respectively for implementing the steps and methods implemented by the first communication apparatus, the second communication apparatus, the communication apparatus, or the controller in the method embodiments. For specific details, refer to the method embodiment corresponding to FIG. 9 or FIG. 10. For brevity, details are not described herein again.

It should be understood that in this application, the network interface 2502 of the communication apparatus 2500 may perform data receiving and sending operations, or a processor may invoke program code in the memory, and implement functions of the transceiver unit in cooperation with the network interface 2502 when required.

In various implementations, the communication apparatus 2500 is configured to perform the delay measurement method provided in embodiments of this application, for example, perform the delay measurement method corresponding to the embodiment shown in FIG. 9 or FIG. 10.

A specific structure of the communication apparatus in FIG. 25 in this application may be shown in FIG. 26.

FIG. 26 is a schematic diagram of a structure of a communication apparatus 2600 according to an embodiment of this application. The communication apparatus 2600 includes a main control board 2626 and an interface board 2630.

The main control board 2626 is also referred to as a main processing unit (main processing unit, MPU) or a route processor (route processor). The main control board 2626 is configured to control and manage components in the communication apparatus 2600, including route computation, device management, device maintenance, and protocol processing functions. The main control board 2626 includes a central processing unit 2611 and a memory 2612.

The interface board 2630 is also referred to as a line processing unit (line processing unit, LPU), a line card (line card), or a service board. The interface board 2630 is configured to provide various service interfaces, and forward a data packet. Service interfaces include but are not limited to Ethernet interfaces and packet over SONET/SDH (Packet over SONET/SDH, POS) interfaces. The interface board 2630 includes a central processing unit 2631, a network processor 2632, a forwarding entry memory 2634, and a physical interface card (physical interface card, PIC) 2633.

The central processing unit 2631 on the interface board 2630 is configured to control and manage the interface board 2630 and communicate with the central processing unit 2611 on the main control board 2626.

The network processor 2632 is configured to implement packet forwarding processing. A form of the network processor 2632 may be a forwarding chip.

The physical interface card 2633 is configured to implement a physical layer interconnection function. Original traffic enters the interface board 2630, and a processed packet is sent from the physical interface card 2633. The physical interface card 2633 includes at least one physical interface. The physical interface is also referred to as a physical port, and the physical interface may be a flexible ethernet (Flexible Ethernet, FlexE) physical interface. The physical interface card 2633 is also referred to as a sub-card, may be installed on the interface board 2630, and is responsible for converting a photoelectric signal into a packet, performing validity check on the packet, and then forwarding the packet to the network processor 2632 for processing. In some embodiments, the central processing unit 2631 of the interface board 2630 may further perform a function of the network processor 2632, for example, implement software forwarding based on a general-purpose CPU, so that the interface board 2630 does not need the network processor 2632.

Optionally, the communication apparatus 2600 includes a plurality of interface boards. For example, the communication apparatus 2600 further includes an interface board 2640. The interface board 2640 includes a central processing unit 2641, a network processor 2642, a forwarding entry memory 2644, and a physical interface card 2643.

Optionally, the communication apparatus 2600 further includes a switching board 2620. The switching board 2620 may also be referred to as a switch fabric unit (switch fabric unit, SFU). When the communication apparatus has a plurality of interface boards 2630, the switching board 2620 is configured to complete data exchange between the interface boards. For example, the interface board 2630 and the interface board 2640 may communicate with each other by using the switching board 2620.

The main control board 2626 is coupled with the interface board. For example, the main control board 2626, the interface board 2630, the interface board 2640, and the switching board 2620 are connected to each other by using a system bus and/or a system backplane to implement interworking. In a possible implementation, an inter-process communication protocol (inter-process communication, IPC) channel is established between the main control board 2626 and the interface board 2630, and the main control board 2626 and the interface board 2630 communicate with each other by using the inter-process communication IPC channel.

Logically, the communication apparatus 2600 includes a control plane and a forwarding plane. The control plane includes a main control board 2626 and a central processing unit 2631, and the forwarding plane includes components for performing forwarding, such as a forwarding entry memory 2634, a physical interface card 2633, and a network processor 2632. The control plane performs functions such as route advertising, generating a forwarding table, processing signaling and protocol packets, and configuring and maintaining a status of a device. The control plane delivers the generated forwarding table to the forwarding plane. On the forwarding plane, the network processor 2632 looks up the table and forwards a packet received by the physical interface card 2633 based on the forwarding table delivered by the control plane. The forwarding table delivered by the control plane may be stored in the forwarding entry memory 2634. In some embodiments, the control plane and the forwarding plane may be completely separated, and are not on a same device.

It should be understood that the transceiver unit in the communication apparatus 2500 may be equivalent to the physical interface card 2633 or the physical interface card 2643 in the communication apparatus 2600, and the obtaining unit 25041 and the processing unit 25042 in the communication apparatus 2500 may be equivalent to the central processing unit 2611 or the central processing unit 2631 in the communication apparatus 2600, or may be equivalent to program code or instructions stored in the memory 2612.

It should be understood that an operation on the interface board 2640 in this embodiment of this application is consistent with an operation on the interface board 2630. For brevity, details are not described again. It should be understood that the communication apparatus 2600 in this embodiment may correspond to the first communication apparatus, the second communication apparatus, or the communication apparatus in the foregoing method embodiments. The main control board 2626, the interface board 2630, and/or the interface board 2640 in the communication apparatus 2600 may implement functions and/or various steps implemented by the first communication apparatus, the second communication apparatus, or the communication apparatus in the foregoing method embodiments. For brevity, details are not described herein again.

It should be noted that, there may be one or more main control boards. When there are a plurality of main control boards, the main control boards may include an active main control board and a standby main control board. There may be one or more interface boards, and the communication apparatus with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the communication apparatus may not need a switch fabric unit, and the interface board provides a function of processing service data of an entire system. In a distributed forwarding architecture, the communication apparatus may include at least one switch fabric unit, and exchange data between a plurality of interface boards through the switch fabric unit, to provide a large-capacity data exchange and processing capability. Optionally, the form of the communication apparatus may alternatively be only one board, to be specific, there is no switch fabric unit, and functions of the interface board and the main control board are integrated on the board. In this case, a central processing unit on the interface board and a central processing unit on the main control board may be combined into one central processing unit on the board, to implement functions obtained after the two are superimposed. Which architecture is specifically used depends on a specific networking deployment scenario, and is not uniquely limited herein.

In some possible embodiments, the first communication apparatus or the second communication apparatus may be implemented as a virtualization device. The virtualization device may be a virtual machine (virtual machine, VM), a virtual router, or a virtual switch that runs a program for sending a packet. A virtualization device is deployed on a hardware device (for example, a physical server). For example, the first communication apparatus may be implemented based on a general-purpose physical server in combination with a network functions virtualization (network functions virtualization, NFV) technology.

It should be understood that the communication apparatuses in the foregoing product forms have any function of the first communication apparatus, the second communication apparatus, or the communication apparatus in the foregoing method embodiments. Details are not described herein again.

An embodiment of this application further provides a communication apparatus. The communication apparatus includes: a communication interface; and
a processor connected to the communication interface, based on the communication interface and the processor.

In a possible implementation, the network device is used in a first communication apparatus, so that the first communication apparatus performs the method in the embodiment shown in FIG. 9.

In another possible implementation, a second communication apparatus is enabled to perform the method in the embodiment shown in FIG. 9.

In another possible implementation, a communication apparatus is enabled to perform the method in the embodiment shown in FIG. 10.

An embodiment of this application further provides a computer-readable storage medium, including instructions. When the instructions are run on a computer, the computer controls a network apparatus to perform any implementation shown in the foregoing method embodiments.

An embodiment of this application further provides a computer program product. The computer program product includes computer program code. When the computer program code is run on a computer, the computer performs any implementation shown in the foregoing method embodiments.

Further, an embodiment of this application further provides a computer program product. When the computer program product runs on a network device, the network device is enabled to perform the method performed by the first communication apparatus, the second communication apparatus, the communication apparatus, or the controller in the method embodiment corresponding to FIG. 9 or FIG. 10.

An embodiment of this application further provides a chip system including a processor and an interface circuit. The interface circuit is configured to receive instructions and transmit the instructions to the processor. The processor is configured to implement the method in any one of the foregoing method embodiments. Optionally, the chip system further includes a memory.

There may be one or more processors in the chip system. The processor may be implemented by using hardware, or may be implemented by using software. When the processor is implemented by using the hardware, the processor may be a logic circuit, an integrated circuit, or the like. When the processor is implemented through software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

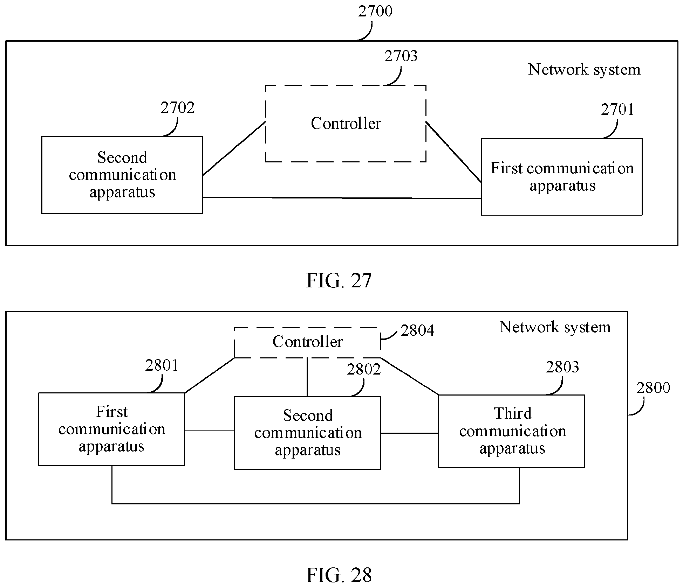

Refer to FIG. 27. FIG. 27 is a schematic diagram of a network system 2700 according to an embodiment of this application. The network system 2700 includes a first communication apparatus 2701 and a second communication apparatus 2702. The first communication apparatus 2701 and the second communication apparatus 2702 may be, for example, physical devices such as routers, switches, or gateways, or may be virtual devices that support route advertisement and packet forwarding. Specific types of the first communication apparatus 2701 and the second communication apparatus 2702 are not limited in this embodiment.

Optionally, the network system 2700 further includes a controller 2703. The controller 2703 may be a server that manages the first communication apparatus 2701 and the second communication apparatus 2702. Optionally, the first communication apparatus 2701 may be the communication apparatus 2300, the communication apparatus 2400, the communication apparatus 2500, or the communication apparatus 2600. Optionally, the second communication apparatus 2702 may be the communication apparatus 2300, the communication apparatus 2400, the communication apparatus 2500, or the communication apparatus 2600. Optionally, the controller 2703 may be a communication apparatus 2300, the communication apparatus 2400, the communication apparatus 2500, or the communication apparatus 2600.

Refer to FIG. 28. FIG. 28 is a schematic diagram of a network system 2800 according to an embodiment of this application. The network system 2800 includes a first communication apparatus 2801, a second communication apparatus 2802, and a third communication apparatus 2803. The first communication apparatus 2801, the second communication apparatus 2802, and the third communication apparatus 2803 may be, for example, physical devices such as routers, switches, or gateways, or may be virtual devices that support route advertisement and packet forwarding. Specific types of the first communication apparatus 2801, the second communication apparatus 2802, and the third communication apparatus 2803 are not limited in this embodiment.

For example, when the network system 2800 is used in the scenario shown in FIG. 7, the first communication apparatus 2801 may be an edge node 1, one or more second communication apparatuses 2802 may be intermediate nodes, and the third communication apparatus 2803 may be an edge node 2.

Optionally, the network system 2800 shown in FIG. 28 further includes a controller 2804. The controller 2804 is not shown in the scenario shown in FIG. 7.

The communication apparatuses in the foregoing product forms have any function of the first communication apparatus, the second communication apparatus, or the communication apparatus in the foregoing method embodiments. Details are not described herein again.

The foregoing describes embodiments of this application in detail. Steps in the methods in embodiments of this application may be sequentially scheduled, combined, or deleted according to an actual requirement. Modules in the apparatus in embodiments of this application may be divided, combined, or deleted according to an actual requirement.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

**Claims**

1. A delay compensation method, comprising:

    determining, by a first communication apparatus, a first transmission delay, wherein the first transmission delay indicates a transmission delay of a fine granularity service in the first communication apparatus; and
    sending, by the first communication apparatus, the first transmission delay to a second communication apparatus.

2. The method according to claim 1, wherein the determining, by a first communication apparatus, a transmission delay of a fine granularity service in the first communication apparatus comprises:

    obtaining, by the first communication apparatus, the transmission delay of the fine granularity service in the first communication apparatus through calculation in the following manner, comprising:

$$\text{Node}_{\text{delay}} = T2 - T1,$$

    wherein
    $\text{Node}_{\text{delay}}$ is the transmission delay of the fine granularity service in the first communication apparatus, T1 is a first moment, the first moment is a moment at which the first communication apparatus receives the fine granularity service, T2 is a second moment, and the second moment is a moment at which the first communication apparatus sends the fine granularity service.

3. The method according to claim 2, wherein the first moment is a moment at which the first communication apparatus receives a specific bit in a service bit flow that carries the fine granularity service.

4. The method according to claim 3, wherein the second moment is a moment at which the first communication apparatus sends fine granularity unit FGU slot data, and the FGU slot data carries the specific bit in the service bit flow of the fine granularity service.

5. The method according to any one of claims 1 to 4, wherein the fine granularity service is a constant bit rate CBR service.

6. The method according to any one of claims 1 to 5, wherein the first communication apparatus is used in an intermediate node, and the method further comprises:

    receiving, by the first communication apparatus, a second transmission delay from a previous-hop node, wherein the second transmission delay indicates a transmission delay of the fine granularity service from a source node to the previous-hop node; and
    sending, by the first communication apparatus, the first transmission delay and the second transmission delay to a next-hop node.

7. The method according to claim 6, wherein the second transmission delay comprises a transmission delay corresponding to each node that the fine granularity service passes through when being transmitted from the source node to the previous-hop node; or
    the second transmission delay comprises a sum of transmission delays corresponding to all nodes that the fine granularity service passes through when being transmitted from the source node to the previous-hop node.

8. The method according to claim 6 or 7, wherein the sending, by the first communication apparatus, the first transmission delay to a second communication apparatus comprises:

    receiving, by the first communication apparatus, a delay collection message from the previous-hop node, wherein the delay collection message comprises the second transmission delay;
    updating, by the first communication apparatus, the delay collection message, wherein an updated delay collection message comprises the first transmission delay and the second transmission delay; and
sending, by the first communication apparatus, the updated delay collection message to the second communication apparatus.

9. The method according to claim 8, wherein the delay collection message further comprises path information; and the method further comprises:
determining, by the first communication apparatus based on an indication of the path information, the second communication apparatus that receives the delay collection message.

10. The method according to any one of claims 1 to 5, wherein the second communication apparatus is used in a sink node or a network management device.

11. A delay compensation method, wherein the method is applied to a second communication apparatus, and the method comprises:

obtaining, by the second communication apparatus, a first transmission delay, wherein the first transmission delay indicates a transmission delay of a fine granularity service in a first communication apparatus;
obtaining, by the second communication apparatus, a transmission delay of the fine granularity service in a sink node; and
determining, by the second communication apparatus, a delay compensation value based on an end-to-end target delay, a first transmission delay of first n hops of first communication apparatuses, and the transmission delay of the fine granularity service in the sink node, wherein the delay compensation value is for performing delay compensation on the fine granularity service in the sink node, and n is a positive integer.

12. The method according to claim 11, wherein
the end-to-end target delay is greater than or equal to a larger one of the following two transmission delay values:

a service transmission delay value in a first direction or a service transmission delay value in a second direction, wherein
the first direction is from a source node to the sink node; and
the second direction is from the sink node to the source node.

13. The method according to claim 11 or 12, wherein the second communication apparatus is used in the sink node, and the method further comprises:
performing, by the second communication apparatus, delay compensation on the fine granularity service based on the delay compensation value.

14. The method according to any one of claims 11 to 13, wherein the determining, by the second communication apparatus, a delay compensation value based on an end-to-end target delay, a first transmission delay of first n hops of first communication apparatuses, and the transmission delay of the fine granularity service in the sink node comprises:

obtaining, by the second communication apparatus, the delay compensation value through calculation in the following manner, comprising:

$$\Delta = \text{Target}_{delay1} - \sum_{i=1}^{n} \text{Node}_{delay}i - \text{Node}'_{delay},$$

wherein

$\Delta$ is the delay compensation value, $\text{Target}_{delay1}$ is the end-to-end target delay, $\sum_{i=1}^{n} \text{Node}_{delay}i$ is the first transmission delay of the first n hops of first communication apparatuses, the first communication apparatus is used in the source node or an intermediate node, n is a quantity of nodes of the source node and the intermediate node, and $\text{Node}'_{delay}$ is the transmission delay of the fine granularity service in the sink node.

**15.** The method according to claim 14, wherein the second communication apparatus is used in the sink node; and the obtaining, by the second communication apparatus, a transmission delay of the fine granularity service in a sink node comprises:

obtaining, by the second communication apparatus, the transmission delay of the fine granularity service in the sink node through calculation in the following manner, comprising:

$$\mathrm{Node'_{delay}} = \mathrm{T4} - \mathrm{T3,}$$

wherein
$\mathrm{Node'_{delay}}$ is the transmission delay of the fine granularity service in the sink node, T3 is a third moment, the third moment is a moment at which the sink node receives fine granularity unit FGU slot data, the FGU slot data carries a specific bit in a service bit flow of the fine granularity service, T4 is a fourth moment, and the fourth moment is a moment at which the sink node decapsulates a service container obtained by demapping the FGU slot data.

**16.** The method according to claim 15, wherein the second communication apparatus is used in the sink node; and the performing, by the second communication apparatus, delay compensation on the fine granularity service based on the delay compensation value comprises:

demapping, by the second communication apparatus, the FGU slot data to obtain the service container;
decapsulating, by the second communication apparatus, the service container to obtain a service slice;
storing, by the second communication apparatus, the service slice in a memory;
when residence time of the service slice in the memory reaches the delay compensation value, extracting, by the second communication apparatus, the service slice from the memory;
reassembling, by the second communication apparatus, the service bit flow based on a plurality of service slices; and
sending, by the second communication apparatus, the service bit flow.

**17.** The method according to any one of claims 11 to 16, wherein the second communication apparatus is used in a network management device; and
the obtaining, by the second communication apparatus, a transmission delay of the fine granularity service in a sink node comprises:
receiving, by the second communication apparatus from the sink node, the transmission delay of the fine granularity service in the sink node.

**18.** The method according to claim 17, wherein the second communication apparatus is used in the network management device; and
after the determining, by the second communication apparatus, a delay compensation value based on an end-to-end target delay, the first transmission delay, and the transmission delay of the fine granularity service in the sink node, the method further comprises:
sending, by the second communication apparatus, the delay compensation value to the sink node.

**19.** A delay compensation method, comprising:

determining, by a communication apparatus, a transmission delay of a fine granularity service in the communication apparatus; and
performing, by the communication apparatus, delay compensation on the fine granularity service based on a target delay of a node and the transmission delay of the fine granularity service in the communication apparatus.

**20.** The method according to claim 19, wherein the target delay of the node comprises: a target delay of a source node, a target delay of an intermediate node, and/or a target delay of a sink node.

**21.** The method according to claim 19 or 20, wherein the communication apparatus is used in the source node; and
the determining, by a communication apparatus, a transmission delay of a fine granularity service in the communication apparatus comprises:

obtaining, by the communication apparatus, a first receiving moment, wherein the first receiving moment is a moment at which the source node receives a specific bit in a service bit flow that carries the fine granularity service;

obtaining, by the communication apparatus, a second sending moment, wherein the second sending moment is a moment at which the source node sends fine granularity unit FGU slot data, and the FGU slot data carries the specific bit in the service bit flow of the fine granularity service; and

subtracting, by the communication apparatus, the first receiving moment from the second sending moment, to obtain a transmission delay of the fine granularity service in the source node.

22. The method according to any one of claims 19 to 21, wherein when the communication apparatus is used in the intermediate node,

the determining, by a communication apparatus, a transmission delay of a fine granularity service in the communication apparatus comprises:

obtaining, by the communication apparatus, a third receiving moment, wherein the third receiving moment is a moment at which the intermediate node receives the fine granularity unit FGU slot data at an ingress slot location, and the FGU slot data carries the specific bit in the service bit flow of the fine granularity service;

obtaining, by the communication apparatus, a fourth sending moment, wherein the fourth sending moment is a moment at which the intermediate node sends the FGU slot data; and

subtracting, by the communication apparatus, the third receiving moment from the fourth sending moment, to obtain a transmission delay of the fine granularity service in the intermediate node.

23. The method according to any one of claims 19 to 22, wherein when the communication apparatus is used in the sink node,

the determining, by a communication apparatus, a transmission delay of a fine granularity service in the communication apparatus comprises:

obtaining, by the communication apparatus, a fifth receiving moment, wherein the fifth receiving moment is a moment at which the sink node receives the fine granularity unit FGU slot data, and the FGU slot data carries the specific bit in the service bit flow of the fine granularity service;

obtaining, by the communication apparatus, a sixth sending moment, wherein the sixth sending moment is a moment at which the sink node decapsulates a service container, the service container is obtained by the communication apparatus by demapping the FGU slot data, and the service container carries the specific bit in the service bit flow of the fine granularity service; and

subtracting, by the communication apparatus, the fifth receiving moment from the sixth sending moment, to obtain a transmission delay of the fine granularity service in the sink node.

24. The method according to any one of claims 19 to 23, wherein the performing, by the communication apparatus, delay compensation on the fine granularity service based on a target delay of a node and the transmission delay of the fine granularity service in the communication apparatus comprises:

determining, by the communication apparatus, a delay compensation value based on the target delay of the node and the transmission delay of the fine granularity service in the communication apparatus; and

performing, by the communication apparatus, delay compensation on the fine granularity service based on the delay compensation value.

25. The method according to claim 24, wherein when the communication apparatus is used in the source node,

the performing, by the communication apparatus, delay compensation on the fine granularity service based on the delay compensation value comprises:

storing, by the communication apparatus, the FGU slot data in a memory, wherein the FGU slot data carries the service bit flow of the fine granularity service;

when residence time of the FGU slot data in the memory reaches the delay compensation value, extracting, by the communication apparatus, the FGU slot data from the memory; and

sending, by the communication apparatus, the FGU slot data.

26. The method according to claim 24 or 25, wherein when the communication apparatus is used in the intermediate node, the performing, by the communication apparatus, delay compensation on the fine granularity service based on the delay compensation value comprises:

cross-mapping, by the communication apparatus, the ingress slot location of the intermediate node to an egress slot location of the intermediate node;

storing, by the communication apparatus in a memory, the FGU slot data received at the ingress slot location of the intermediate node;

when residence time of the FGU slot data in the memory reaches the delay compensation value, extracting, by the communication apparatus, the FGU slot data from the memory; and

sending, by the communication apparatus, the FGU slot data at the egress slot location of the intermediate node.

27. The method according to any one of claims 24 to 26, wherein when the communication apparatus is used in the sink node,

the performing, by the communication apparatus, delay compensation on the fine granularity service based on the delay compensation value comprises:

demapping, by the communication apparatus, the FGU slot data to obtain the service container;

decapsulating, by the communication apparatus, the service container to obtain a service slice;

storing, by the communication apparatus, the service slice in a memory;

when residence time of the service slice in the memory reaches the delay compensation value, extracting, by the communication apparatus, the service slice from the memory;

reassembling, by the communication apparatus, the service bit flow based on a plurality of service slices; and

sending, by the communication apparatus, the service bit flow.

28. The method according to any one of claims 19 to 27, wherein the fine granularity service carries a constant bit rate CBR service.

29. A communication apparatus, used as a first communication apparatus, comprising:

a transceiver module, configured to perform a receiving- and/or sending-related operation performed by the first communication apparatus in the method according to any one of claims 1 to 10; and

a processing module, configured to perform an operation other than the receiving and/or sending-related operation performed by the first communication apparatus in the method according to any one of claims 1 to 10.

30. A communication apparatus, used as a second communication apparatus, and comprising:

a transceiver module, configured to perform a receiving- and/or sending-related operation performed by the second communication apparatus in the method according to any one of claims 11 to 18; and

a processing module, configured to perform an operation other than the receiving and/or sending-related operation performed by the second communication apparatus in the method according to any one of claims 11 to 18.

31. A communication apparatus, comprising:

a transceiver module, configured to perform a receiving- and/or sending-related operation performed by the second communication apparatus in the method according to any one of claims 19 to 28; and

a processing module, configured to perform an operation other than the receiving and/or sending-related operation performed by the second communication apparatus in the method according to any one of claims 19 to 28.

32. A network device, used as a first communication apparatus, comprising:

a communication interface; and

a processor connected to the communication interface, and based on the communication interface and the processor, the first communication apparatus performs the method according to any one of claims 1 to 10.

33. A network device, used as a second communication apparatus, comprising:

a communication interface; and

a processor connected to the communication interface, and based on the communication interface and the processor, the second communication apparatus performs the method according to any one of claims 11 to 18.

**34.** A communication system, wherein the communication system comprises a first communication apparatus and a second communication apparatus, the first communication apparatus is configured to perform the method according to any one of claims 1 to 10, and the second communication apparatus is configured to perform the method according to any one of claims 11 to 18.

**35.** A communication system, wherein the communication system comprises a communication apparatus, and the communication apparatus is configured to perform the method according to any one of claims 19 to 28.

**36.** A computer-readable storage medium, comprising instructions, wherein when the instructions are executed by a processor, the method according to any one of claims 1 to 28 is implemented.

**37.** A computer program product, comprising a program, wherein when the program is executed by a processor, the method according to any one of claims 1 to 28 is implemented.

Data transfer
unit (DTU)

Power management
unit (PMU)

Monitoring
device

5G base station

Mobile office

Public user

| Virtual private network (VPN) | Fine-granularity hard slice: production services such as areas I and II | Virtual private network (VPN) | 5G core network |
| | MTN interface packet slice: management services such as areas III and IV | | |
| | MTN interface packet slice: public services | | |

Access    Convergence    Core

5G backhaul network

Power dispatching

Power monitoring

Internet

FIG. 1

EP 4 507 221 A1

| 1 | 10 | Block type (S₀) 0x78 | 0x55 | 0x55 | 0x55 | 0x55 | 0x55 | 0x55 | 0xD5 | S |

| | 10 | Block type ($S_0$) 0x78 | 0x55 | 0x55 | 0x55 | 0x55 | 0x55 | 0x55 | 0xD5 | S |
|---|---|---|---|---|---|---|---|---|---|---|
| 2 | 01 | FGU base frame overhead (OH) (7 bytes/Byte) | | | | | | | | D |
| | 01 | | | | | | | | | D |
| | 01 | FGU base frame payload (payload) (1560 bytes/Byte) | | | | | | | | ... |
| 196 | 01 | | | | | | | | | D |
| 197 | 10 | Block type ($T_7$) 0xFF | | | | | | | | T |

| FGU OH (7 bytes) | Sub-slot 1 65 bytes | Sub-slot 2 65 bytes | Sub-slot 3 65 bytes | ... | Sub-slot 23 65 bytes | Sub-slot 24 65 bytes |
|---|---|---|---|---|---|---|

| 65b | 65b | 65b | 65b | 65b | 65b | 65b | 65b |
|---|---|---|---|---|---|---|---|

FIG. 2

**FGU multiframe**

**FGU base frame 1**

**FGU base frame 20**

| S | OH | Sub-slot 1 | Sub-slot 2 | ... | Sub-slot 24 | T | Idle |
| --- | --- | --- | --- | --- | --- | --- | --- |

...

| S | OH | Sub-slot 1 | Sub-slot 2 | ... | Sub-slot 24 | T | Idle |
| --- | --- | --- | --- | --- | --- | --- | --- |

FIG. 3a

EP 4 507 221 A1

| RES (2 bits) | MFI (6 bits) | Flag (2 bits) | RES (2 bits) | OH information (44 bits) |

| RES (2 bits) | MFI (6 bits) | Flag=00 (2 bits) | RES (2 bits) | S | C | CR | CA | Client ID (12 bits) | Sub-slot ID (12 bits) | RES (9 bits) | CRC7 (7 bits) |

| RES (2 bits) | MFI (6 bits) | Flag=11 (2 bits) | RES (2 bits) | S | C | CR | CA | GCC (33 bits) | CRC7 (7 bits) |

FIG. 3b

CBR service frame 1

CBR service frame 2 to
CBR service frame j−1

CBR service frame j

CBR service bit
flow
(for example, E1/
E3/T1/T3/STM-N/
FC/...)

**S1. Perform
service slicing**

... | | | | | | | ... | ... | | | | ... | | | | ...

Mode 1: "bit transparent slicing" mode (including i-bit data)
Mode 2: "frame slicing" mode (including j CBR service
frames)

Slice

i-bit data or j CBR frames

**S2. Perform slice
encapsulation**

...

| ESQ sequence number (optional) | Frequency synchronization message (for example, a timestamp) | Payload length (optional) | i-bit data or j CBR frames | Padding (optional) | Check (optional) |

...

... | /I/ | /S/ | /D/ | /D/ | ... | /D/ | /T/ | /I/ | /S/ | ...

TO FIG. 4B

FIG. 4A

CONT. FROM
FIG. 4A

S1504. Insert OAM, where a block /I/ in PCS-layer data of a
lower-order path is replaced with the OAM block

**S3. Insert an OAM block**

/I/  /S/  /D/  /D/     ...     /D/  /T/  /O/  /S/    ...

**S4. Perform transcoding and compression to obtain data**

... 65b 65b 65b 65b   ...   65b 65b 65b 65b ...

**S5. Slice the data into lower-order slot payloads**

... | One slot payload (including Y bits) | One slot payload (including Y bits) | ...

FIG. 4B

EP 4 507 221 A1

Base frame encapsulation format

| /S/ | /D/ | /D/ | /D/ | /D.../D/ | /T/ |

| SH = 10 | BP1=D0 to D6 | SH = 01 | BP2=D0 to D7 | SH = 01 | BP3=D0 to D7 | ... | SH = 10 | BT=0x87/99/AA/B4/CC/D2/E1/FF | BPk=D0 to D6 |

B'1'= 0x78

BP1=D0 to D6 (optional) | BP2=D0 to D7 | BP3=D0 to D7 | BP4 to BPk-1 | BPk=D0 to D6

**Base frame payload (payload) field, including: overhead and lower-order slot payload**

Lower-order slot OH | Lower-order slot payload 1 | Lower-order slot payload 2 | Lower-order slot payload 3 | Lower-order slot payload 4 | Lower-order slot payload 5 | Lower-order slot payload 6 | ... | Lower-order slot payload (M/X)

Base frame sequence number (optional) | Lower-order-path slot allocation table (optional) | ... | Management channel message (optional) | Overhead check (optional)

Sub-client #1 | Sub-client #2 | ... | Sub-client #z

Lower-order slot payload loads data of a corresponding path based on a slot

FIG. 5

| 66b | 66b | 66b | 66b | 66b | 66b | 66b | 66b | 66b | 66b | ... | 66b | 66b | 66b | 66b |

Cycle (multiframe) 1
including X base frames

Cycle (multiframe) 2
including X base frames

...

| Base frame 1 | /I/ | Base frame 2 | /I/ | ... | Base frame X | /I/ | Base frame 1 | /I/ | Base frame 2 | /I/ | /I/ | ... | Base frame X | /I/ | ... |

Base frame 1     Base frame 2     ...     Base frame X

| /S/ | Lower-order OH-1 | Include (M/X) lower-order slots | /T/ | /I/ | /S/ | Lower-order OH-2 | Include (M/X) lower-order slots | /T/ | /I/ | /I/ | ... | /S/ | Lower-order OH-X | Include (M/X) lower-order slots | /T/ | /I/ |

| Lower-order OH 1 | Lower-order OH 2 | ... | Lower-order OH X |

| Lower-order slot 1 | Lower-order slot 2 | ... | Lower-order slot (M/X) |

| Lower-order slot (M/X+1) | Lower-order slot (M/X+2) | ... | Lower-order slot (2M/X) |

...

| Lower-order slot (M−X+1) | Lower-order slot (M−X+2) | ... | Lower-order slot M |

X base frame overheads form one multiframe overhead

Each cycle (multiframe) includes a total of M lower-order slots, which are evenly distributed in X base frames, and each base frame includes (M/X) lower-order slots

FIG. 6

EP 4 507 221 A1

FIG. 7

Intermediate node

| FGU slot sending | FGU slot crossing | FGU slot receiving |

Source node

| FGU slot sending | FGU slot mapping | Insert a 1DM block and record H1 | Service container encapsulation | Service slicing |

Service receiving

TO FIG. 8B

The source node detects a blind area

FIG. 8A

Sink node

Service
sending

← Service
reassembly ← Delay
compensation
buffer ← Service
container
decapsulation ← Extract the
1DM block
and H1, and
record H3 ← FGU slot
demapping ← FGU slot
receiving ← CONT.
FROM
FIG. 8A

The sink node detects a blind area → H3  H1

One-way delay calculation: One_way_Delay=H3–H1

FIG. 8B

| First communication apparatus | Second communication apparatus |
|---|---|

901. Determine a transmission delay of a fine granularity service in the first communication apparatus

902. Send a first transmission delay to the second communication apparatus, where the first transmission delay indicates the transmission delay of the fine granularity service in the first communication apparatus

903. Obtain a transmission delay of the fine granularity service in a sink node

904. Determine a delay compensation value based on an end-to-end target delay, the first transmission delay, and the transmission delay of the fine granularity service in the sink node

905. Perform delay compensation on the fine granularity service based on the delay compensation value

FIG. 9

1001. A communication apparatus determines a transmission delay of a fine granularity service in the communication apparatus

1002. The communication apparatus performs delay compensation on the fine granularity service based on a target delay of a node and the transmission delay of the fine granularity service in the communication apparatus

FIG. 10

Service bit flow

Mapped to an egress slot location after being processed

Egress slot location

Specific bit

Specific bit

FIG. 11

Ingress slot location

Cross-mapping from the ingress slot location to an egress slot location

Egress slot location

Specific bit

Specific bit

FIG. 12

Ingress slot location

Processed to obtain a service bit flow

Service bit flow

Specific bit

Specific bit

FIG. 13

Second transmission delay + First transmission delay of the intermediate node P–1

Source node

Intermediate node P–2

Intermediate node P–1

Intermediate node P

Sink node

First transmission delay

Second transmission delay (First transmission delay of P–1 intermediate nodes)

FIG. 14

Network
management device

First transmission
delay

Transmission
delay of the sink
node

First transmission
delay

First transmission
delay

Source node

...

Intermediate
node n–1

Intermediate
node n

Sink node

First transmission
delay

First transmission
delay

First transmission
delay

Transmission
delay of a sink
node

FIG. 15

Sink node

TO FIG. 16B

FGU slot receiving → FGU slot demapping → Service container decapsulation → Delay compensation buffer → Service reassembly

Send the fine granularity service (service bit flow)

t5

t6

$\Delta$

Delay calculated by the sink node: Node_delay3=t6–t5

Calculate a delay compensation value

End-to-end target delay

TO FIG. 16B

Receive a delay collection message → Extract the transmission delay of the source node and the transmission delay of the intermediate node →

FIG. 16A

Receive a fine granularity service (service bit flow)

**Source node**

Service slicing → Service container encapsulation → FGU slot mapping → FGU slot sending

t1 → → → t2

Delay calculated by the source node: Node_delay1=t2−t1

Generate a delay collection message → Update the delay collection message: record the transmission delay of the source node → Send a delay collection message

**Intermediate node**

FGU slot receiving → FGU slot crossing → FGU slot sending

t3 → → t4

Delay calculated by the intermediate node: Node_delay2=t4−t3

Receive a delay collection message → Update the delay collection message: record the transmission delay of the intermediate node → Send a delay collection message

CONT. FROM FIG. 16A

CONT. FROM FIG. 16A

Second direction

FIG. 16B

EP 4 507 221 A1

FIG. 17A

EP 4 507 221 A1

Network management device

Collect a transmission delay of each node

CONT.
FROM
FIG. 17A

Node_delay1                    Node_delay2                    Node_delay3

Receive a fine granularity service (service bit flow)

**Source node**

Service slicing → Service container encapsulation → FGU slot mapping → FGU slot sending

t1                                                                    t2

The source node calculates a delay and reports the delay to a network management system:
Node_delay1=t2–t1

**Intermediate node**

FGU slot receiving → FGU slot crossing → FGU slot sending

t3                                                                    t4

The intermediate node calculates a delay and reports the delay to the network management system:
Node_delay2=t4–t3

FIG. 17B

Source node      Intermediate node x      Sink node

...        ...

| First receiving moment (t1) | Second sending moment (t2) | Third receiving moment (t3) | Fourth sending moment (t4) | Fifth receiving moment (t5) | Sixth sending moment (t6) |

FIG. 18

TO
FIG. 19B

Sink node

Send the fine
granularity
service
(service bit
flow)

FGU slot
receiving

FGU slot
demapping

Service
container
decapsulation

Delay
compensation
buffer

Service
reassembly

t5

t6

Δ3

Transmission delay of the sink node:
Node_delay3=t6–t5

Calculate a
delay
compensation
value

Target
delay of the
sink node

FIG. 19A

FIG. 19B

Receive a fine
granularity
service
(service bit
flow)

Source node

| Service slicing | Service container encapsulation | FGU slot mapping | Node delay compensation | FGU slot sending |

CONT.
FROM
FIG. 19B

t1

t2

Δ1

Target
delay of a
source
node

Transmission delay of the source node:
Node_delay1=t2−t1

Calculate a
delay
compensation
value

FIG. 19C

Sink node

```
TO              FGU slot      FGU slot      Service        Delay          Service
FIG. 20B  ─►    receiving  ─► demapping ─►  container  ─►  compensation ─► reassembly ─►
                                            decapsulation  buffer
```

Send the fine
granularity
service
(service bit
flow)

t5     t6     Δ3

Transmission delay of the sink node:
Node_delay3=t6–t5

Calculate a
delay
compensation
value

Target
delay of
the sink
node

FIG. 20A

Intermediate node

FGU slot receiving → FGU slot crossing → FGU slot sending

Multiframe indicator of an ingress slot

Slot identifier of the ingress slot

Slot identifier of an egress slot and a multiframe indicator

Obtain the slot identifier of the ingress slot through calculation based on a target delay, the slot identifier of the egress slot, a phase corresponding to the multiframe indicator of the ingress slot, a phase corresponding to the multiframe indicator of the egress slot, a multiframe period, and a slot interval

TO FIG. 20C

CONT. FROM FIG. 20A

FIG. 20B

EP 4 507 221 A1

Receive a fine granularity service (service bit flow) →

Source node

| Service slicing | → | Service container encapsulation | → | FGU slot mapping | → | Node delay compensation | → | FGU slot sending | → CONT. FROM FIG. 20B |

Service slicing → t1

FGU slot mapping → t2

Node delay compensation ← Δ1

Target delay of the source node →

Transmission delay of the source node:
Node_delay1=t2–t1

→ Calculate a delay compensation value ←

FIG. 20C

Sink node

TO
FIG. 21B

| FGU slot receiving | FGU slot demapping | Service container decapsulation | Delay compensation buffer | Service reassembly |

Send the fine granularity service (service bit flow)

t5

t6

Δ3

Transmission delay of the sink node: Node_delay3=t6–t5

Calculate a delay compensation value

Target delay of the sink node

FIG. 21A

EP 4 507 221 A1

Intermediate node

TO
FIG. 21C

FGU slot
receiving

FGU slot
crossing

FGU slot
sending

CONT.
FROM
FIG. 21A

Slot identifier
and a multiframe
indicator of an
ingress slot

Multiframe
indicator of
an egress slot

Slot
identifier
of an
egress slot

Obtain the slot identifier of the egress slot through
calculation based on a target delay, the slot identifier
of the ingress slot, a phase corresponding to the
multiframe indicator of the ingress slot, a phase
corresponding to the multiframe indicator of the
egress slot, a multiframe period, and a slot interval

FIG. 21B

Receive a fine granularity service (service bit flow) →

**Source node**

Service slicing → Service container encapsulation → FGU slot mapping → Node delay compensation → FGU slot sending → CONT. FROM FIG. 21B

t1 ↓

t2 ↓

Δ1 ↑

Target delay of the source node

Transmission delay of the source node:
Node_delay1=t2–t1 → Calculate a delay compensation value ←

FIG. 21C

FIG. 22

Communication apparatus 2300

2301

2302

Transceiver module

Processing module

FIG. 23

Communication apparatus 2400

2401

2402

Transceiver module

Processing module

FIG. 24

2500

2502

2501

Network
interface

CPU

Memory 2504

Obtaining unit 25041

2505

Programming
interface

Processing unit 25042

2503

FIG. 25

2600

Communication apparatus

Main control
board 2626

Central processing
unit 2611

Memory 2612

Interface board 2630

Central
processing
unit 2631

Forwarding
entry
memory
2634

Physical
interface
card
2633

Network
processor
2632

Switching
board
2620

Interface board 2640

Central
processing
unit 2641

Forwarding
entry
memory
2644

Physical
interface
card
2643

Network
processor
2642

FIG. 26

2700

2703

2702

Network system

Controller

Second communication apparatus

2701

First communication apparatus

FIG. 27

Network system

Controller

2804

2801

2802

2803

2800

First communication apparatus

Second communication apparatus

Third communication apparatus

FIG. 28

<div align="center">

**INTERNATIONAL SEARCH REPORT**

</div>

| | International application No. |
|---|---|
| | **PCT/CN2023/088463** |

**A. CLASSIFICATION OF SUBJECT MATTER**

H04J 3/16(2006.01)i

According to International Patent Classification (IPC) or to both national classification and IPC

**B. FIELDS SEARCHED**

Minimum documentation searched (classification system followed by classification symbols)

IPC:H04J H04L H04W

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 时延, 延时, 补偿, 小颗粒业务, 切片网络, 链路, 路径, 传输, 节点, delay, latency, compensation, fine granularity service, small particle service, FGU, SPN, slice, slicing, link, transmission, node

**C. DOCUMENTS CONSIDERED TO BE RELEVANT**

| Category* | Citation of document, with indication, where appropriate, of the relevant passages | Relevant to claim No. |
|---|---|---|
| X | CN 110858811 A (HUAWEI TECHNOLOGIES CO., LTD.) 03 March 2020 (2020-03-03) description, paragraphs [0004]-[0115] | 1-2, 5, 10, 19-20, 28-29, 31-32, 35-37 |
| A | CN 102447980 A (ZTE CORP.) 09 May 2012 (2012-05-09) entire document | 1-37 |
| A | CN 103152118 A (ZTE CORP.) 12 June 2013 (2013-06-12) entire document | 1-37 |
| A | CN 113630796 A (HUAWEI TECHNOLOGIES CO., LTD.) 09 November 2021 (2021-11-09) entire document | 1-37 |
| A | WO 2016000423 A1 (ZTE CORP.) 07 January 2016 (2016-01-07) entire document | 1-37 |
| A | ERICSSON. "Short timestamp for user plane latency control" *3GPP TSG-RAN WG2 Meeting # 106, R2-1906996*, 17 May 2019 (2019-05-17), entire document | 1-37 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 June 2023** | **21 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/088463**

| Patent document cited in search report | | | Publication date (day/month/year) | Patent family member(s) | | | Publication date (day/month/year) |
|---|---|---|---|---|---|---|---|
| CN | 110858811 | A | 03 March 2020 | US | 2021152451 | A1 | 20 May 2021 |
| | | | | WO | 2020038191 | A1 | 27 February 2020 |
| | | | | EP | 3809636 | A1 | 21 April 2021 |
| CN | 102447980 | A | 09 May 2012 | EP | 2624506 | A1 | 07 August 2013 |
| | | | | WO | 2012041251 | A1 | 05 April 2012 |
| | | | | US | 2013212268 | A1 | 15 August 2013 |
| CN | 103152118 | A | 12 June 2013 | | None | | |
| CN | 113630796 | A | 09 November 2021 | EP | 3806524 | A1 | 14 April 2021 |
| | | | | US | 2021119896 | A1 | 22 April 2021 |
| | | | | KR | 20220148316 | A | 04 November 2022 |
| | | | | BR | 112020026699 | A2 | 30 March 2021 |
| | | | | JP | 2021532641 | A | 25 November 2021 |
| | | | | AU | 2019323009 | A1 | 14 January 2021 |
| | | | | KR | 20210010629 | A | 27 January 2021 |
| | | | | JP | 2022191337 | A | 27 December 2022 |
| | | | | WO | 2020034922 | A1 | 20 February 2020 |
| | | | | CN | 110831033 | A | 21 February 2020 |
| | | | | IN | 202017055070 | A | 05 March 2021 |
| | | | | VN | 77870 | A | 25 May 2021 |
| | | | | RU | 2021103065 | A | 09 August 2022 |
| WO | 2016000423 | A1 | 07 January 2016 | RU | 2648285 | C1 | 23 March 2018 |
| | | | | MY | 189564 | A | 16 February 2022 |
| | | | | CN | 105323030 | A | 10 February 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210435589